# EUROPEAN PATENT SPECIFICATION

(11) **EP 3 726 636 B1**
(45) Date of publication and mention of the grant of the patent: **26.06.2024**
(21) Application number: 18889822.5
(22) Date of filing: 10.12.2018
(51) Int. Cl.: H01M 10/0567, H01M 4/525, H01M 10/0525, H01M 4/505, H01M 4/38, H01M 10/0568, H01M 10/0569

(54) **ELECTROLYTE SOLUTION FOR NONAQUEOUS ELECTROLYTE BATTERIES AND NONAQUEOUS ELECTROLYTE BATTERY USING SAME**
ELEKTROLYTLÖSUNG FÜR BATTERIEN MIT WASSERFREIEM ELEKTROLYT SOWIE BATTERIEN MIT WASSERFREIEM ELEKTROLYT MIT VERWENDUNG DAVON
SOLUTION ÉLECTROLYTIQUE POUR BATTERIES À ÉLECTROLYTE NON AQUEUX, ET BATTERIE À ÉLECTROLYTE NON AQUEUX L'UTILISANT

(30) Priority: 12.12.2017 JP 2017237455; 26.11.2018 JP 2018219846; 26.11.2018 JP 2018219853
(43) Date of publication of application: 21.10.2020
(73) Proprietor: Central Glass Company, Limited, Ube-shi, Yamaguchi 755-0001 (JP)
(72) Inventor: TAKAHASHI, Mikihiro, Ube-shi, Yamaguchi 755-0001 (JP); MORINAKA, Takayoshi, Ube-shi, Yamaguchi 755-0001 (JP); SHINMEN, Masutaka, Ube-shi, Yamaguchi 755-0001 (JP); KAWABATA, Wataru, Ube-shi, Yamaguchi 755-0001 (JP); KUBO, Makoto, Ube-shi, Yamaguchi 755-0001 (JP); MORI, Katsumasa, Ube-shi, Yamaguchi 755-0001 (JP); ESAKI, Ryota, Ube-shi, Yamaguchi 755-0001 (JP); TANIGAWA, Takahiro, Ube-shi, Yamaguchi 755-0001 (JP)
(74) Representative: Manitz Finsterwald Patent- und Rechtsanwaltspartnerschaft mbB
(86) International application number: PCT/JP2018/045365
(87) International publication number: WO 2019/117101

(56) References cited:
- WO-A1-2005/104289
- WO-A1-2017/043576
- WO-A1-2017/138453
- WO-A1-2018/016195
- JP-A- 2002 141 110
- JP-A- 2012 230 897
- JP-A- 2016 035 820
- JP-A- 2016 066 481
- JP-A- 2016 110 900
- JP-A- 2016 157 679
- US-A1- 2008 153 005
- US-A1- 2017 271 715

## Description

### Field of the Invention

The present invention relates to an electrolyte solution for a nonaqueous electrolyte battery and a nonaqueous electrolyte battery using the electrolyte solution.

### Background Art

In recent years, much attention has been focused on batteries as electrochemical devices for use in power storage systems of small, high-energy-density applications such as information processing and communication equipment, typified by personal computers, video cameras, digital cameras, mobile phones and smartphones, and for use in power storage systems of large power applications such as electric vehicles, hybrid vehicles, auxiliary power sources of fuel cell vehicles, power storage facilities and the like. Nonaqueous electrolyte secondary batteries, including lithium ion batteries each capable of achieving a high energy density, high voltage and high capacity, are considered as candidates for use in these power storage systems. The researches and developments of nonaqueous electrolyte secondary batteries are being actively pursued at the present time. In particular, the optimization of various battery constituent elements such as positive and negative electrode active materials is being considered as means for improving the durability and battery characteristics of nonaqueous electrolyte batteries.

Electrolyte solutions for lithium nonaqueous electrolyte batteries (hereinafter also referred to as "nonaqueous electrolyte solutions") in which fluorine-containing electrolytes such as lithium hexafluorophosphate (hereinafter referred to as "LiPF₆"), lihium bis(fluorosulfonyl)imide (hereinafter referred to as "LiFSI") and lithium tetrafluoroborate (hereinafter referred to as "LiBF₄") as solutes are dissolved in solvents such as cyclic carbonate, chain carbonate and ester are suitable to achieve a high battery voltage and capacity, and thus are widely used. However, the lithium nonaqueous electrolyte batteries with such nonaqueous electrolyte solutions do not always achieve satisfactory cycle characteristics, output characteristics and other battery characteristics.

In the case of a lithium ion secondary battery, for example, when a lithium cation is inserted in the negative electrode during initial charging, a reaction occurs between the negative electrode and the lithium cation or between the negative electrode and the electrolyte solvent. As a result of the reaction, a coating film containing lithium oxide, lithium carbonate or lithium alkylcarbonate as a predominant component is formed on a surface of the negative electrode. The thus-formed coating film on the electrode surface is called a "Solid Electrolyte Interface (SEI)" whose properties have a large influence on battery characteristics to suppress further reduction decomposition of the solvent, prevent a deterioration of battery characteristics and the like. Similarly, a coating film of decomposition product is formed on a surface of the positive electrode and plays an important role to suppress oxidation decomposition of the solvent, prevent gas generation inside the battery and the like.

In order to improve battery characteristics such as durability e.g. cycle characteristics, high-temperature storage stability etc. and input/output characteristics, it is important to form a stable SEI with a high ion conductivity and a low electron conductivity. Various attempts have been made to positively form a good SEI with the addition of a small amount (in general, 0.001 mass% to 10 mass%) of a compound called an additive into an electrolyte solution.

For example, Patent Document 1 discloses the use of vinylene carbonate (hereinafter referred to as "VC") as an additive for forming an effective SEI to improve the durability of the battery. There are known additives other than VC. To obtain a battery with good cycle characteristics and low-temperature characteristics, Patent Documents 2 and 3 disclose the use of a silicon compound having an unsaturated bond; and Patent Document 4 discloses the use of a silicon compound having both of an unsaturated bond and a halogen. Further, Patent Document 5 discloses the use of trialkoxyvinylsilane so as to, in a lithium secondary battery of 4.2 V or higher and lower than 4.35 V, suppress the occurrence of battery swelling. Patent Document 6 discloses the combined use of an unsaturated bond-containing silicon compound and a fluorine-containing compound (i.e. a fluorophosphate salt having a specific structure, or an imide salt having a specific fluorophosphoryl structure and/or specific fluorosulfonyl structure) so as to obtain a battery with good output characteristic even under low-temperature conditions of -30°C or lower and good cycle characteristics under high-temperature conditions of 50°C or higher.

Furthermore, Patent Document 7 discloses an electrolyte solution for a nonaqueous electrolyte battery, capable of achieving improvement of high-storage characteristics at 70°C or higher and reduction of gas generation during high-temperature storage in a well-balanced manner, wherein the electrolyte solution includes the following components: (I) a carbon-carbon unsaturated bond-containing silane compound; (II) at least one kind selected from a cyclic sulfonate compound and a cyclic sulfate compound; (III) a nonaqueous organic solvent; and (IV) a solute. This patent document further discloses that: any of compounds of the following general formulas (II-1a) to (II-1f) is used as the component (II); and preferable examples of the component (II) include 1,3-propanesultone, 1,3-propenesultone, 1,3,2-dioxathiolane, 2,2-dioxide and methylene methane disulfonate.

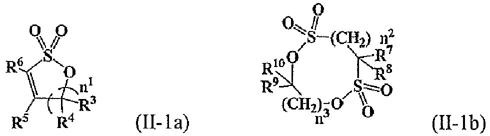

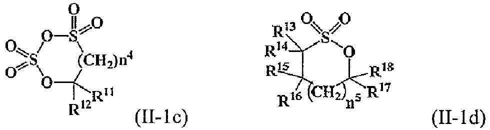

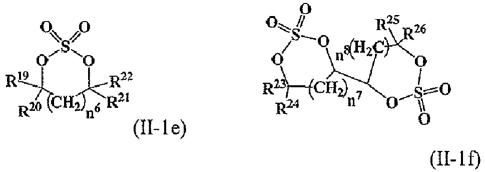

Patent Document 8 discloses the addition of a sulfonate compound in which a cyclic sulfone group is bonded to a sulfonate group as an additive to an electrolyte solution in order to improve the high-temperature characteristics and life characteristics (cycle characteristics) of the lithium battery.

In conjunction with the studies for improving the battery characteristics such as cycle characteristics and output characteristics, the studies for increasing the energy density of the battery itself are being increasingly conducted. There are broadly two methods of increasing the energy density of the battery. One method of increasing the energy density of the battery is to increase the charge voltage of the battery. By this method, the average discharge voltage of the battery becomes high so that the battery attains a high discharge capacity. With such increase in voltage, however, the solvent undergoes oxidation decomposition to cause remarkable battery swelling by gas generation. Hence, high-voltage batteries with a charge voltage of 4.5 V or higher are not widely in practical use under the present circumstance.

The other method of increasing the energy density of the battery is to use nickel oxide in the positive electrode. For example, Patent Document 9 discloses a lithium ion secondary battery with a positive electrode using LiNiO₂.

In view of the fact that nickel oxide has a high theoretical capacity but shows a low thermal stability during charging, cobalt oxide, manganese oxide, iron phosphate and the like have initially been mainly used as positive electrode active materials. However, the demand for improvement in the energy density of the battery is becoming stricter. Further, there is a concern in the reserve of cobalt as natural resource. For these reasons, a ternary positive electrode in which nickel cobalt and manganese are combined a ratio of 1:1:1 has been coming into use. For example, Patent Document 11 discloses a positive electrode having a part of nickel replaced with manganese, cobalt etc. For the purpose of further reducing the use of cobalt in such a ternary positive electrode and increasing the capacity of the positive electrode, the developments of batteries with positive electrodes of increased nickel content are being very actively pursued. As the nickel-rich positive electrode of increased nickel content, there are known those having a nickel-cobalt-manganese ratio of "3:1:1" or "8:1:1", those obtained by replacing manganese with aluminum and having a nickel-cobalt-aluminum ratio of "8.5:1:0.5", "8.8:0.9:0.3" or "9.0:0.5:0.5" and the like.

Herein, one example of production of a concentrated LiPF₆ solution usable as an electrolyte solution for a nonaqueous electrolyte battery is disclosed in Patent Document 11. Further prior art electrolyte solutions for a nonaqueous electrolyte battery are disclosed in the Patent Document 14.

### Prior Art Documents

### Patent Documents

Patent Document 1: Japanese Laid-Open Patent Publication No. H8-045545
Patent Document 2: Japanese Patent No. 3497812
Patent Document 3: Japanese Patent No. 5072379
Patent Document 4: Japanese Laid-Open Patent Publication No. 2004-039510
Patent Document 5: Japanese Patent No. 6051537
Patent Document 6: Japanese Laid-Open Patent Publication No. 2016-157679
Patent Document 7: International Publication No. WO 2017/138452
Patent Document 8: U.S. Patent Application Publication No. 2017/0271715
Patent Document 9: Japanese Laid-Open Patent Publication No. H6-096769
Patent Document 10: International Publication No. WO 2010/113583
Patent Document 11: Japanese Patent No. 5845955
Patent Document 12: Japanese Patent No. 5668684
Patent Document 13: Japanese Laid-Open Patent Publication No. H10-139784
Patent Document 14: WO 2017 / 138 453 A1

### Non-Patent Documents

Non-Patent Document 1: Z. Anorg. Chem., 2006, 632, P1356 (Rovnanik Prvel, "Syntheses of Phosphoryl Chloro- and Bromofluorodies and Crystal Structures of POFCl2 and POF2Cl, WILEY-VCH Verlag CmbH & Co. KGaA, Weinheim")
Non-Patent Document 2: Journal of Organic Chemistry (1957), 22, 1200-2
Non-Patent Document 3: Chemicke Zvesti (1954), 18, 21-7

### Summary of the Invention

### Problems to be Solved by the Invention

An electrolyte solution including an unsaturated bond-containing silicon compound is certainly good in terms of the durability (such as cycle characteristics and high-temperature storage characteristics). There is however a tendency that, when such an electrolyte solution is used in a battery with a Ni-rich positive electrode (more specifically, in which the amount of nickel contained relative to a metal content of the positive electrode active material is 30 to 100 mass%), Ni is eluted from the positive electrode into the electrolyte solution during repeated charging and discharging cycles. The eluted Ni is deposited on a negative electrode of the battery, which can become a cause of short-circuit in the battery and pose a very dangerous situation. Thus, a measure to prevent the elution of Ni from the positive electrode is strongly demanded.

The present inventors have found that, although an electrolyte solution containing a durability improver as described in Patent Document 7 tends to, when used in a lithium battery, achieve improvement of high-temperature storage characteristics of the lithium battery and reduction of gas generation during high-temperature storage in a well-balanced manner but has the problem that 1,3-propanesultone, 1,3-propenesultone, 1,3,2-dioxathiolane, 2,2-dioxide, methylene methane disulfonate and derivatives thereof used as the durability improver undergo decomposition during high-temperature storage at 50°C or higher in the state of the electrolyte. A solution to this problem is also strongly demanded.

In view of the foregoing, it is an object of the present invention to provide an electrolyte solution for a nonaqueous electrolyte battery containing an unsaturated bond-containing silicon compound and capable of reducing the elution of Ni from a Ni-rich positive electrode of the battery into the electrolyte solution and a nonaqueous electrolyte battery using such an electrolyte solution along with a Ni-rich positive electrode.

It is also an object of the present invention to provide an electrolyte solution for a nonaqueous electrolyte battery having improved high-temperature storage stability (high-temperature storage characteristics) and a nonaqueous electrolyte battery using such an electrolyte solution.

### Means for Solving the Problems

According to the present invention, there is provided an electrolyte solution for a nonaqueous electrolyte battery (hereinafter also simply referred to as "nonaqueous electrolyte solution" or "electrolyte solution"), the nonaqueous electrolyte battery comprising a positive electrode that includes one or more kinds of organic oxides containing at least nickel as a positive electrode active material, wherein the amount of the nickel contained relative to a metal content of the positive electrode active material is 30 to 100 mass%, the electrolyte solution comprising the following components:
(I) a nonaqueous organic solvent;
(II) an ionic salt as a solute;
(III) at least one kind selected from the group consisting of compounds represented by the general formula (1) (hereinafter also referred to as "silicon compound (1)"); and
(IV) a lithium fluorosulfonate (hereinafter also referred to as "LiSO₃F"),

wherein the concentration of the component (III) is 0.01 to 2.00 mass% with respect to 100 mass% of the total mass of the components (I) to (IV); and
wherein the concentration of the component (IV) is 0.01 to 5.00 mass% with respect to 100 mass% of the total mass of the components (I) to (IV).

   Si(R¹)ₐ(R²)₄₋ₐ (1)
In the general formula (1), R¹ are each independently a group having a carbon-carbon unsaturated bond; and R² are each independently a group selected from a fluorine atom, an alkyl group of 1 to 10 carbon atoms, an alkoxy group of 1 to 10 carbon atoms, an allyl group of 3 to 10 carbon atoms, an alkynyl group of 2 to 10 carbon atoms, an aryl group of 6 to 15 carbon atoms, an allyloxy group of 3 to 10 carbon atoms, an alkynyloxy group of 2 to 10 carbon atoms and an aryloxy group of 6 to 15 carbon atoms, each of which may have a fluorine atom and/or an oxygen atom. Herein, the expression "have a fluorine atom" means substituting a hydrogen atom of the above-specified group with a fluorine atom; and the expression "have an oxygen atom" means presence of "-O-" (ether bond) between carbon atoms of the above-specified group. Further, a is a value of 2 to 4.

In the first aspect of the present invention, it is important that the electrolyte solution contains the component (III) and further contains the component (IV) at the above predetermined concentration. The addition of the component (IV) to the electrolyte solution containing the component (III) leads to, when the electrolyte solution is applied to the battery with the Ni-rich positive electrode, a reduction of Ni elution from the Ni-rich positive electrode into the electrolyte solution.

According to the present invention, as the component (IV), a lithium fluorosulfonate is used for better balance between the capacity retention rate of the battery after cycles and the suppression of Ni elution.

In the general formula (1), R¹ is preferably ethenyl.

As R², the alkyl group is preferably selected from methyl, ethyl, propyl, isopropyl, butyl, isobutyl, tert-butyl, pentyl, isopentyl, sec-pentyl, 3-pentyl and tert-pentyl; the alkoxy group is preferably selected from methoxy, ethoxy, butoxy, tert-butoxy, propoxy, isopropoxy, 2,2,2-trifluoroethoxy, 2,2,3,3-tetrafluoropropoxy, 1,1,1-trifluoroisopropoxy and 1,1,1,3,3,3-hexafluoroisopropoxy; the allyl group is preferably 2-propenyl; the alkynyl group is preferably ethynyl; the aryl group is preferably selected from phenyl, methylphenyl, tert-butylphenyl and tert-amylphenyl (in each of which a hydrogen atom of the aromatic ring may be substituted with fluorine); the allyloxy group is preferably 2-propenyloxy; the alkynyloxy group is preferably propargyloxy; and the aryloxy group is preferably selected from phenoxy, methylphenoxy, tert-butylphenoxy and tert-amylphenoxy (in each of which a hydrogen atom of the aromatic ring may be substituted with fluorine).

Further, *a* in the general formula (1) is preferably 3 or 4 in terms of the great durability improvement.

The component (III) is preferably at least one kind selected from the group consisting of the following compounds (1-1) to (1-28). 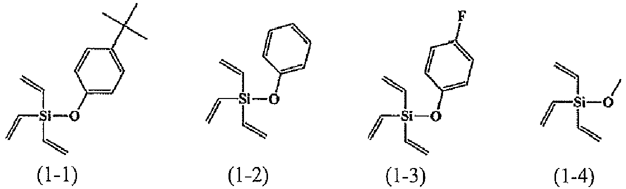 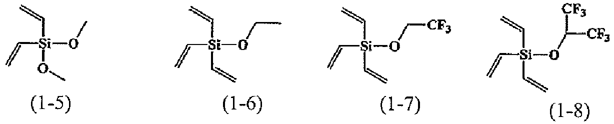 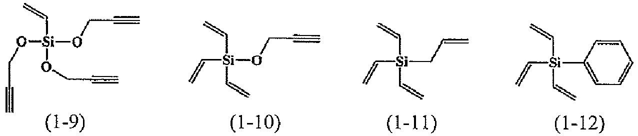 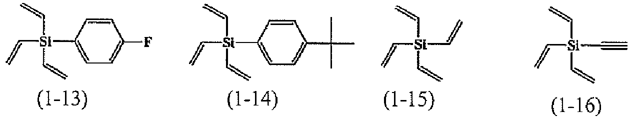 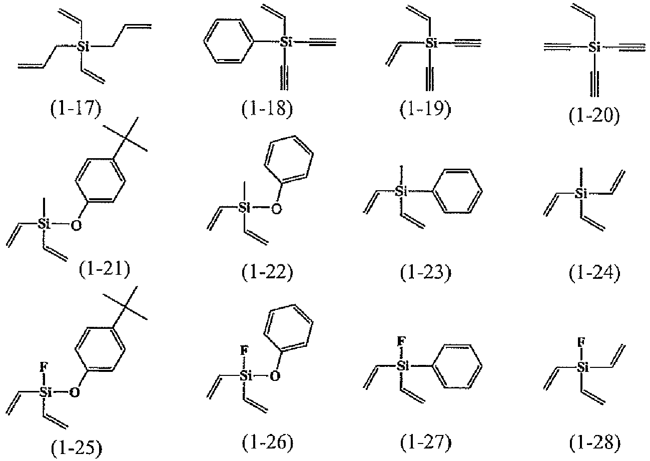 The component (III) is more preferably at least one kind selected from the group consisting of the compounds (1-1), (1-2), (1-3), (1-4), (1-6), (1-7), (1-8), (1-10), (1-12), (1-15), (1-22), (1-23), (1-24), (1-25), (1-26), (1-27) and (1-28) in terms of the ease of synthesis and stability of the compound. Among others, it is particularly preferable to use at least one kind selected from the group consisting of the compounds (1-1), (1-2), (1-4), (1-10), (1-12), (1-15), (1-22), (1-24), (1-25) and (1-28) in terms of the greater durability improvement. It is more particularly preferable to use at least one kind selected from the group consisting of the compounds (1-1), (1-2), (1-12) and (1-15).

It is feasible to form the silicon compound (1) as the component (III) by various methods. For example, the silicon compound (1) can be formed according to a method of forming a carbon-carbon unsaturated bond-containing silicon compound by reacting a silicon compound having a silanol moiety or a hydrolyzable group with an organometallic reagent having a carbon-carbon unsaturated bond and thereby replacing an OH group of the silicon compound or the hydrolyzable group of the silicon compound with the carbon-carbon unsaturated bond as disclosed in Patent Document 13,

### Non-Patent Documents 2 and 3 etc.

Not according to the present invention, also disclosed an electrolyte solution for a nonaqueous electrolyte battery (hereinafter also simply referred to as "nonaqueous electrolyte solution" or "electrolyte solution"), comprising the following components:
(I) a nonaqueous organic solvent;
(II) an ionic salt as a solute;
(III) at least one kind of additive selected from the group consisting of compounds represented by the general formula (1) (hereinafter also referred to as "silicon compound (1)"); and
(IV) at least one kind of additive selected from the group consisting of compounds represented by the general formula (6) (hereinafter also referred to as "cyclic sulfur compound (6)").

   Si(R¹)ₐ(R²)₄₋ₐ (1)
In the general formula (1), R¹, R² and *a* have the same meanings as above. 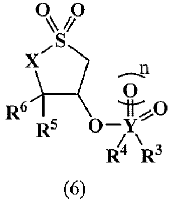 In the general formula (6), X is an oxygen atom, or a methylene group in which a hydrogen atom may be substituted with a halogen atom; Y is a phosphorus atom or a sulfur atom; *n* is 0 in the case where Y is phosphorus and is 1 in the case where Y is sulfur; R³ and R⁴ are each independently a halogen atom, an alkyl group of 1 to 20 carbon atoms in which a hydrogen atom may be substituted with a halogen atom, a cycloalkyl group of 5 to 20 carbon atoms in which a hydrogen atom may be substituted with a halogen atom, an alkenyl group of 2 to 20 carbon atoms in which a hydrogen atom may be substituted with a halogen atom, an alkynyl group of 2 to 20 carbon atoms in which a hydrogen atom may be substituted with a halogen atom, an aryl group of 6 to 40 carbon atoms in which a hydrogen atom may be substituted with a halogen atom, a heteroaryl group of 2 to 40 carbon atoms in which a hydrogen atom may be substituted with a halogen atom, an alkoxy group of 1 to 20 carbon atoms in which a hydrogen atom may be substituted with a halogen atom, a cycloalkoxy group of 5 to 20 carbon atoms in which a hydrogen atom may be substituted with a halogen atom, an alkenyloxy group of 2 to 20 carbon atoms in which a hydrogen atom may be substituted with a halogen atom, an alkynyloxy group of 2 to 20 carbon atoms in which a hydrogen atom may be substituted with a halogen atom, an aryloxy group of 6 to 40 carbon atoms in which a hydrogen atom may be substituted with a halogen atom, or a heteroaryloxy group of 2 to 40 carbon atoms in which a hydrogen atom may be substituted with a halogen atom; in the case where Y is sulfur, R⁴ does not exist; R⁵ and R⁶ are each independently a hydrogen atom, a halogen atom, an alkyl group of 1 to 20 carbon atoms in which a hydrogen atom may be substituted with a halogen atom, an alkenyl group of 2 to 20 carbon atoms in which a hydrogen atom may be substituted with a halogen atom, an alkynyl group of 2 to 20 carbon atoms in which a hydrogen atom may be substituted with a halogen atom, an alkoxy group of 1 to 20 carbon atoms in which a hydrogen atom may be substituted with a halogen atom, a cycloalkyl group of 5 to 20 carbon atoms in which a hydrogen atom may be substituted with a halogen atom, an aryl group of 6 to 40 carbon atoms in which a hydrogen atom may be substituted with a halogen atom, or a heteroaryl group of 2 to 40 carbon atoms in which a hydrogen atom may be substituted with a halogen atom.

In the general formula (1), R¹ is preferably ethenyl.

As R², the alkyl group is preferably selected from methyl, ethyl, propyl, isopropyl, butyl, isobutyl, tert-butyl, pentyl, isopentyl, sec-pentyl, 3-pentyl and tert-pentyl; the alkoxy group is preferably selected from methoxy, ethoxy, butoxy, tert-butoxy, propoxy, isopropoxy, 2,2,2-trifluoroethoxy, 2,2,3,3-tetrafluoropropoxy, 1,1,1-trifluoroisopropoxy and 1,1,1,3,3,3-hexafluoroisopropoxy; the allyl group is preferably 2-propenyl; the alkynyl group is preferably ethynyl; the aryl group is preferably selected from phenyl, methylphenyl, tert-butylphenyl and tert-amylphenyl (in each of which a hydrogen atom of the aromatic ring may be substituted with fluorine); the allyloxy group is preferably 2-propenyloxy; the alkynyloxy group is preferably propargyloxy; and the aryloxy group is preferably selected from phenoxy, methylphenoxy, tert-butylphenoxy and tert-amylphenoxy (in each of which a hydrogen atom of the aromatic ring may be substituted with fluorine).

Further, *a* in the general formula (1) is preferably 3 or 4 in terms of the higher recovery capacity of the battery after high-temperature storage test.

The component (III) is preferably at least one kind selected from the group consisting of the above compounds (1-1) to (1-28). The component (III) is more preferably at least one kind selected from the group consisting of the compounds (1-1), (1-2), (1-3), (1-4), (1-6), (1-7), (1-9), (1-10), (1-12), (1-15), (1-22), (1-23), (1-24), (1-25), (1-26), (1-27) and (1-28) in terms of the ease of synthesis and stability of the compound. Among others, it is particularly preferable to use at least one kind selected from the group consisting of the compounds (1-1), (1-2), (1-4), (1-6), (1-9), (1-12), (1-15), (1-22) and (1-24) in terms of the greater high-temperature stability characteristic improvement. It is more particularly preferable to use at least one kind selected from the group consisting of the compounds (1-1), (1-9), (1-15) and (1-22).

It is feasible to form the silicon compound (1) as the component (III) by various methods (see Patent Document 13, Non-Patent Documents 2 and 3 etc.) as mentioned above.

Preferably, R³ and R⁴ in the general formula (6) are each independently selected from fluorine, methyl, ethyl, n-propyl, isopropyl, n-butyl, tert-butyl, n-pentyl, n-hexyl, trifluoromethyl, trifluoroethyl, ethenyl, 2-propenyl, 2-propynyl, phenyl, naphthyl, pentafluorophenyl, methoxy, ethoxy, n-propoxy, isopropoxy, n-butoxy, tert-butoxy, n-pentyloxy, n-hexyloxy, trifluoromethoxy, trifluoroethoxy, ethenyloxy, 2-propenyloxy, 2-propynyloxy, phenoxy, naphthyloxy, pentafluorophenoxy, pyrrolyl and pyridinyl. In terms of the ease of synthesis of the compound and the good high-temperature storage characteristics of the electrolyte solution, it is particularly preferable that R³ and R⁴ are each independently selected from fluorine, methyl, trifluoromethyl, ethenyl, 2-propenyl, phenyl and phenoxy.

Preferably, R⁵ and R⁶ are each independently selected from hydrogen, fluorine, methyl, ethyl, n-propyl, isopropyl, n-butyl, tert-butyl, trifluoromethyl, tetrafluoroethyl, phenyl, naphthyl, pentafluorophenyl, pyrrolyl and pyridinyl. In terms of the ease of synthesis and stability of the compound, it is particularly preferable that R⁵ and R⁶ are each independently selected from hydrogen and fluorine.

The component (IV) is preferably at least one kind selected from the group consisting of the following compounds (6-1) to (6-40). 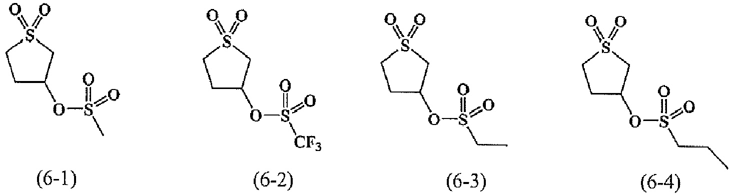 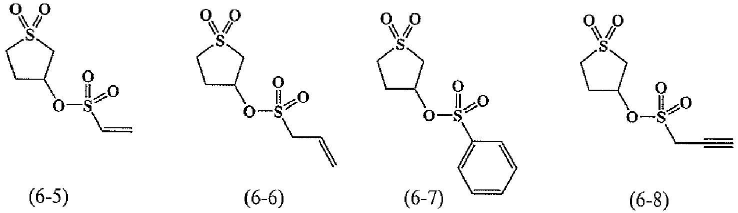 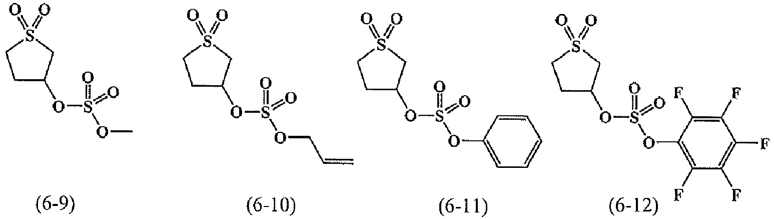 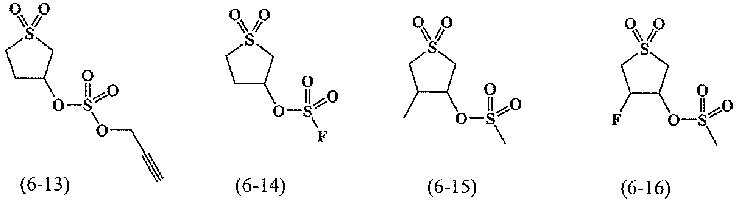 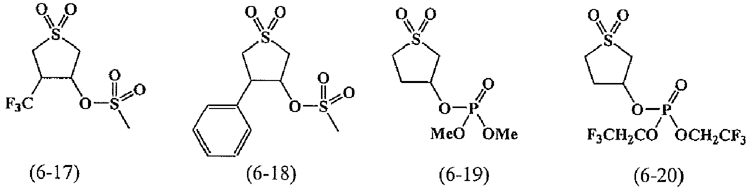 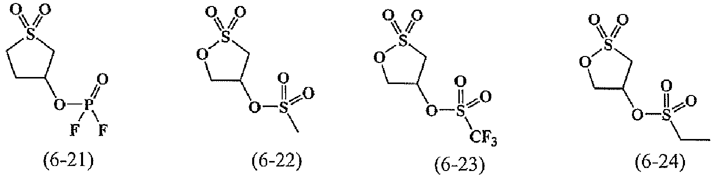 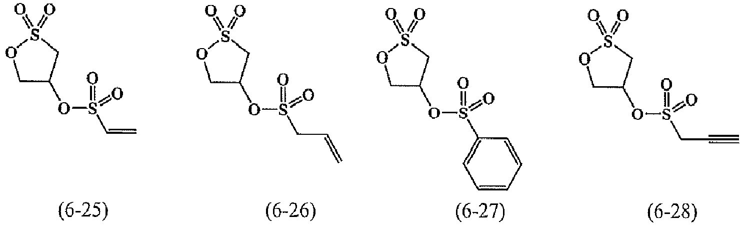 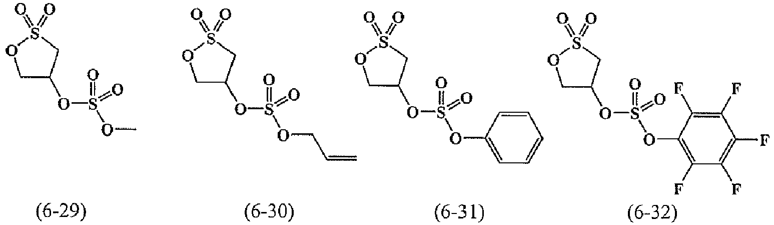 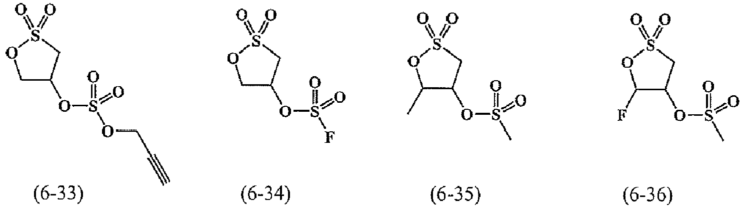 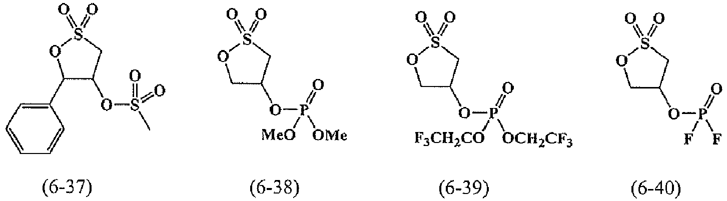 The component (IV) is more preferably at least one kind selected from the group consisting of the compounds (6-1), (6-2), (6-3), (6-5), (6-7), (6-8), (6-9), (6-11), (6-12), (6-14), (6-16), (6-19), (6-20), (6-21), (6-22), (6-23), (6-24), (6-25), (6-27), (6-28), (6-29), (6-31), (6-32), (6-34), (6-38), (6-39) and (6-40) in terms of the ease of synthesis of the compound and the good high-temperature storage characteristics of the electrolyte solution. Among others, it is particularly preferable to use at least one kind selected from the group consisting of the compounds (6-1), (6-2), (6-5), (6-7), (6-9), (6-11), (6-14), (6-19), (6-20), (6-21), (6-22), (6-23), (6-25), (6-27), (6-29), (6-31), (6-34), (6-38), (6-39) and (6-40) in terms of the better high-temperature storage characteristics of the electrolyte solution. It is more particularly preferable to use at least one kind selected from the group consisting of the compounds (6-1), (6-5), (6-11), (6-19), (6-21), (6-22), (6-31), (6-38) and (6-40).

It is feasible to form the cyclic sulfur compound (6) as the component (IV) by various methods. For example, the above-mentioned compound (6-1) can be formed by preparing 3-hydroxytetrahydrothiophene-1,1-dioxide through hydration reaction of 2,5-dihydrothiophene-1,1-dioxide and reacting the 3-hydroxytetrahydrothiophene-1,1-dioxide with methanesulfonyl chloride in the presence of triethanolamine as disclosed in paragraphs [0107] to [0116] of Patent Document 8. The other cyclic sulfur compound can be formed by a similar method with the use of the corresponding raw material.

### Effects of the Invention

The electrolyte solution for the nonaqueous electrolyte battery according to the first aspect of the present invention, which contains the silicon compound of specific structure as the component (III) and the specific compound as the component (IV) at predetermined concentrations, achieves a reduction of Ni elution from the Ni-rich positive electrode of the battery without impairing the capacity retention rate of the battery after cycles.

The electrolyte solution for the nonaqueous electrolyte battery according to the second aspect of the present invention, which contains the silicon compound of specific structure as the component (III) and the cyclic sulfur compound of specific structure as the component (IV), archives improved high-temperature storage stability.

### Description of the Embodiments

In the following embodiments, the respective components and combination thereof are mere examples. Various additions, omissions, replacements and other changes of the components are possible within the range that does not depart from the scope of the present invention as claimed in the appended claims. The scope of the present invention is not limited to the following embodiments and is limited only by the scope of claims.

### [First Embodiment]

### 1. Electrolyte Solution for Nonaqueous Electrolyte Battery

The first embodiment of the present invention is directed to an electrolyte solution for a nonaqueous electrolyte battery, the nonaqueous electrolyte battery having a positive electrode that includes one or more kinds of oxides containing at least nickel as a positive electrode active material, wherein the amount of the nickel contained relative to a metal content of the positive electrode active material is 30 to 100 mass%, the electrolyte solution including the following components:
(I) a nonaqueous organic solvent;
(II) an ionic salt as a solute;
(III) at least one kind selected from the group consisting of compounds represented by the above-mentioned general formula (1); and
(IV) LiSO₃F,

wherein the concentration of the component (III) is 0.01 to 2.00 mass% with respect to 100 mass% of the total mass of the components (I) to (IV); and
wherein the concentration of the component (IV) is 0.01 to 5.00 mass% with respect to 100 mass% of the total mass of the components (I) to (IV).

### Component (I): Nonaqueous Organic Solvent

In the first embodiment, there is no particular limitation on the kind of the nonaqueous organic solvent used in the electrolyte solution for the nonaqueous electrolyte battery. Any arbitrary nonaqueous organic solvent can be used. More specifically, the nonaqueous organic solvent is preferably at least one kind selected from the group consisting of ethyl methyl carbonate (hereinafter referred to as "EMC"), dimethyl carbonate (hereinafter referred to as "DMC"), diethyl carbonate (hereinafter referred to as "DEC"), methyl propyl carbonate, ethyl propyl carbonate, methyl butyl carbonate, 2,2,2-trifluoroethyl methyl carbonate, 2,2,2-trifluoroethyl ethyl carbonate, 2,2,2-trifluoroethyl propyl carbonate, bis(2,2,2-trifluoroethyl)carbonate, 1,1,1,3,3,3-hexafluoro-1-propyl methyl carbonate, 1,1,1,3,3,3-hexafluoro-1-propyl ethyl carbonate, 1,1,1,3,3,3-hexafluoro-1-propyl propyl carbonate, bis(1,1,1,3,3,3-hexafluoro-1-propyl)carbonate, ethylene carbonate (hereinafter referred to as "EC"), propylene carbonate (hereinafter referred to as "PC"), butylene carbonate, fluoroethylene carbonate (hereinafter referred to as "FEC"), difluoroethylene carbonate, methyl acetate, ethyl acetate, methyl propionate, ethyl propionate, methyl 2-fluoropropionate, ethyl 2-fluoropropionate, diethyl ether, dibutyl ether, diisopropyl ether, 1,2-dimethoxyethane, tetrahydrofuran, 2-methyltetrahydrofuran, furan, tetrahydropyran, 1,3-dioxane, 1,4-dioxane, N,N-dimethylformamide, acetonitrile, propionitrile, dimethylsulfoxide, sulfolane, γ-butyrolactone and γ-valerolactone.

For good high-temperature cycle characteristics, it is preferable that the nonaqueous organic solvent contains at least one kind selected from the group consisting of cyclic carbonate and chain carbonate. For good low-temperature input/output characteristics, it is preferable that the nonaqueous organic solvent contains at least one kind selected from the group consisting of esters.

Examples of the cyclic carbonate include EC, PC, butylene carbonate and FEC. Among others, at least one kind selected from the group consisting of EC, PC and FEC is preferred.

Examples of the chain carbonate include EMC, DMC, DEC, methyl propyl carbonate, ethyl propyl carbonate, 2,2,2-trifluoroethyl methyl carbonate, 2,2,2-trifluoroethyl ethyl carbonate, 1,1,1,3,3,3-hexafluoro-1-propyl methyl carbonate and 1,1,1,3,3,3-hexafluoro-1-propyl ethyl carbonate. Among others, at least one kind selected from the group consisting of EMC, DMC, DEC and methyl propyl carbonate is preferred.

Examples of the esters include methyl acetate, ethyl acetate, methyl propionate, ethyl propionate, methyl 2-fluoropropionate and ethyl 2-fluoropropionate.

The electrolyte solution for the nonaqueous electrolyte battery according to the first embodiment may contain a polymer, as is generally called a polymer solid electrolyte. Herein, the term "polymer solid electrolyte" includes those containing a nonaqueous organic solvent as a plasticizer.

There is no particular limitation on the polymer as long as the polymer is an aprotic polymer capable of dissolving therein the solute and the additive components. Examples of the polymer include a polymer having polyethylene oxide in its main chain or side chain, a homopolymer or copolymer of polyvinylidene fluoride, a methacrylate polymer and polyacrylonitrile. As the plasticizer added to the polymer, there can be preferably used an aprotic nonaqueous organic solvent among the above-mentioned nonaqueous organic solvents.

### Component (II): Solute

The ionic salt is preferably any of those having: at least one kind of cation selected from the group consisting of alkali metal ions and alkaline-earth metal ions; and at least one kind of anion selected from the group consisting of hexafluorophosphate anion, tetrafluoroborate anion, trifluoromethanesulfonate anion, fluorosulfonate anion, bis(trifluoromethanesulfonyl)imide anion, bis(fluorosulfonyl)imide anion, (trifluoromethanesulfonyl)(fluorosulfonyl)imide anion, bis(difluorophosphonyl)imide anion, (difluorophosphonyl)(fluorosulfonyl)imide anion and (difluorophosphonyl)(trifluoromethanesulfonyl)imide anion.

In terms of the solubility of the ionic salt in the nonaqueous organic solvent and the electrochemical stability of the ionic salt, the ionic salt as the solute is particularly preferably any of those having: lithium cation, sodium cation, potassium cation or magnesium cation; and at least one kind of anion selected from the group consisting of hexafluorophosphate anion, tetrafluoroborate anion, trifluoromethanesulfonate anion, bis(trifluoromethanesulfonyl)imide anion, bis(fluorosulfonyl)imide anion and bis(difluorophosphonyl)imide anion.

There is no particular limitation on the concentration of the solute. The lower limit of the concentration of the solute is generally 0.5 mol/L or more, preferably 0.7 mol/L or more, more preferably 0.9 mol/L or more. The upper limit of the concentration of the solute is generally 2.5 mol/L or less, preferably 2.2 mol/L or less, more preferably 2.0 mol/L or less. When the concentration of the solute is lower than 0.5 mol/L, the cycle characteristics and output characteristics of the nonaqueous electrolyte battery may be deteriorated with decrease in ion conductivity. When the concentration of the solute exceeds 2.5 mol/L, the viscosity of the electrolyte solution becomes high so that the cycle characteristics and output characteristics of the nonaqueous electrolyte battery may be deteriorated with decrease in ion conductivity. The above solutes can be used solely or in combination of two or more kinds thereof.

When a large amount of the solute is dissolved at a time in the nonaqueous organic solvent, the temperature of the nonaqueous electrolyte solution may rise by the heat of dissolution of the solute. In the case of using LiPF₆ as the solute, for example, the decomposition of LiPF₆ may unfavorably proceed when the temperature of the nonaqueous electrolyte solution rises significantly.

### Component (III)

As mentioned above, the silicon compound of the general formula (1) is used as the component (III).

In the nonaqueous electrolyte solution, the concentration of the component (III) is in a range of 0.01 mass% to 2.00 mass% with respect to 100 mass% of the total mass of the components (I) to (IV). When the concentration of the component (III) is more than or equal to 0.01 mass%, the nonaqueous electrolyte solution can easily provide a sufficient characteristic improvement effect on the nonaqueous electrolyte battery. When the concentration of the component (III) is lower than or equal to 2.00 mass%, the nonaqueous electrolyte solution can easily provide a good durability improvement effect without causing a remarkable increase of Ni elution. The concentration of the component (III) is more preferably in the range of 0.04 mass% to 1.00 mass%, still more preferably 0.08 mass% to 0.50 mass%.

### Component (IV)

As the additive component (IV), LiSO₃F is used as mentioned above.

In the nonaqueous electrolyte solution, the concentration of the component (IV) is in a range of 0.01 mass% to 5.00 mass% with respect to 100 mass% of the total mass of the components (I) to (IV). When the concentration of the component (IV) is lower than 0.01, the nonaqueous electrolyte solution cannot provide a sufficient reduction of Ni from the Ni-rich positive electrode. When the concentration of the component (IV) is higher than 5.00 mass%, the nonaqueous electrolyte solution provides a very good durability improvement effect but causes a risk of decrease in initial capacity of the battery or elution of aluminum from the positive electrode collector of the battery. The concentration of the component (IV) is preferably in the range of 0.10 mass% to 2.50 mass%, more preferably 0.50 mass% to 1.50 mass%.

### Other Additives

The electrolytic solution for the nonaqueous electrolyte battery according to the first embodiment may contain any other commonly used kind of additive at an arbitrary content within the range that does not impair the effects of the present invention.

Examples of the other additive include compounds having an overcharge preventing function, negative electrode coating film formation function, positive electrode coating film formation function etc., as typified by cyclohexylbenzene, cyclohexylfluorobenzene, fluorobenzene (hereinafter also referred to as "FB"), biphenyl, difluoroanisole, tert-butylbenzene, tert-amylbenzene, 2-fluorotoluene, 2-fluorobiphenyl, vinylene carbonate, dimethylvinylene carbonate, vinylethylene carbonate, fluoroethylene carbonate, methyl propargyl carbonate, ethyl propargyl carbonate, dipropargyl carbonate, maleic anhydride, succinic anhydride, propanesultone, 1,3-propanesultone (hereinafter also referred to as "PS"), butanesultone, methylene methane disulfonate, dimethylene methane disulfonate, trimethylene methane disulfonate, a compound represented by the following general formula (7) (such as a compound having an ethylene group as R⁹ (hereinafter also referred to as "Dod"), a compound having a propylene group as R⁹ (hereinafter also referred to as "Dad"), a compound having a butylene group as R⁹, a compound having a pentylene group as R⁹, a compound having a -CH₂-CH(C₃H₇)- group as R⁹ (hereinafter also referred to as "pDod") etc.), methyl methanesulfonate, lithium difluorobis(oxalato)phosphate (hereinafter also referred to as "LDFBOP"), sodium difluorobis(oxalato)phosphate, potassium difluorobis(oxalato)phosphate, lithium difluorooxalatoborate (hereinafter also referred to as "LDFOB"), sodium difluorooxalatoborate, potassium difluorooxalatoborate, lithium bis(oxalato)borate, sodium bis(oxalato)borate, potassium bis(oxalato)borate, lithium tetrafluorooxalatophosphate (hereinafter also referred to as "LTFOP"), sodium tetrafluorooxalatophosphate, potassium tetrafluorooxalatophosphate, lithium tris(oxalato)phosphate, lithium difluorophosphate (hereinafter also referred to as "LiPO₂F₂") and lithium fluorophosphate.

The amount of the other additive contained in the electrolyte solution is preferably in a range of 0.01 mass% to 8.00 mass%. 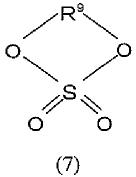 In the general formula (3), R⁹ is a hydrocarbon group of 2 to 5 carbon atoms. The hydrocarbon group may be branched in the case of 3 or more carbon atoms, and may contain a halogen atom, a hetero atom and an oxygen atom.

The ionic salt as the solute, when contained in the electrolyte solution in an amount smaller than the lower limit of the suitable concentration of the solute, that is, smaller than 0.5 mol/L, serves as an "other additive" to perform a negative electrode coating film formation function or positive electrode coating film formation function. In this case, the amount of the ionic salt as the other additive in the electrolyte solution is preferably in a range of 0.01 mass% to 5.00 mass%. Examples of the ionic salt usable as the other additive include lithium trifluoromethanesulfonate, sodium trifluoromethanesulfonate, potassium trifluoromethanesulfonate, magnesium trifluoromethanesulfonate, sodium fluorosulfonate, potassium fluorosulfonate, magnesium fluorosulfonate, lithium bis(trifluoromethanesulfonyl)imide, sodium bis(trifluoromethanesulfonyl)imide, potassium bis(trifluoromethanesulfonyl)imide, magnesium bis(trifluoromethanesulfonyl)imide, lithium bis(fluorosulfonyl)imide, sodium bis(fluorosulfonyl)imide, potassium bis(fluorosulfonyl)imide, magnesium bis(fluorosulfonyl)imide, lithium (trifluoromethanesulfonyl)(fluorosulfonyl)imide, sodium (trifluoromethanesulfonyl)(fluorosulfonyl)imide, potassium (trifluoromethanesulfonyl)(fluorosulfonyl)imide, magnesium (trifluoromethanesulfonyl)(fluorosulfonyl)imide, lithium bis(difluorophosphonyl)imide, sodium bis(difluorophosphonyl)imide, potassium bis(difluorophosphonyl)imide, magnesium bis(difluorophosphonyl)imide, lithium (difluorophosphonyl)(fluorosulfonyl)imide, sodium (difluorophosphonyl)(fluorosulfonyl)imide, potassium (difluorophosphonyl)(fluorosulfonyl)imide, magnesium (difluorophosphonyl)(fluorosulfonyl)imide, lithium (difluorophosphonyl)(trifluoromethanesulfonyl)imide, sodium (difluorophosphonyl)(trifluoromethanesulfonyl)imide, potassium (difluorophosphonyl)(trifluoromethanesulfonyl)imide and magnesium (difluorophosphonyl)(trifluoromethanesulfonyl)imide.

The electrolytic solution for the nonaqueous electrolyte battery may be used in a quasi-solid state with the addition of a gelling agent or a cross-linked polymer, as in a nonaqueous electrolyte battery called a polymer battery.

### 2. Nonaqueous Electrolyte Battery

The nonaqueous electrolyte battery according to the first embodiment of the present invention has at least the following constituent elements: ( 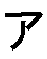 ) the above-mentioned electrolyte solution for the nonaqueous electrolyte battery; ( 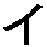 ) a positive electrode; and ( 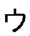 ) a negative electrode. The nonaqueous electrolyte battery may preferably have ( 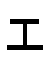 ) a separator, an exterior member and the like.

[( 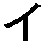 ) Positive Electrode]

The positive electrode as the constituent element ( 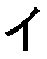 ) includes one or more kinds of oxides containing at least nickel as a positive electrode active material, wherein the amount of the nickel contained relative to a metal content of the positive electrode active material is 30 to 100 mass%. Even when the battery is provided with such a Ni-rich positive electrode, the use of the above-mentioned electrolyte solution leads to a reduction of Ni elution from the positive electrode into the electrolyte solution without impairing the capacity retention rate of the battery after cycles.

### [Positive Electrode Active Material]

The kind of the positive electrode active material used for the positive electrode as the constituent element ( 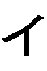 ) is not particularly limited. In the case of a lithium ion secondary battery in which lithium is predominantly contained as cation in the nonaqueous electrolyte solution, for example, the positive electrode active material can contain at least one kind selected from: (A) a lithium-transition metal composite oxide containing nickel, or nickel and at least one of manganese, cobalt and aluminum, and having a laminar structure; (B) a spinel-structured lithium-manganese composite oxide; (C) an olivine-type lithium-containing phosphate salt; and (D) a lithium rich-layered transition metal oxide having a laminar rocksalt-type structure.

### ((A) Lithium-Transition Metal Composite Oxide)

As the positive electrode active material (A): lithium-transition metal composite oxide containing nickel, or nickel and at least one of manganese, cobalt and aluminum, and having a laminar structure, there can be used a lithium-nickel composite oxide, a lithium-nickel-cobalt composite oxide, a lithium-nickel-manganese composite oxide, a lithium-nickel-manganese-cobalt composite oxide or the like. There can alternatively be used any of those obtained by replacing a part of transition metal element of the above-mentioned lithium-transition metal composite oxide with another element such as Al, Ti, V, Cr, Fe, Cu, Zn, Mg, Ga, Zr, Si, B, Ba, Y, Sn etc.

Specific examples of the lithium-nickel composite oxide include LiNiO₂, a lithium nickel oxide doped with different kind of element such as Mg, Zr, Al or Ti, and a powder of LiCoO₂ particles whose surfaces are partially covered with aluminum oxide.

The lithium-nickel-cobalt composite oxide and the composite oxide obtained by replacing a part of nickel and cobalt with Al etc. can be those represented by the general formula [1-1].

LiₐNi_{1-b-c}CO_{b}M¹_{c}O₂ [1-1]

In the general formula [1-1], M¹ is at least one element selected from the group consisting of Al, Fe, Mg, Zr, Ti and B; a is a value satisfying the condition of 0.9 ≤ a ≤ 1.2; and b and c are values satisfying the conditions of 0.1 ≤ b ≤ 0.3 and 0 ≤ c ≤ 0.1.

The above composite oxides can be prepared by a method disclosed in e.g. Japanese Laid-Open Patent Publication No. 2009-137834 or the like. Specific examples of the lithium-nickel-cobalt composite oxide include LiNi_{0.8}Co_{0.2}O₂, LiNi_{0.85}Co_{0.10}Al_{0.05}O₂, LiNi_{0.87}Co_{0.10}Al_{0.03}O₂ and LiNi_{0.6}Co_{0.3}Al_{0.1}O₂.

Specific examples of the lithium-nickel-manganese composite oxide include LiNi_{0.5}Mn_{0.5}O₂.

The lithium-nickel-manganese-cobalt composite oxide and the composite oxide obtained by replacing a part of nickel, manganese and cobalt with Al etc. can be those represented by the general formula [1-2].

Li_{d}NiₑMn_{f}Co_{g}M²ₕO₂ [1-2]

In the general formula [1-2], M² is at least one element selected from the group consisting of Al, Fe, Mg, Zr, Ti, B and Sn; d is a value satisfying the condition of 0.9 ≤ d ≤ 1.2; and e, f, g and h are values satisfying the conditions of e + f + g + h =1, 0 ≤ e ≤ 0.7, 0 ≤ f ≤ 0.5, 0 ≤ g ≤ 0.5 and h ≥ 0.

The lithium-nickel-manganese-cobalt composite oxide is preferably of the kind containing manganese in the range of the general formula [1-2] in order to increase the structural stability of the composite oxide and improve the safety of the lithium ion secondary battery under high-temperature conditions. The lithium-nickel-manganese-cobalt composite oxide is more preferably of the kind further containing cobalt in the range of the general formula [1-2] in order to improve the high-rate characteristics of the lithium ion secondary battery.

Specific examples of the lithium-nickel-manganese-cobalt composite oxide are those having a charging/discharging region in a range of 4.3 V or higher, such as Li[Ni_{1/3}Mn_{1/3}Co_{1/3}]O₂, Li[Ni_{0.45}Mn_{0.35}Co_{0.2}]O₂, Li[Ni_{0.5}Mn_{0.3}Co_{0.2}]O₂, Li[Ni_{0.6}Mn_{0.2}Co_{0.2}]O₂, Li[Ni_{0.49}Mn_{0.3}Co_{0.2}Zr_{0.01}]O₂ and Li[Ni_{0.49}Mn_{0.3}Co_{0.2}Mg_{0.01}]O₂.

### ((B) Spinel-Structured Lithium-Manganese Composite Oxide)

As the positive electrode active material (B); spinel-structured lithium-manganese composite oxide, there can be used a spinel-structured lithium-manganese composite oxide represented by the general formula [1-3].

Liⱼ(Mn₂₋ₖM³ₖ)O₄ [1-3]

In the general formula [1-3], M³ includes Ni and optionally at least one metal element selected from the group consisting of Co, Fe, Mg, Cr ,Cu, Al and Ti; j is a value satisfying the condition of 1.05 ≤ j ≤ 1.15; and k is a value satisfying the condition of 0 ≤ k ≤ 0.20.

Specific examples of the spinel-structured lithium-manganese composite oxide are LiMn_{1.9}Ni_{0.1}O₄ and LiMn_{1.5}Ni_{0.5}O₄.

### ((C) Olivine-Type Lithium-Containing Phosphate Salt)

As the positive electrode active material (C): olivine-type lithium-containing phosphate salt, there can be used a salt represented by the general formula [1-4].

LiFe₁₋ₙM⁴ₙPO₄ [1-4]

In the general formula [1-4], M⁴ includes Ni and at least one metal element selected from the group consisting of Co, Mn, Cu, Zn, Nb, Mg, Al, Ti, W, Zr and Cd; and n is a value satisfying the condition of 0 ≤ n ≤ 1.

Specific examples of the olivine-type lithium-containing phosphate salt are LiNiPO₄.

### ((D) Lithium Rich-Layered Transition Metal Oxide)

As the positive electrode active material (D): nickel-containing lithium rich-layered transition metal oxide having a laminar rocksalt-type structure, there can be used an oxide represented by the general formula [1-5].

xLiM⁵O₂·(1-x)Li₂M⁶O₃ [1-5]

In the general formula [1-5], x is a number satisfying the condition of 0 < x < 1; M⁵ is at least one kind of metal element having an average oxidation number of 3⁺; and M⁶ is at least one kind of metal element having an average oxidation number of 4⁺.

In the general formula [1-5], M⁵ is preferably at least one kind of three-valent metal element selected from Mn, Ni, Co, Fe, V and Cr although the average oxidation number of M⁵ can be adjusted to three by using equal amounts of two-valent metal and four-valent metal; M⁶ is preferably at least one kind of metal element selected from Mn, Zr andTi in the general formula [1-5], with the proviso that at least either one of M⁵ and M⁶ certainly includes nickel.

Specific examples of the lithium rich-layered transition metal oxide are 0.5 [LiNi_{0.5}Mn_{0.5}O₂]·0.5[Li₂MnO₃], 0.5 [LiNi_{1/3}Co_{1/3}Mn_{1/3}O₂]·0.5[Li₂MnO₃], 0.5[LiNi_{0.375}Co_{0.25}Mn_{0.375}O₂]·0.5[Li₂MnO₃], 0.5[LiNi_{0.375}Co_{0.125}Fe_{0.125}Mn_{0.375}O₂]·0.5[Li₂MnO₃] and 0.45 [LiNi_{0.375}Co_{0.25}Mn_{0.375}O₂]·0.10[Li₂TiO₃]·0.45[Li₂MnO₃].

It is known that the positive electrode active material compound (D) of the general formula [1-5] exhibits a high capacity by high-voltage charging at a Li-standard potential of 4.4 V or higher (see, for example, U.S. patent No. 7,135,252). The above positive electrode active material compounds can be prepared by a method disclosed in e.g. Japanese Laid-Open Patent Publication No. 2008-270201, International Application Publication No. WO 2013/118661, Japanese Laid-Open Patent Publication No. 2013-030284 or the like.

It suffices that the positive electrode active material includes at least one of the above compounds (A) to (D) as a predominant component with the proviso that: the positive electrode active material includes one or more kinds of oxides containing at least nickel; and the amount of the nickel contained relative to the metal content of the positive electrode active material ranges from 30 to 100 mass%. The positive electrode active material may contain any other compound. Examples of the other compound contained in the positive electrode active material are transition metal chalcogenides such as FeS₂, TiS₂, TiO₂, V₂O₅, MoO₃, MoS₂ etc., conductive polymers such as polyacetylene, poly(para-phenylene), polyaniline, polypyrrole etc., activated carbons, radical-generating polymers and carbon materials.

### [Positive Electrode Collector]

The positive electrode ( 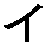 ) includes a positive electrode collector. Examples of the positive electrode collector include those made of aluminum, stainless steel, nickel, titanium or alloys thereof.

### [Positive Electrode Active material Layer]

In the positive electrode ( 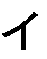 ), a positive electrode active material layer is formed on at least one side of the positive electrode collector. The positive electrode active material layer contains, for example, the above-mentioned positive electrode active material, a binder and optionally a conductive agent.

Examples of the binder usable in the positive electrode active material layer include polytetrafluoroethylene, polyvinylidene fluoride, tetrafluoroethylene-perfluoroalkylvinyl ether copolymer, styrene-butadiene rubber (SBR), carboxymethylcellulose, methylcellulose, cellulose acetate phthalate, hydroxypropylmethylcellulose and polyvinylalcohol.

Examples of the conductive agent usable in the positive electrode active material layer include carbon materials such as acetylene black, ketjen black, furnace black, carbon fibers, graphites (e.g. granular graphite, vein graphite etc.) and fluorinated graphites. In the positive electrode, it is preferable to use acetylene black or ketjen black, both of which are low in crystallinity.

[( 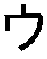 ) Negative Electrode]

There is no particular limitation on the negative electrode material. In the case of a lithium battery or lithium ion battery, lithium metal, alloys and intermetallic compounds of lithium metal with other metals, various carbon materials (such as artificial graphite, natural graphite etc), metal oxides, metal nitrides, tin (as simple substance), tin compounds, silicon (as simple substance), silicon compounds, activated carbons, conductive polymers and the like are usable.

The carbon material refers to graphitizable carbon, non-graphitizable carbon (hard carbon) with a (002) plane spacing of 0.37 nm or greater, graphite with a (002) plane spacing of 0.34 nm or smaller or the like. Specific examples of the carbon materials include pyrolytic carbons, cokes, glassy carbon fibers, organic polymer compound fired substances, activated carbons and carbon blacks. The cokes include pitch coke, needle coke, petroleum coke etc. The organic polymer compound fired substances refer to those obtained by firing and carbonizing a phenol resin, a furan resin etc. at appropriate temperatures. It is preferable to use the carbon material because the carbon material shows a very small change of crystal structure caused by occluding and releasing of lithium and thus provides a high energy density and good cycle characteristics. The carbon material can be fibrous, spherical, granular or flake-shaped. An amorphous carbon material or a graphite material having a surface coated with amorphous carbon is more preferred for low reactivity between the material surface and the electrolyte solution.

### [Negative Electrode Active Material]

The negative electrode as the constituent element ( 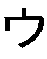 ) preferably includes at least one kind of negative electrode active material. In the case of a lithium ion secondary battery in which lithium is predominantly contained as cation in the nonaqueous electrolyte solution, the negative electrode active material used for the negative electrode as the constituent element ( 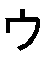 ) is of the kind capable of doping and dedoping lithium ion. For example, the negative electrode active material can contain at least one kind selected from: (E) a carbon material having a d-value of 0.340 nm or smaller for (002) lattice plane in X-ray diffraction; (F) a carbon material having a d-value of larger than 0.340 nm for (002) lattice plane in X-ray diffraction; (G) an oxide of one or more kinds of metal selected from Si, Sn and Al; (H) one or more kinds of metal selected from Si, Sn and Al, an alloy containing the one or more kinds of metal, or an alloy of the one or more kinds of metal or the alloy and lithium; and (I) a lithium-titanium oxide. These negative electrode active materials can be used solely or in combination of two or more kinds thereof.

### ((E) Carbon Material Having d-Value of 0.340 nm or Smaller for (002) Lattice Plane in X-Ray Diffraction)

As the negative electrode active material (E): carbon material having a d-value of 0.340 nm or smaller for (002) lattice plane in X-ray diffraction, there can be used a pyrolytic carbon, coke (such as pitch coke, needle coke, petroleum coke etc.), graphite, organic polymer compound fired substance (obtained by firing and carbonizing a phenol resin, a furan resin etc. at appropriate temperatures), carbon fiber, activated carbon or the like. There can alternatively be used any of those obtained by graphitization of the above carbon materials. Each of these carbon materials have a d-value of 0.340 nm or smaller for (002) lattice plane in X-ray diffraction. Among others, it is preferable to use a graphite material having a true density of 1.70 g/cm³ or higher or a highly crystalline carbon material having properties similar to those of such a graphite material.

### ((F) Carbon Material Having d-Value of Larger than 0.340 nm for (002) Lattice Plane in X-Ray Diffraction)

As the negative electrode active material (F): carbon material having a d-value of larger than 0.340 nm for (002) lattice plane in X-ray diffraction, there can be used amorphous carbon. The amorphous carbon is a carbon material that causes almost no change of stacking order even when subjected to heat treatment at high temperatures of 200°C. Examples of the amorphous carbon are non-graphitizable carbon (hard carbon), mesocarbon microbeads (MCMB) baked at 1500°C or lower, mesophase pitch carbon fibers (MCF) and the like. Carbotron P (trademark) manufactured by Kureha Corporation is a typical example of the amorphous carbon material.

### ((G) Oxide of One or More Kinds of Metal Selected from Si, Sn and Al)

As the negative electrode active material (G): oxide of one or more kinds of metal selected from Si, Sn and Al, there can be used silicon oxide or tin oxide capable of doping and dedoping lithium ion. There can also be used SiOₓ in which ultra fine particles of Si are dispersed in SiO₂. When the SiOₓ material is used as the negative electrode active material, charging and discharging proceed smoothly due to reaction of ultra fine Si particles with Li. In addition, a negative electrode active material layer-forming composition (paste) prepared using the SiOₓ material exhibits good applicability and good adhesion to negative electrode collector due to small surface area of SiOₓ particles. Since the SiOₓ material shows a large volume change caused by charging and discharging, the battery can attain both of high capacity and good charging/discharging cycle characteristics by using SiOₓ in combination with the graphite mentioned as the negative electrode active material (E) at a specific ratio.

### ((H) One or More Kinds of Metal Selected from Si, Sn and Al, Alloy Containing Metal, or Alloy of Metal or Alloy and Lithium)

As the negative electrode active material (H): one or more kinds of metal selected from Si, Sn and Al, alloy containing the one or more kinds of metal, or alloy of the one or more kinds of metal or the alloy and lithium, there can be used silicon, tin, aluminum, silicon alloy, tin alloy, aluminum alloy or the like. There can alternative be used any of those obtained by alloying these metals and alloys with lithium due to charging and discharging. Preferable examples of such a metal material include: metal as simple substance (in e.g. powdery form), such as silicon (Si), tin (Sn) etc., as disclosed in International Application Publication No. WO 2004/100293, Japanese Laid-Open Patent Publication No. 2008-016424 or the like; an alloy of the metal; a compound of the metal; and an alloy containing tin (Sn) and cobalt (Co) in the metal. It is preferable to use the metal because the metal, when used in the electrode, provides a high charge capacity and shows a relatively small volume expansion and contraction caused by charging and discharging. Further, the metal is preferred in that the metal material, when used in the electrode of the lithium ion secondary battery, is alloyed with Li during charging and thus provides a high charge capacity. There can alternatively be used a negative electrode active material made of silicon pillars of sub-micron diameter or a negative electrode active material made of silicon fibers as disclosed in International Application Publication No. WO 2004/042851 or WO 2007/083155.

### ((I) Lithium-Titanium Oxide)

As the negative electrode active material (I): lithium-titanium oxide, there can be used spinel-structured lithium titanate, ramsdellite-structured lithium titanate or the like. Specific examples of the spinel-structured lithium titanate are Li_{4+α}Ti₅O₁₂ (where α varies in the range of 0 ≤ α ≤ 3 by charging/discharging reaction). Specific examples of the ramsdellite-structured lithium titanate are Li_{2+β}Ti₃O₇ (where β varies in the range of 0 ≤ β ≤ 3 by charging/discharging reaction). The above negative electrode active material compounds can be prepared by a method disclosed in e.g. Japanese Laid-Open Patent Publication No. 2007-018883, Japanese Laid-Open Patent Publication No. 2009-176752 or the like.

In the case of a sodium ion secondary battery in which sodium is predominantly contained as cation in the nonaqueous electrolyte solution, for example, the negative electrode active material used can be a hard carbon material, an oxide such as TiO₂, V₂O₅, MoO₃ etc. or the like; and the positive electrode active material used can be a sodium-containing transition metal composite oxide such as NaFeO₂, NaCrO₂, NaNiO₂, NaMnO₂, NaCoO₂ etc., a sodium-containing transition metal composite oxide with a plurality of transition metals such as Fe, Cr, Ni, Mn and Co, a composite oxide obtained by replacing a part of transition metal of the above-mentioned lithium-transition metal composite oxide with any metal other than transition metal, a transition metal phosphate compound such as Na₂FeP₂O₇, NaCO₃(PO₄)₂P₂O₇ etc., a sulfide such as TiS₂, FeS₂ etc., a conductive polymer such as polyacetylene, poly(para-phenylene), polyaniline, polypyrrole etc., an activated carbon, a radical-generating polymer, a carbon material or the like.

### [Negative Electrode Collector]

The negative electrode ( 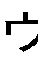 ) includes a negative electrode collector. Examples of the negative electrode collector are those made of copper, stainless steel, nickel, titanium and alloys thereof.

In the negative electrode ( 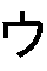 ), a negative electrode active material layer is formed on at least one side of the negative electrode collector. The negative electrode active material layer contains, for example, the above-mentioned negative electrode active material, a binder and optionally a conductive agent.

Examples of the binder usable in the negative electrode active material layer include polytetrafluoroethylene, polyvinylidene fluoride, tetrafluoroethylene-perfluoroalkylvinyl ether copolymer, styrene-butadiene rubber (SBR), carboxymethylcellulose, methylcellulose, cellulose acetate phthalate, hydroxypropylmethylcellulose and polyvinylalcohol.

Examples of the conductive agent usable in the negative electrode active material layer includes carbon materials such as acetylene black, ketjen black, furnace black, carbon fibers, graphites (e.g. granular graphite, vein graphite etc.) and fluorinated graphites.

[Production Method of Electrodes (Positive Electrode ( 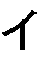 ) and Negative Electrode ( 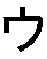 ))]

The electrode is produced by forming the active material layer on the collector. The active material layer can be formed by dispersing and kneading the active material, the binder and optionally the conductive agent at a predetermined mixing ratio into a solvent such as N-methyl-2-pyrrolidone (NMP) or water, applying the resulting paste to the collector and drying the applied paste layer. It is preferable that the thus-produced electrode is subjected to compression by a roll press etc. and thereby adjusted to an adequate density.

[( 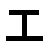 ) Separator]

The nonaqueous electrolyte battery may be provided with ( 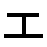 ) a separator. As the separator for preventing contact of the positive electrode ( 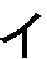 ) and the negative electrode ( 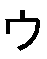 ), a film of polyolefin such as polypropylene or polyethylene, a nonwoven fabric film of cellulose, paper, glass fiber etc. or a film of porous material sheet is usable. It is preferable that the film used as the separator has a fine porous structure such that the separator can be impregnated with the electrolyte solution so as to facilitate ion permeation.

One example of the polyolefin separator is a fine porous polymer film such as porous polyolefin film capable of allowing permeation of lithium ion therethrough while providing electrical insulation between the positive electrode and the negative electrode. The porous polyolefin film can be a porous polyethylene film alone and a multilayer film in which a porous polyethylene film sheet and a porous polypropylene film sheet are laminated together. There can also be used a film in which a porous polyethylene film sheet and a polypropylene film sheet are combined together.

The exterior member as the constituent element of the nonaqueous electrolyte battery can be a metal can of coin shape, cylindrical shape, rectangular shape etc. or a laminate exterior package. Examples of the material of the metal can material include a nickel-plated steel plate, a stainless steel plate, a nickel-plated stainless steel plate, aluminum or alloy thereof, nickel and titanium. Examples of the material of the laminate exterior package include an aluminum laminate film, a SUS laminate film and a silica-coated laminate film of polypropylene, polyethylene etc.

There is no particular limitation on the configuration of the nonaqueous electrolyte battery according to the first embodiment. For example, the nonaqueous electrolyte battery can have a configuration in which the positive and negative electrodes are opposed to each other as an electrode unit and accommodated together with the nonaqueous electrolyte solution in the exterior member. There is also no particular limitation on the shape of the nonaqueous electrolyte battery. Using the above battery elements, the nonaqueous electrolyte battery can be assembled as an electrochemical device of coin shape, cylindrical shape, rectangular shape, aluminum laminate type etc.

### [Second Embodiment] - not according to the present invention

The second embodiment of the present invention is directed to an electrolyte solution for a nonaqueous electrolyte battery, including the following components:
(I) a nonaqueous organic solvent;
(II) an ionic salt as a solute;
(III) at least one kind of additive selected from the group consisting of compounds represented by the above-mentioned general formula (1); and
(IV) at least one kind of additive selected from the group consisting of compounds represented by the above-mentioned general formula (6).

### Component (I): Nonaqueous Organic Solvent

The nonaqueous organic solvent suitably usable in the second embodiment is the same as that in the first embodiment. Alternatively, there can be used an ionic liquid although the ionic liquid is of a different category from a nonaqueous solvent.

In the second embodiment, it is also preferable that the nonaqueous organic solvent contains at least one kind selected from the group consisting of cyclic carbonate and chain carbonate for good high-temperature cycle characteristics; and it is also preferable that the nonaqueous organic solvent contains at least one kind selected from the group consisting of esters for good low-temperature input/output characteristics. Examples of the cyclic carbonate, chain carbonate and esters are the same as those mentioned in the first embodiment.

### Component (II): Solute

The solute (ionic salt) suitably usable in the second embodiment is the same as that in the first embodiment. Further, the concentration of the solute in the second embodiment is the same as that in the first embodiment.

### Component (III)

As mentioned above, the silicon compound of the general formula (1) is used as the component (III). In the nonaqueous electrolyte solution, the preferable concentration of the component (III) with respect to 100 mass% of the total mass of the components (I) to (IV) is the same as that in the first embodiment. The concentration of the component (III) is more preferably in a range of 0.08 mass% to 0.75 mass%.

### Component (IV)

In the second embodiment, at least one kind of additive selected from the groups consisting of compounds of the general formula (6) is used as the component (IV) as mentioned above. In the nonaqueous electrolyte solution, the preferable concentration of the component (IV) with respect to 100 mass% of the total mass of the components (I) to (IV) is the same as that in the first embodiment. The concentration of the component (IV) is more preferably in a range of 0.10 mass% to 3.00 mass%, still more preferably 0.30 mass% to 2.00 mass%.

### Other Additives

The electrolytic solution for the nonaqueous electrolyte battery according to the second embodiment may contain any other commonly used kind of additive at an arbitrary content within the range that does not impair the effects of the present invention.

Examples of the other additive include compounds having an overcharge preventing function, negative electrode coating film formation function, positive electrode coating film formation function etc., as typified by cyclohexylbenzene, cyclohexylfluorobenzene, fluorobenzene (hereinafter also referred to as "FB"), biphenyl, difluoroanisole, tert-butylbenzene, tert-amylbenzene, 2-fluorotoluene, 2-fluorobiphenyl, vinylene carbonate, dimethylvinylene carbonate, vinylethylene carbonate, FEC, trans-difluoroethylene carbonate, methyl propargyl carbonate, ethyl propargyl carbonate, dipropargyl carbonate, maleic anhydride, succinic anhydride, methyl methanesulfonate, 1,6-diisocyanatohexane, tris((trimethylsilyl)borate, succinonitrile, (ethoxy)pentafluoro cyclotriphosphazene, lithium difluorobis(oxalato)phosphate (hereinafter also referred to as "LDFBOP"), sodium difluorobis(oxalato)phosphate, potassium difluorobis(oxalato)phosphate, lithium difluorooxalatoborate (hereinafter also referred to as "LDFOB"), sodium difluorooxalatoborate, potassium difluorooxalatoborate, lithium dioxalatoborate, sodium dioxalatoborate, potassium dioxalatoborate, lithium tetrafluorooxalatophosphate, sodium tetrafluorooxalatophosphate, potassium tetrafluorooxalatophosphate, lithium tris(oxalato)phosphate, lithium difluorophosphate (hereinafter also referred to as "LiPO₂F₂"), lithium ethylfluorophosphate, lithium fluorophosphate, ethenesulfonyl fluoride, trifluoromethanesulfonyl fluoride, methanesulfonyl fluoride and phenyl difluorophosphate.

The amount of the other additive contained in the electrolyte solution is preferably in a range of 0.01 mass% to 8.00 mass%.

The ionic salt as the solute, when contained in the electrolyte solution in an amount smaller than the lower limit of the suitable concentration of the solute, that is, smaller than 0.5 mol/L, serves as an "other additive" to perform a negative electrode coating film formation function or positive electrode coating film formation function. In this case, the amount of the ionic salt as the other additive in the electrolyte solution is preferably in a range of 0.01 mass% to 5.00 mass%. Examples of the ionic salt usable as the other additive include lithium trifluoromethanesulfonate, sodium trifluoromethanesulfonate, potassium trifluoromethanesulfonate, magnesium trifluoromethanesulfonate, lithium fluorosulfonate (hereinafter also referred to as "LiSO₃F"), sodium fluorosulfonate, potassium fluorosulfonate, magnesium fluorosulfonate, lithium bis(trifluoromethanesulfonyl)imide, sodium bis(trifluoromethanesulfonyl)imide, potassium bis(trifluoromethanesulfonyl)imide, magnesium bis(trifluoromethanesulfonyl)imide, lithium bis(fluorosulfonyl)imide, sodium bis(fluorosulfonyl)imide, potassium bis(fluorosulfonyl)imide, magnesium bis(fluorosulfonyl)imide, lithium (trifluoromethanesulfonyl)(fluorosulfonyl)imide, sodium (trifluoromethanesulfonyl)(fluorosulfonyl)imide, potassium (trifluoromethanesulfonyl)(fluorosulfonyl)imide, magnesium (trifluoromethanesulfonyl)(fluorosulfonyl)imide, lithium bis(difluorophosphonyl)imide, sodium bis(difluorophosphonyl)imide, potassium bis(difluorophosphonyl)imide, magnesium bis(difluorophosphonyl)imide, lithium (difluorophosphonyl)(fluorosulfonyl)imide, sodium (difluorophosphonyl)(fluorosulfonyl)imide, potassium (difluorophosphonyl)(fluorosulfonyl)imide, magnesium (difluorophosphonyl)(fluorosulfonyl)imide, lithium (difluorophosphonyl)(trifluoromethanesulfonyl)imide, sodium (difluorophosphonyl)(trifluoromethanesulfonyl)imide, potassium (difluorophosphonyl)(trifluoromethanesulfonyl)imide and magnesium (difluorophosphonyl)(trifluoromethanesulfonyl)imide.

An alkali metal salt other than the above-mentioned solute (lithium salt, sodium salt, potassium salt or magnesium salt) may be used as an additive. Examples of such an alkali metal salt as the additive include: carboxylate salts such as lithium acrylate, sodium acrylate, lithium methacrylate and sodium methacrylate; and sulfate salts such as lithium methylsulfate, sodium methylsulfate, lithium ethylsulfate and sodium ethylsulfate.

In the second embodiment, the electrolytic solution for the nonaqueous electrolyte battery may be used in a quasi-solid state with the addition of a gelling agent or a cross-linked polymer, as in a nonaqueous electrolyte battery called a polymer battery, as is the case with the first embodiment.

Furthermore, the electrolyte solution may contain 1,3-propanesultone, 1,3-propenesultone, 1,3,2-dioxathiolane, 2,2-dioxide, methylene methane disulfonate or a derivative thereof as the other additive within the range that does not impair the effects of the present invention. The concentration of such an other additive is in a range of 0.01 to 1.0 mass% and is lower than the concentration of the component (IV).

### 2. Nonaqueous Electrolyte Battery

The nonaqueous electrolyte battery according to the second embodiment of the present invention has at least the following constituent elements: ( 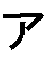 ) the above-mentioned electrolyte solution for the nonaqueous electrolyte battery; ( 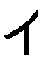 ) a positive electrode; and ( 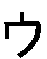 ) a negative electrode including at least one kind selected from the group consisting of a negative electrode material containing lithium metal and a negative electrode material capable of occluding and releasing lithium, sodium, potassium or magnesium. The nonaqueous electrolyte battery may preferably have ( 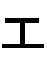 ) a separator, an exterior member and the like. The above-mentioned electrolyte solution has good high-temperature storage stability (high-temperature storage characteristics), which leads to an improvement in the durability of the battery.

[( 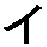 ) Positive Electrode]

The positive electrode as the constituent element ( 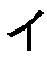 ) preferably includes at least one kind of oxide and/or polyanion compound as a positive electrode active material.

### [Positive Electrode Active Material]

The kind of the positive electrode active material used for the positive electrode as the constituent element ( 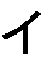 ) is not particularly limited. In the case of a lithium ion secondary battery in which lithium is predominantly contained as cation in the nonaqueous electrolyte solution, for example, the positive electrode active material can contain at least one kind selected from: (A) a lithium-transition metal composite oxide containing at least one of nickel, manganese and cobalt and having a laminar structure; (B) a spinel-structured lithium-manganese composite oxide; (C) an olivine-type lithium-containing phosphate salt; and (D) a lithium rich-layered transition metal oxide having a laminar rocksalt-type structure.

### ((A) Lithium-Transition Metal Composite Oxide)

As the positive electrode active material (A): lithium-transition metal composite oxide containing at least one of nickel, manganese and cobalt and having a laminar structure, there can be used a lithium-cobalt composite oxide, a lithium-nickel composite oxide, a lithium-nickel-cobalt composite oxide, a lithium-nickel-cobalt-aluminum composite oxide, a lithium-cobalt-manganese composite oxide, a lithium-nickel-manganese composite oxide, a lithium-nickel-manganese-cobalt composite oxide or the like. There can alternatively be used any of those obtained by replacing a part of transition metal element of the above-mentioned lithium-transition metal composite oxide with another element such as Al, Ti, V, Cr, Fe, Cu, Zn, Mg, Ga, Zr, Si, B, Ba, Y, Sn etc.

Specific examples of the lithium-cobalt composite oxide and the lithium-nickel composite oxide include LiCoO₂, LiNiO₂, a lithium cobalt oxide doped with different kind of element such as Mg, Zr, Al or Ti (as typified by LiCo_{0.98}Mg_{0.01}Zr_{0.01}O₂, LiCo_{0.98}Mg_{0.01}Al_{0.01}O₂, LiCo_{0.975}Mg_{0.01}Zr_{0.005}Al_{0.01}O₂ etc.) and a lithium cobalt oxide having a surface to which a rare-earth compound is fixed as disclosed in International Application Publication No. WO 2014/034043. There can also be used a powder of LiCoO₂ particles whose surfaces are partially covered with aluminum oxide as disclosed in Japanese Laid-Open Patent Publication No. 2002-151077.

The lithium-nickel-cobalt composite oxide and the lithium-nickel-cobalt-aluminum composite oxide can be those represented by the above-mentioned general formula [1-1]. Specific examples of the lithium-nickel-cobalt composite oxide and the lithium-nickel-cobalt-aluminum composite oxide are the same as those in the first embodiment.

Specific examples of the lithium-cobalt-manganese composite oxide and lithium-nickel-manganese composite oxide include LiNi_{0.5}Mn_{0.5}O₂ and LiCo_{0.5}Mn_{0.5}O₂.

The lithium-nickel-manganese-cobalt composite oxide can be represented by the above-mentioned general formula [1-2]. Specific examples of the lithium-nickel-manganese-cobalt composite oxide are the same as those in the first embodiment. Even in the second embodiment, the lithium-nickel-manganese-cobalt composite oxide is preferably of the kind containing manganese in the range of the general formula [1-2] in order to increase the structural stability of the composite oxide and improve the safety of the lithium ion secondary battery under high-temperature conditions. The lithium-nickel-manganese-cobalt composite oxide is more preferably of the kind further containing cobalt in the range of the general formula [1-2] in order to improve the high-rate characteristics of the lithium ion secondary battery.

### ((B) Spinel-Structured Lithium-Manganese Composite Oxide)

As the positive electrode active material (B); spinel-structured lithium-manganese composite oxide, there can be used a spinel-structured lithium-manganese composite oxide represented by the above-mentioned general formula [1-3] where M³ is at least one metal element selected from the group consisting of Ni, Co, Fe, Mg, Cr ,Cu, Al and Ti. Specific examples of the spinel-structured lithium-manganese composite oxide are LiMnO₂, LiMn₂O₄, LiMn_{1.95}Al_{0.05}O₄, LiMn_{1.9}Al_{0.1}O₄, LiMn_{1.9}Ni_{0.1}O₄ and LiMn_{1.5}Ni_{0.5}O₄.

### ((C) Olivine-Type Lithium-Containing Phosphate Salt)

As the positive electrode active material (C): olivine-type lithium-containing phosphate salt, there can be used a salt represented by the above-mentioned general formula [1-4] where M⁴ is at least one metal element selected from the group consisting of Co, Ni, Mn, Cu, Zn, Nb, Mg, Al, Ti, W, Zr and Cd. Specific examples of the olivine-type lithium-containing phosphate salt are LiFePO₄, LiCoPO₄, LiNiPO₄ and LiMnPO₄. Among others, LiFePO₄ and/or LiMnPO₄ is preferred.

### ((D) Lithium Rich-Layered Transition Metal Oxide)

As the positive electrode active material (D): nickel-containing lithium rich-layered transition metal oxide having a laminar rocksalt-type structure, there can be used an oxide represented by the above-mentioned general formula [1-5]. Although at least either one of M⁵ and M⁶ certainly includes nickel in the first embodiment, M⁵ and M⁶ do not necessarily include nickel in the second embodiment. Specific examples of the lithium rich-layered transition metal oxide are the same as those in the first embodiment.

It suffices that the positive electrode active material includes at least one of the above compounds (A) to (D) as a predominant component. The positive electrode active material may contain any other compound. Examples of the other compound contained in the positive electrode active material are transition metal chalcogenides such as FeS₂, TiS₂, TiO₂, V₂O₅, MoO₃, MoS₂ etc., conductive polymers such as polyacetylene, poly(para-phenylene), polyaniline, polypyrrole etc., activated carbons, radical-generating polymers and carbon materials.

### [Positive Electrode Collector and Positive Electrode Active Material Layer]

The positive electrode ( 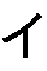 ) includes a positive electrode collector and a positive electrode active material layer formed on at least one side of the positive electrode collector. The configurations of the positive electrode collector and the positive electrode active material layer are the same as those in the first embodiment. Thus, explanations of the positive electrode collector and the positive electrode active material layer will be omitted herefrom.

[( 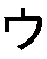 ) Negative Electrode, ( 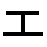 ) Separator and Exterior Member]

The configurations and materials of the negative electrode ( 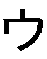 ), the separator ( 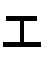 ) and the exterior member are the same as those in the first embodiment. Explanations of the negative electrode, the separator and the exterior member will be thus omitted herefrom.

Furthermore, there is no particular limitation on the configuration of the nonaqueous electrolyte battery according to the second embodiment. For example, the nonaqueous electrolyte battery can have a configuration in which the positive and negative electrodes are opposed to each other as an electrode unit and accommodated together with the nonaqueous electrolyte solution in the exterior member as is the case with the first embodiment. There is also no particular limitation on the shape of the nonaqueous electrolyte battery. Using the above battery elements, the nonaqueous electrolyte battery can be assembled as an electrochemical device of coin shape, cylindrical shape, rectangular shape, aluminum laminate type etc.

### Examples

The present invention will be described in more detail below by way of the following examples. It should however be understood that the following examples are not intended to limit the present invention thereto.

First, nonaqueous electrolyte batteries using nonaqueous electrolyte solutions according to the first embodiment were produced and tested as follows.

### [Formation ofNCM811 Positive Electrodes]

A positive electrode material mixture paste was prepared by mixing 91.0 mass% of a LiNi_{0.8}Mn_{0.1}Co_{0.1}O₂ powder with 4.5 mass% of polyvinylidene fluoride (hereinafter also referred to as "PVDF") as a binder and 4.5 mass% of acetylene black as a conductive agent and adding N-methyl-2-pyrrolidone (hereinafter also referred to as "NMP") to the mixed powder. NCM811 positive electrodes for test were each formed by applying the prepared paste to both surfaces of an aluminum foil (A1085), subjecting the applied paste layer to drying and pressing, and then, punching the resulting electrode body into a size of 4 × 5 cm.

### [Formation of NCA Positive Electrodes]

A positive electrode material mixture paste was prepared by mixing 89.0 mass% of a LiNi_{0.87}Mn_{0.1}Co_{0.10}Al_{0.03}O₂ powder with 5.0 mass% of PVDF as a binder and 6.0 mass% of acetylene black as a conductive agent and adding NMP to the mixed powder. NCA positive electrodes for test were each formed by applying the prepared paste to both surfaces of an aluminum foil (A1085), subjecting the applied paste layer to drying and pressing, and then, punching the resulting electrode body into a size of 4 × 5 cm.

### [Formation of Graphite Negative Electrodes]

A negative electrode material mixture paste was prepared by mixing 92.0 mass% of a artificial graphite powder with 8.0 mass% of PVD as a binder and adding NMP to the mixed powder. Graphite negative electrodes for test were each formed by applying the prepared paste to one surface of a copper foil, subjecting the applied paste to drying and pressing, and then, punching the resulting electrode body into a size of 4 × 5 cm.

### [Preparation of Unsaturated Bond-Containing Silicon Compound (1)]

The unsaturated bond-containing silicon compound of the general formulas (1) can be produced by various methods. There is no particular limitation on the production method of the unsaturated bond-containing silicon compound.

For example, ethynyltrichlorosilane, diethynyldiclorosilane, triethynylchlorosilane and tetraethynylsilane (1-15) were prepared by reacting silicon tetrachloride with ethynyl Grignard reagent in tetrahydrofuran at an internal temperature of 40°C or lower. These silicon compounds were separately obtained by, after reacting the raw material with the adjusted amount of the ethynyl Grignard reagent, subjecting the resulting reaction product to distillation under reduced pressure at an internal temperature of 100°C or lower.

The compounds (1-1), (1-2), (1-3), (1-4), (1-6), (1-8), (1-8) and (1-10) were each easily obtained by reacting triethynylchlorosilane as a raw material with 1 equivalent of the corresponding alcohol in the presence of a base such as triethylamine.

Similarly, the compounds (1-11), (1-13), (1-14), (1-16) and (1-28) were each obtained by reacting triethynylchlorosilane with 1 equivalent of the corresponding organic lithium reagent or Grignard reagent, or potassium fluoride.

The compound (1-5) was obtained by reacting diethynyldichlorosilane with 2 equivalents of methanol in the presence of a base such as triethylamine. The compound (1-17) was obtained by reacting diethynyldichlorosilane with 2 equivalents of allyl Grignard reagent. The compound (19) was obtained by reacting diethynyldichlorosilane with 2 equivalents of sodium acetylide. The compounds (1-25), (1-26) and (1-27) were each obtained by reacting diethynyldichlorosilane with 1 equivalent of the corresponding alcohol or organic lithium reagent in the presence of a base, followed by further reacting with 1 equivalent with potassium fluoride.

The compounds (1-9) and (1-20) were each obtained by reacting ethynyltrichlorosilane as a raw material with 3 equivalents of propargyl alcohol or sodium acetylide.

The compound (1-12) was obtained by reacting phenyltrichlorosilane with 3 equivalents of ethynyl Grignard reagent. The compound (1-18) was obtained by reacting phenyltrichlorosilane with the equivalent mole of ethynyl Grignard reagent, followed by further reacting with 2 equivalents of sodium acetylide.

The compound (1-24) was obtained by reacting trichloromethylsilane with 3 equivalents of ethynyl Grignard reagent. The compounds (1-21), (1-22) and (1-23) were each obtained by reacting trichloromethylsilane with 2 equivalents of ethynyl Grignard reagent, followed by further reacting with 1 equivalent of the corresponding alcohol or organic lithium reagent in the presence of a base such as triethylamine.

### [Preparation of Component (IV)]

Ammonium fluorosulfonate was formed by neutralizing commercially available fluorosulfonic acid with 1 equivalent of ammonia while at 0°C. Then, LiSO₃F was obtained by performing cation exchange treatment on the ammonium fluorosulfonate with the addition of lithium chloride.

Used was ethenesulfonyl fluoride available from Aldrich Co. LLC.

Methanesulfonyl fluoride (hereinafter also referred to as "compound (2-4)"), benzenesulfonyl fluoride (hereinafter also referred to as "compound (2-2)"), phenyl difluorophosphate (hereinafter also referred to as "compound (2-2)") and phenyldifluorophosphine oxide (hereinafter also referred to as "compound (4-2)") were obtained by fluorinating methanesulfonyl chloride available from Aldrich Co. LLC., benzenesulfonyl chloride, phenyl dichlorophosphate both available from Tokyo Chemical Industry Co., Ltd. and phenyldichlorophosphine oxide available from Wako Pure Chemical Corporation with potassium fluoride, respectively.

Further, used was trifluoromethanesulfonyl fluoride (hereinafter also referred to as "compound (2-3) available from Central Glass Company, Ltd.

Lithium ethylfluorophosphate (hereinafter also referred to as "compound (3-1)") was obtained by reacting lithium difluorophosphate with ethanol.

The following compounds (5-1) and (5-3) were each obtained by reacting tetrahydrothiophene-3-ol-1,1-dioxide available from Combi-Blocks Inc. with methanesulfonyl chloride available from Aldrich Co. LLC or chlorodifluorophosphine oxide prepared through chlorination of potassium difluorophosphate with phosphorus oxychloride according to a method disclosed in Non-Patent Document 1.

The following compound (5-2) was obtained by reacting the above-mentioned tetrahydrothiophene-3-ol-1,1-dioxide with 2-chloroethanesulfonyl chloride available from Tokyo Chemical Industry Co., Ltd., followed by forming a double bond through dehydrochlorination by reaction with triethylamine.

Furthermore, the following compound (5-4) was obtained through reaction of 2-hydroxy-1,3-propanesultone, which was prepared by reacting sodium 2,3-dihydroxypropanesulfonate with thionyl chloride and treating the resulting reaction product with an aqueous hydrochloric acid solution according to a method disclosed in Patent Document 12, with the above-mentioned chlorodifluorophosphine oxide.

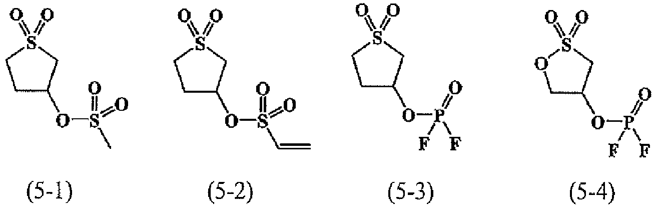

### [Preparation of LiPF₆ Solutions (DMC, MEC)]

According to a method disclosed in Patent Document 11, concentrated LiPF₆ solutions were prepared. More specifically, lithium hexachlorophosphate was formed by reaction of phosphorus trichloride, lithium chloride and chlorine in a carbonate ester (DMC or EMC), and then, subjected to fluorination by introduction of hydrogen fluoride. There were thus provided the solutions of LiPF₆, hydrogen chloride and unreacted hydrogen fluoride in DMC and in EMC. The thus-provided solutions were concentrated under reduced pressure to remove almost all of hydrogen chloride and most of hydrogen fluoride, thereby yielding the concentrated LiPF₆ solutions. For removal of the residual hydrogen fluoride, each of the concentrated solutions was purified by, after diluting the solution to a concentration of 30.0 mass% with the addition of the carbonate ester and thereby lowering the viscosity of the solution, adding 10 mass% of a dehydrated ion exchange resin into 100 g of the solution. As a consequence, the 30.0 mass% LiPF₆/DMC solution and the 30.0 mass% LiPF₆/EMC solution were obtained.

### [Preparation of Reference Electrolyte Solutions]

The above-prepared 30 mass% LiPF₆/EMC solution was mixed with EMC, DEC and EC as an nonaqueous solvent such that the mixed solution had a LiPF₆ concentration of 1.0 M and a solvent ratio (volume ratio) of EMC:DEC:EC = 4:2:3. The thus-obtained solution was used as a reference electrolyte solution 1.

Similarly, the above-prepared 30 mass% LiPF₆/DMC solution was mixed with DMC and EC such that the mixed solution had a LiPF₆ concentration of 1.0 M and a solvent ratio (volume ratio) of DMC:EC = 2:1. The thus-obtained solution was used as a reference electrolyte solution 2.

**TABLE 1**

| Reference Electrolyte Solution | Solute LiPF₆ | Solvent (volume ratio) | | | |
|---|---|---|---|---|---|
| | | DMC | EMC | DEC | EC |
| 1 | 1.0 M | - | 4 | 2 | 3 |
| 2 | 1.0 M | 2 | - | — | 1 |

### [Preparation of Electrolyte Solutions according to Examples and Comparative Examples]

Only those of the following examples are inventive which are based on electrolytes comprising at least one kind selected from the group consisting of compounds represented by the general formula (1) as defined in appended claim 1; and a lithium fluorosulfonate; wherein the concentration of the compounds represented by the general formula (1) as defined in appended claim 1 is 0.01 to 2.00 mass% with respect to 100 mass% of the total mass of the components (1) to (IV) as defined in appended claim 1; and wherein the concentration of the lithium fluorosulfonate is 0.01 to 5.00 mass% with respect to 100 mass% of the total mass of the components (1) to (IV) as defined in appended claim 1. All other examples do not fall under the invention as claimed in the appended claims. Into the reference electrolyte solution 1, the silicon compound (1-1) was added in an amount of 0.25 mass% and dissolved by stirring for 1 hour. This solution was used as a nonaqueous electrolyte solution 1-(1-1)-0.25-(0).

The silicon compound (1-1) and LiSO₃F were added in amounts of 0.25 mass% and 0.02 mass%, respectively, into the reference electrolyte solution 1 and dissolved by stirring for 1 hour. This solution was used as a nonaqueous electrolyte solution 1-(1-1)-0.25-LiSO3F-0.02.

Further, nonaqueous electrolyte solutions were respectively prepared in the same manner as above by adding the components (III) and (IV) at concentrations shown in TABLE 2 into the reference electrolyte solution 1 and dissolving the added components in the reference electrolyte solution with stirring.

**TABLE 2**

| Nonaqueous Electrolyte Solution No. | Component (III) | | Component (IV) | | Other Solute or Additive Component | |
|---|---|---|---|---|---|---|
| | No. | Conc. (mass%) | Kind | Conc. (mass%) | Kind | Conc.(mass%) in Electrolyte Solution |
| 1-(1-1)-0.25-(0) | (1-1) | 0.25 | LiSO₃F | 0.00 | none | |
| 1-(1-1)-0.25-LiSO3F-0.02 | | | | 0.02 | | |
| 1-(1-1)-0.25-LiSO3F-0.20 | | | | 0.20 | | |
| 1-(1-1)-0.25-LiSO3F-0.60 | | | | 0.60 | | |
| 1-(1-1)-0.25-LiSO3F-1.40 | | | | 1.40 | | |
| 1-(1-1)-0.25-LiSO3F-2.40 | | | | 2.40 | | |
| 1-(1-1)-0.25-LiSO3F-4.50 | | | | 4.50 | | |
| 1-(1-1)-0.25-LiSO3F-5.50 | | | | 5.50 | | |
| 1-(1-2)-0.25-(0) | (1-2) | 0.25 | LiSO₃F | 0.00 | none | |
| 1-(1-2)-0.25-LiSO3F-0.60 | | | | 0.60 | | |
| 1-(1-2)-0.25-LiSO3F-1.40 | | | | 1.40 | | |
| 1-(1-2)-0.25-LiSO3F-5.50 | | | | 5.50 | | |
| 1-(1-12)-0.25-(0) | (1-12) | 0.25 | LiSO₃F | 0.00 | none | |
| 1-(1-12)-0.25-LiSO3F-0.60 | | | | 0.60 | | |
| 1-(1-12)-0.25-LiSO3F-1.40 | | | | 1.40 | | |
| 1-(1-12)-0.25-LiSO3F-5.50 | | | | 5.50 | | |
| 1-(1-15)-0.25-(0) | (1-15) | 0.25 | LiSO₃F | 0.00 | none | |
| 1-(1-15)-0.25-LiSO3F-0.60 | | | | 0.60 | | |
| 1-(1-15)-0.25-LiSO3F-1.40 | | | | 1.40 | | |
| 1-(1-15)-0.25-LiSO3F-5.50 | | | | 5.50 | | |
| 1-(0)-LiSO3F-1.00 | (1-1) | 0.00 | LiSO₃F | 1.00 | none | |
| 1-(1-1)-0.02-LiSO3F-1.00 | | 0.02 | | | | |
| 1-(1-1)-0.05-LiSO3F-1.00 | | 0.05 | | | | |
| 1-(1-1)-0.09-LiSO3F-1.00 | | 0.09 | | | | |
| 1-(1-1)-0.40-LiSO3F-1.00 | | 0.40 | | | | |
| 1-(1-1)-1.50-LiSO3F-1.00 | | 1.50 | | | | |
| 1-(1-1)-2.50-LiSO3F-1.00 | | 2.50 | | | | |
| 1-(1-1)-0.25-LiSO3F-1.00 | (1-1) | 0.25 | LiSO₃F | 1.00 | none | |
| 1-(1-2)-0.25-LiSO3F-1.00 | (1-2) | | | 1.00 | | |
| 1-(1-12)-0.25-LiSO3F-1.00 | (1-12) | | | 1.00 | | |
| 1-(1-15)-0.25-LiSO3F-1.00 | (1-15) | | | 1.00 | | |
| 1-(1-4)-0.25-(0) | (1-4) | | | 0.00 | | |
| 1-(1-4)-0.25-LiSO3F-1.00 | | | | 1.00 | | |
| 1-(1-10)-0.25-(0) | (1-10) | | | 0.00 | | |
| 1-(1-10)-0.25-LiSO3F-1.00 | | | | 1.00 | | |
| 1-(1-22)-0.25-(0) | (1-22) | | | 0.00 | | |
| 1-(1-22)-0.25-LiSO3F-1.00 | | | | 1.00 | | |
| 1-(1-24)-0.25-(0) | (1-24) | | | 0.00 | | |
| 1-(1-24)-0.25-LiSO3F-1.00 | | | | 1.00 | | |
| 1-(1-25)-0.25-(0) | (1-25) | | | 0.00 | | |
| 1-(1-25)-0.25-LiSO3F-1.00 | | | | 1.00 | | |
| 1-(1-28)-0.25-(0) | (1-28) | | | 0.00 | | |
| 1-(1-28)-0.25-LiSO3F-1.00 | | | | 1.00 | | |

Furthermore, nonaqueous electrolyte solutions were respectively prepared in the same manner as above by adding the components (III) and (IV) and the other solute or additive component at concentrations shown in TABLE 3 into the reference electrolyte solution 1 and dissolving the added components in the reference electrolyte solution with stirring.

**TABLE 3**

| Nonaqueous Electrolyte Solution No. | Component (III) | | Component (IV) | | Other Solute or Additive Component | |
|---|---|---|---|---|---|---|
| | No. | Conc. (mass%) | Kind | Conc. (mass%) | Kind | Conc.(mass%) in Electrolyte Solution |
| 1-(1-1)-0.25-(0)-LiPO2F2-1.00 | (1-1) | 0.25 | LiSO₃F | 0.00 | LiPO₂F₂ | 1.00 |
| 1-(1-1)-0.25-LiSO3F-1.00-LiPO2F2-1.00 | | | | 1.00 | | |
| 1-(1-1)-0.25-(0)-LDFBOP-1.00 | | | | 0.00 | LDFBOP | 1.00 |
| 1-(1-1)-0.25-LiSO3F-1.00-LDFBOP-1.00 | | | | 1.00 | | |
| 1-(1-1)-0.25-(0)-LTFOP-1.50 | | | | 0.00 | LTFOP | 1.50 |
| 1-(1-1)-0.25-LiSO3F-1.00-LTFOP-1.50 | | | | 1.00 | | |
| 1-(1-2)-0.25-(0)-LiFSI-2.00 | (1-2) | | | 0.00 | LiFSI | 2.00 |
| 1-(1-2)-0.25-LiSO3F-1.00-LiFSI-2.00 | | | | 1.00 | | |
| 1-(1-2)-0.25-(0)-LDFOB-1.50 | | | | 0.00 | LDFOB | 1.50 |
| 1-(1-2)-0.25-LiSO3F-1.00-LDFOB-1.50 | | | | 1.00 | | |
| 1-(1-2)-0.25-(0)-LDFPI-1.00 | | | | 0.00 | LDFPI | 1.00 |
| 1-(1-2)-0.25--Li SO3F-1.00-LD FPI-1.00 | | | | 1.00 | | |
| 1-(1-12)-0.25-(0)-LiFSI-2.00 | (1-12) | | | 0.00 | LiFSI | 2.00 |
| 1-(1-12)-0.25-LiSO3F-1.00-LiFSI-2.00 | | | | 1.00 | | |
| 1-(1-12)-0.25-(0)-LDFBOP-1.00 | | | | 0.00 | LDFBOP | 1.00 |
| 1-(1-12)-0.25-LiSO3F-1.00-LDFBOP-1.00 | | | | 1.00 | | |
| 1-(1-12)-0.25-(0)-LiPO2F2-1.00 | | | | 0.00 | LiPO₂F₂ | 1.00 |
| 1-(1-12)-0.25-LiSO3F-1.00-LiPO2F2-1.00 | | | | 1.00 | | |
| 1-(1-15)-0.25-(0)-LiPO2F2-1.00 | (1-15) | | | 0.00 | LiPO₂F₂ | 1.00 |
| 1-(1-15)-0.25-LiSO3F-1.00-LiPO2F2-1.00 | | | | 1.00 | | |
| 1-(1-15)-0.25-(0)-LDFOB-1.50 | | | | 0.00 | LDFOB | 1.50 |
| 1-(1-15)-0.25-LiSO3F-1.00-LDFOB-1.50 | | | | 1.00 | | |
| 1-(1-15)-0.25-(0)-LTFFSI-1.00 | | | | 0.00 | LTFFSI | 1.00 |
| 1-(1-15)-0.25-LiSO3F-1.00-LTFFSI-1.00 | | | | 1.00 | | |

In the respective tables, LiPO₂F₂ refers to lithium difluorophosphate; LTFOP refers to lithium tetrafluorooxalatophosphate; LDFBOP refers to lithium difluorobis(oxalato)phosphate; LDFOB refers to lithium difluorooxalatoborate; LiFSI refers to lihium bis(fluorosulfonyl)imide; LTFFSI refers to lithium (trifluoromethanesulfonyl)(fluorosulfonyl)imide; and LDFPI refers to lithium bis(difluorophosphonyl)imide.

Nonaqueous electrolyte solutions were respectively prepared in the same manner as above by adding the components (III) and (IV) at concentrations shown in TABLE 4 into the reference electrolyte solution 2 and dissolving the added components in the reference electrolyte solution with stirring.

**TABLE 4**

| Nonaqueous Electrolyte Solution No. | Component (III) | | Component (IV) | | Other Solute or Additive Component | |
|---|---|---|---|---|---|---|
| | No. | Conc. (mass%) | Kind | Conc. (mass%) | Kind | Conc.(mass%) in Electrolyte Solution |
| 2-(1-1)-0.25-(0) | (1-1) | 0.25 | LiSO₃F | 0.00 | none | |
| 2-(1-1)-0.25-LiSO3F-1.00 | | | | 1.00 | | |
| 2-(1-2)-0.25-(0) | (1-2) | | | 0.00 | | |
| 2-(1-2)-0.25-LiSO3F-1.00 | | | | 1.00 | | |
| 2-(1-4)-0.25-(0) | (1-4) | | | 0.00 | | |
| 2-(1-4)-0.25-LiSO3F-1.00 | | | | 1.00 | | |
| 2-(1-10)-0.25-(0) | (1-10) | | | 0.00 | | |
| 2-(1-10)-0.25-LiSO3F-1.00 | | | | 1.00 | | |
| 2-(1-12)-0.25-(0) | (1-12) | | | 0.00 | | |
| 2-(1-12)-0.25-LiSO3F-1.00 | | | | 1.00 | | |
| 2-(1-15)-0.25-(0) | (1-15) | | | 0.00 | | |
| 2-(1-15)-0.25-LiSO3F-1.00 | | | | 1.00 | | |
| 2-(1-22)-0.25-(0) | (1-22) | | | 0.00 | | |
| 2-(1-22)-0.25-LiSO3F-1.00 | | | | 1.00 | | |
| 2-(1-24)-0.25-(0) | (1-24) | | | 0.00 | | |
| 2-(1-24)-0.25-LiSO3F-1.00 | | | | 1.00 | | |
| 2-(1-25)-0.25-(0) | (1-25) | | | 0.00 | | |
| 2-(1-25)-0.25-LiSO3F-1.00 | | | | 1.00 | | |
| 2-(1-28)-0.25-(0) | (1-28) | | | 0.00 | | |
| 2-(1-28)-0.25-LiSO3F-1.00 | | | | 1.00 | | |

Nonaqueous electrolyte solutions were respectively prepared in the same manner as above by adding the components (III) and (IV) and the other solute or additive component at concentrations shown in TABLE 5 into the reference electrolyte solution 2 and dissolving the added components in the reference electrolyte solution with stirring.

**TABLE 5**

| Nonaqueous Electrolyte Solution No. | Component (III) | | Component (IV) | | Other Solute or Additive Component | |
|---|---|---|---|---|---|---|
| | No. | Conc. (mass%) | Kind | Conc. (mass%) | Kind | Conc.(mass%) in Electrolyte Solution |
| 2-(1-1)-0.25-(0)-LiFSI-2.00 | (1-1) | 0.25 | LiSO₃F | 0.00 | LiFSI | 2.00 |
| 2-(1-1)-0.25-LiSO3F-1.00-LiFSI-2.00 | | | | 1.00 | | |
| 2-(1-1)-0.25-(0)-LDFOB-1.50 | | | | 0.00 | LDFOB | 1.50 |
| 2-(I-I)-0.25-LiSO3F-1.00-LDFOB-1.50 | | | | 1.00 | | |
| 2-(1-2)-0.2 5-(D)-LiPO2F2-1.00 | (1-2) | | | 0.00 | LiPO₂F₂ | 1.00 |
| 2-(1-2)-0.25-LiSO3F-1.00-LiPO2F2-1.00 | | | | 1.00 | | |
| 2-(1-2)-0.25-(0)-LDFPI-1.00 | | | | 0.00 | LDFPI | 1.00 |
| 2-(1-2)-0.25-LiSO3F-1.00-LDFPI-1.00 | | | | 1.00 | | |
| 2-(1-12)-0.25-(0)-LTFFSI-1.00 | (1-12) | | | 0.00 | LTFFSI | 1.00 |
| 2-(1-12)-0.25-LiSO3F-1.00-LTFFSI-1.00 | | | | 1.00 | | |
| 2-(1-12)-0.25-(0)-LiPO2F2-1.00 | | | | 0.00 | LiPO₂F₂ | 1.00 |
| 2-(1-12)-0.25-LiSC3F-1.00- LiPO2F2-1.00 | | | | 1.00 | | |
| 2-(1-15)-0.25-(0)-LTFOP-1.50 | (1-15) | | | 0.00 | LTFOP | 1.50 |
| 2-(1-15)-0.25-LiSO3F-1.00-LTFOP-1.50 | | | | 1.00 | | |
| 2-0 -15)-0.25-(0)-LDFBOP-1.00 | | | | 0.00 | LDFBOP | 1.00 |
| 2-(1-15)-0.25-LiSO3F-1.00-LDFBOP-1.00 | | | | 1.00 | | |

### [Production of Nonaqueous Electrolyte Batteries] NCM811/Graphite

In an argon atmosphere of dew point -50°C or lower, the above-formed NCM811 positive electrode to which terminals had been welded was stacked between two sheets of polyethylene separator film (5 × 6 cm), followed by stacking two of the above-formed graphite negative electrodes to which terminals had been welded on outer sides of the positive electrode-separator stack such that the negative electrode active material layers were respectively opposed to the positive electrode active material layers. Into an aluminum laminate with one side open, the thus-obtained electrode assembly was placed. The nonaqueous electrolyte solution was then charged, under vacuum, into the aluminum laminate bag. After that, the open side of the aluminum laminate bag was sealed by heat.

By the above-mentioned procedure, aluminum laminate type batteries according to Examples 1-1 to 1-39 and Comparative Examples 1-1 to 1-32 were produced. The nonaqueous electrolyte solutions used in the respective batteries were those shown in TABLES 2 and 3.

### [Initial Charging and Discharging]

The above-produced batteries had a capacity of 73 mAh as normalized by the weight of the positive electrode active material.

Each of the batteries was placed in a thermostat of 25°C and, in this state, was connected to a charging/discharging device. Then, the battery was charged to 4.2 V at a charging rate of 0.2 C (i.e. a current value with which the battery was fully charged for 5 hours). After the voltage of the battery was maintained at 4.2 V for 1 hour, the battery was discharged to 3.0 V at a discharging rate of 0.2 C. Assuming this charging and discharging operation as one cycle of charging and discharging, the batteries was stabilized by performing total three cycles of charging and discharging.

### [Capacity Measurement Test After 400 Cycles (Cycle Characteristic Evaluation)]

The battery was placed in a thermostat of 50°C and left still for 2 hours. Subsequently, the battery was charged to 4.2 V at a charging rate of 2 C. After the voltage of the battery reached 4.2 V, the voltage of the battery was maintained at this value for 1 hour. Then, the battery was discharged to 3.0 V at a discharging rate of 2 C. In this manner, the battery was repeatedly subjected to 400 cycles of charging and discharging under the environment of 50°C. The capacity retention rate of the battery after 400 cycles was determined by the following equation: capacity retention rate [%] = (discharge capacity after 400 cycles/discharge capacity at first cycle) × 100.

### [Ni Elution Measurement Test]

The battery after 400 cycles of charging and discharging was subjected to decomposition under an environment of non-exposure to air. After that, the negative electrode was dismounted from the battery. The dismounted negative electrode was washed with dimethyl carbonate, followed by cutting away the active material layer on the collector of the negative electrode and thereby recovering the active material layer. The recovered active material layer was added into a 14 mass% high-purity aqueous nitric acid solution. The active material solution was heated at 150°C for 2 hours. The whole of the resulting residue was dissolved in ultrapure water. The thus-obtained aqueous solution was measured with an inductively coupled plasma emission spectrometer (ICPS-7510 manufactured by Shimadzu Corporation) to determine the amount of Ni component contained in the active material layer in units of [µg/g] (Ni component/negative electrode active material layer).

Similarly, the positive electrode for test obtained in the above [Formation of Graphite Negative Electrodes] (that is, the negative electrode for test before assembled into the battery) was washed with dimethyl carbonate, followed by cutting away the active material layer on the collector of the negative electrode and thereby recovering the active material layer. The recovered active material layer was treated in the same manner as above. When the thus-obtained aqueous solution was measured with the inductively coupled plasma emission spectrometer to determine the amount of Ni component contained in the active material layer, the measurement result was below the detection limit of 1.0 µg/g (Ni component/negative electrode active material layer).

It can be thus said that the all of the Ni component quantified from the battery after 400 cycles was an eluate from the positive electrode active material.

The test results of the batteries with NCM811/graphite electrode configuration are shown in TABLES 6 and 7. The capacity retention rate after 400 cycles and Ni elution amount of Examples 1-9, 1-10 and 1-13 to 1-17 are expressed as relative values, with those of Comparative Example 1-9 in which the component (III) was not contained being defined as 100, respectively. The capacity retention rate after 400 cycles and Ni elution amount of the other Examples are expressed as relative examples, with those of the corresponding Comparative Examples using the electrolyte solutions in which the component (III) was not contained being defined as 100, respectively.

**TABLE 6**

| | Nonaqueous Electrolyte Solution No. | Positive Electrode | Negative Electrode | Capacity Retention Rate (Relative Value) After 400 Cycles at 50°C | Ni Elution Amount (Relative Value) After 400 Cycles at 50°C |
|---|---|---|---|---|---|
| Comp. Ex. 1-1 | 1-(1-1)-0.25-(0) | | | 100 | 100 |
| Ex. 1-1 | 1-(1-1)-0.25-LiSO3F-0.02 | | | 101 | 99 |
| Ex. 1-2 | 1-(1-1)-0.25-LiSO3F-0.20 | | | 103 | 95 |
| Ex. 1-3 | 1-(1-1)-0.25-LiSO3F-0.60 | | | 105 | 83 |
| Ex. 1-4 | 1-(1-1)-0.25-LiSO3F-1.40 | | | 110 | 78 |
| Ex. 1-5 | 1-(1-1)-0.25-LiSC3F-2.40 | | | 114 | 73 |
| Ex. 1-6 | 1-(1-1)-0.25-LiSO3F-4.50 | | | 114 | 70 |
| Comp. Ex. 1-2 | 1-(1-1)-0.25-LiSO3F-5.50 | | | 110 | 68 |
| Comp. Ex. 1-3 | 1-(1-2)-0.25-(0) | | | 100 | 100 |
| Ex. 1-7 | 1-(1-2)-0.25-LiSO3F-0.60 | | | 106 | 85 |
| Ex. 1-8 | 1-(1-2)-0.25-LiSO3F-1.40 | | | 112 | 80 |
| Comp. Ex. 1-4 | 1-(1-2)-0.25-LiSO3F-5.50 | | | 109 | 79 |
| Comp. Ex. 1-5 | 1-(1-12)-0.25-(0) | | | 100 | 100 |
| Ex. 1-9 | 1-(1-12)-0.25-LiSO3F-0.60 | | | 105 | 87 |
| Ex. 1-10 | 1-(1-12)-0.25-LiSO3F-1.40 | | | 112 | 82 |
| Comp. Ex. 1-6 | 1-(1-12)-0.25-LiSO3F-5.50 | | | 110 | 80 |
| Comp. Ex. 1-7 | 1-(1-15)-0.25-(0) | | | 100 | 100 |
| Ex. 1-11 | 1-(1-15)-0.25-LiSO3F-0.60 | | | 104 | 84 |
| Ex. 1-12 | 1-(1-15)-0.25-LiSO3F-1.40 | | | 109 | 81 |
| Comp. Ex. 1-8 | 1-(1-15)-0.25-LiSO3F-5.50 | | | 105 | 80 |
| Comp. Ex. 1-9 | 1-(0)-LiSO3F-1.00 | | | 100 | 100 |
| Ex. 1-13 | 1-(1-1)-0.02-LiSO3F-1.00 | | | 101 | 100 |
| Ex. 1-14 | 1-(1-1)-0.05-LiSO3F-1.00 | | | 103 | 103 |
| Ex. 1-15 | 1-(1-1)-0.09-LiSO3F-1.00 | | | 106 | 107 |
| Ex. 1-16 | 1-(1-1)-0.40-LiSO3F-1.00 | | | 112 | 120 |
| Ex. 1-17 | 1-(1-1)-1.50-LiSO3F-1.00 | | | 115 | 131 |
| Comp. Ex. 1-10 | 1-(1-1)-2.50-LiSO3F-1.00 | NCM 811 | graphite | 115 | 138 |
| Comp. Ex. 1-11 | 1-(1-1)-0.25-(0) | | | 100 | 100 |
| Ex. 1-18 | 1-(1-1)-0.25-LiSC3F-1.00 | | | 108 | 80 |
| Comp. Ex. 1-12 | 1-(1-2)-0.25-(0) | | | 100 | 100 |
| Ex. 1-19 | 1-(1-2)-0.25-LiSO3F-1.00 | | | 109 | 83 |
| Comp. Ex. 1-13 | 1-(1-4)-0.25-(0) | | | 100 | 100 |
| Ex. 1-20 | 1-(1-4)-0.25-LiSO3F-1.00 | | | 106 | 77 |
| Comp. Ex. 1-14 | 1-(1-10)-0.25-(0) | | | 100 | 100 |
| Ex. 1-21 | 1-(1-10)-0.25-LiSO3F-1.00 | | | 106 | 65 |
| Comp. Ex. 1-15 | 1-(1-12)-0.25-(0) | | | 100 | 100 |
| Ex. 1-22 | 1-(1-12)-0.25-LiSO3F-1.00 | | | 108 | 84 |
| Comp. Ex. 1-16 | 1-(1-15)-0.25-(0) | | | 100 | 100 |
| Ex. 1-23 | 1-(1-15)-0.25-LiSC3F-1.00 | | | 107 | 83 |
| Comp. Ex. 1-17 | 1-(1-22)-0.25-(0) | | | 100 | 100 |
| Ex. 1-24 | 1-(1-22)-0.25-LiSO3F-1.00 | | | 108 | 70 |
| Comp. Ex. 1-18 | 1-(1-24)-0.25-(0) | | | 100 | 100 |
| Ex. 1-25 | 1-(1-24)-0.25-LiSO3F-1.00 | | | 110 | 76 |
| Comp. Ex. 1-19 | 1-(1-25)-0.25-(0) | | | 100 | 100 |
| Ex. 1-26 | 1-(1-25)-0.25-LiSO3F-1.00 | | | 109 | 80 |
| Comp. Ex. 1-20 | 1-(1-28)-0.25-(0) | | | 100 | 100 |
| Ex. 1-27 | 1-(1-28)-0.25-LiSO3F-1.00 | | | 110 | 77 |

**TABLE 7**

| | Nonaqueous Electrolyte Solution No. | Positive Electrode | Negative Electrode | Capacity Retention Rate (Relative Value) After 400 Cycles at 50°C | Ni Elution Amount (Relative Value) After 400 Cycles at 50°C |
|---|---|---|---|---|---|
| Comp. Ex. 1-21 | 1-(1-1)-0.25-(0)-LiPO2F2-1.00 | | | 100 | 100 |
| Ex. 1-28 | 1-(1-1)-0.25-LiSO3F-1.00-LiPO2F2-1.00 | | | 105 | 93 |
| Comp. Ex. 1-22 | 1-(1-1)-0.25-(0)-LDFBOP-1.00 | | | 100 | 100 |
| Ex. 1-29 | 1-(1-1)-0.25-LiSO3F-1.00-LDFBOP-1.00 | | | 104 | 79 |
| Comp. Ex. 1-23 | 1-(1-1)-0.25-(0)-LTFOP-1.50 | | | 100 | 100 |
| Ex. 1-30 | 1-(1-1)-0.25-LiSO3F-1.00-LTFOP-1.50 | | | 105 | 83 |
| Comp. Ex. 1-24 | 1-(1-2)-0.25-(0)-LiFSI-2.00 | | | 100 | 100 |
| Ex. 1-31 | 1-(1-2)-0.25-LiSO3F-1.00-LiFSI-2.00 | | | 106 | 92 |
| Comp. Ex. 1-25 | 1-(1-2)-0.25-(0)-LDFOB-1.50 | | | 100 | 100 |
| Ex. 1-32 | 1-(1-2)-0.25-LiSO3F-1.00-LDFOB-1.50 | | | 105 | 83 |
| Comp. Ex. 1-26 | 1-(1-2)-0.25-(0)-LDFPI-1.00 | | | 100 | 100 |
| Ex. 1-33 | 1-(1-2)-0.25-LiSO3F-1.00-LDFPI-1.00 | NCM 811 | graphite | 104 | 91 |
| Comp. Ex. 1-27 | 1-(1-12)-0.25-(0)-LiFSI-2.00 | | | 100 | 100 |
| Ex. 1-34 | 1-(1-12)-0.25-LiSO3F-1.00-LiFSI-2.00 | | | 103 | 90 |
| Comp. Ex. 1-28 | 1-(1-12)-0.25-(0)-LDFBOP-1.00 | | | 100 | 100 |
| Ex. 1-35 | 1-(1-12)-0.25-LiSO3F-1.00-LDFBOP-1.00 | | | 102 | 81 |
| Comp. Ex. 1-29 | 1-(1-12)-0.25-(0)- LiPO2F2-1.00 | | | 100 | 100 |
| Ex. 1-36 | 1-(1-12)-0.25-LiSO3F-1.00-LiPO2F2-1.00 | | | 104 | 94 |
| Comp. Ex. 1-30 | 1-(1-15)-0.25-(0)-LiPO2F2-1.00 | | | 100 | 100 |
| Ex. 1-37 | 1-(1-15)-0.25-LiSO3F-1.00-LiPO2F2-1.00 | | | 103 | 92 |
| Comp. Ex. 1-31 | 1-(1-15)-0.25-(0)-LDFOB-1.50 | | | 100 | 100 |
| Ex. 1-38 | 1-(1-15)-0.25-LiSO3F-1.00-LDFOB-1.50 | | | 103 | 85 |
| Comp. Ex. 1-32 | 1-(1-15)-0.25-(0)-LTFFSI-1.00 | | | 100 | 100 |
| Ex. 1-39 | 1-(1-15)-0.25-LiSO3F-1.00-LTFFSI-1.00 | | | 102 | 88 |

In the case of changing the concentration of LiSO₃F from 0.00 mass% to 5.50 mass% while using the silicon compound (1-1) and fixing the concentration of the silicon compound (1-1) to 0.25 mass%, which falls within the particularly suitable range of 0.08 to 0.50 mass%, the test results showed a tendency that the elution of Ni was suppressed with increase in the amount of LiSO₃F. When the concentration of LiSO₃F was up to 2.40 mass%, both of a suppression of the Ni elution and an improvement of the capacity retention rate were observed (see Examples 1-1 to 1-5 and Comparative Example 1-1). When the concentration of LiSO₃F reached 4.50 mass%, a further improvement of the capacity retention rate was not obtained (see Example 1-6). When the concentration of LiSO₃F was 5.50 mass%, a decrease of the capacity retention rate was observed (see Comparative Example 1-2) as compared to when the concentration of LiSO₃F was 2.40 or 4.50 mass%. The reason for this is assumed to be that the concentration of LiSO₃F was too large whereby the adverse influence on the aluminum of the positive electrode collector etc. became pronounced.

In the case of using the silicon compounds (1-2), (1-12) and (1-15), the test results showed a similar tendency to those in the case of using the silicon compound (1-1) (see Examples 1-7 to 1-12 and Comparative Examples 1-3 to 1-8). Not only an improvement of the capacity retention rate but also a suppression of the Ni elution were observed with increase in the concentration of LiSO₃F from 0.00 mass% to 0.60 mass% and then to 1.40 mass%. When the concentration of LiSO₃F was 5.50 mass%, a further suppression of the Ni elution was observed; but a decrease of the capacity retention rate was observed as compared to when the concentration of LiSO₃F was 1.40 mass%. It is thus assumed that the adverse influence on the aluminum of the positive electrode collector etc. became pronounced.

As is apparent from the test results of Examples 1-1 to 1-6, there were seen improvement effects in terms of both of the capacity retention rate and the Ni elution suppression when the concentration of LiSO₃F was up to 2.40 mass%.

It is however assumed that, during the execution of a long-term test or a test under a raised temperature, there might occur an adverse influence on the aluminum of the positive electrode collector etc. with the use of a smaller amount of LiSO₃F. As a result of comprehensive consideration in view of the cost of use of LiSO₃F and the degree of performance improvement of the battery, it can be said that the concentration of LiSO₃F for well-balanced effects was 0.10 to 2.50 mass%; and the concentration of LiSO₃F for more well-balanced effects was 0.50 to 1.50 mass%.

Hence, the concentration of LiSO₃F was fixed to 1.00 mass%, which falls within the particularly suitable range of 0.50 to 1.50 mass%, in the after-mentioned Examples and Comparative Examples.

As mentioned above, the evaluation tests were conducted by increasing the concentration of the silicon compound (1-1) from 0.00 to 2.50 mass% while fixing the concentration of LiSO₃F to 1.00 mass% (Comparative Examples 1-9 to 1-10 and Examples 1-13 to 1-17). When the concentration of the silicon compound was increased from 0.02 mass% to 1.50 mass%, there were observed a gradual improvement of the capacity retention rate as well as an increase of the Ni elution amount (see Examples 1-13 to 1-17). By contrast, an increase of the Ni elution amount was observed with no improvement of the capacity retention rate when the concentration of the silicon compound was increased to 2.50 mass% (see Comparative Example 1-10).

As a matter of course, it is desirable to improve the capacity retention rate as much as possible while suppressing the Ni elution. As is apparent from comparison of the test results of Comparative Examples 1-9 to 1-10 and Examples 1-13 to 1-17, a good durability improvement effect was easily obtained without causing a significant increase of the Ni elution amount in Examples 1-13 to 1-17 in which the concentration of the unsaturated bond-containing silicon compound of the general formula (1) was 0.01 to 2.00 mass%. The above-mentioned effects were more easily obtained in Examples 1-14 to 1-16 in which the concentration of the silicon compound was 0.04 to 1.00 mass%. The above-mentioned effects were particularly easily obtained in Examples 1-15 to 1-16 in which the concentration of the silicon compound was 0.08 to 0.50 mass%.

Hence, the concentration of the unsaturated bond-containing silicon compound of the general formula (1) was fixed to 0.25 mass%, which falls within the particularly suitable range of 0.08 to 0.5 mass%, in the after-mentioned Examples and Comparative Examples.

Further, the evaluation tests were conducted by changing the kind of the unsaturated bond-containing silicon compound of the general formula (1) used in Comparative Examples 1-11 to 1-20 and Examples 1-18 to 1-27. In either case, an improvement of the capacity retention rate and a suppression of the Ni elution were clearly observed with the addition of 1.00 mass% of LiSO₃F as compared to without the addition of LiSO₃F.

Furthermore, the evaluation tests were conducted by changing the kind of the unsaturated bond-containing silicon compound used and using the other solute or additive component in Comparative Examples 1-21 to 1-32 and Examples 1-28 to 1-39. In either case, an improvement of the capacity retention rate and a suppression of the Ni elution were also clearly observed with the addition of 1.00 mass% of LiSO₃F as compared to without the addition of LiSO₃F.

### [Production of Nonaqueous Electrolyte Batteries] NCA/Graphite

In an argon atmosphere of dew point -50°C or lower, the above-formed NCA positive electrode to which terminals had been welded was stacked between two sheets of polyethylene separator film (5 × 6 cm), followed by stacking two of the above-formed graphite negative electrodes to which terminals had been welded on outer sides of the positive electrode-separator stack such that the negative electrode active material layers were respectively opposed to the positive electrode active material layers. Into an aluminum laminate with one side open, the thus-obtained electrode assembly was placed. The nonaqueous electrolyte solution was then charged, under vacuum, into the aluminum laminate bag. After that, the open side of the aluminum laminate bag was sealed by heat.

By the above-mentioned procedure, aluminum laminate type batteries according to Examples 2-1 to 2-18 and Comparative Examples 2-1 to 2-18 were produced. The nonaqueous electrolyte solutions used in the respective batteries were those shown in TABLES 4 and 5.

### [Initial Charging and Discharging]

The above-produced batteries had a capacity of 70 mAh as normalized by the weight of the positive electrode active material.

Each of the batteries was placed in a thermostat of 25°C and, in this state, was connected to a charging/discharging device. Then, the battery was charged to 4.1 V at a charging rate of 0.2 C (i.e. a current value with which the battery was fully charged for 5 hours). After the voltage of the battery was maintained at 4.2 V for 1 hour, the battery was discharged to 3.0 V at a discharging rate of 0.2 C. Assuming this charging and discharging operation as one cycle of charging and discharging, the batteries was stabilized by performing total three cycles of charging and discharging.

### [Capacity Measurement Test After 400 Cycles (Cycle Characteristic Evaluation)]

The test was performed under the same conditions as those of the batteries with NCM811/graphite electrode configuration.

### [Ni Elution Measurement Test]

The test was performed under the same conditions as those of the batteries with NCM811/graphite electrode configuration.

The test results are shown in TABLES 8 and 9. The capacity retention rate and Ni elution amount of Examples 2-1 to 2-18 are expressed as relative values, with those of Comparative Examples 2-1 to 2-18 being defined as 100, respectively.

**TABLE 8**

| | Nonaqueous Electrolyte Solution No. | Positive Electrode | Negative Electrode | Capacity Retention Rate (Relative Value) After 400 Cycles at 50°C | Ni Elution Amount (Relative Value) After 400 Cycles at 50°C |
|---|---|---|---|---|---|
| Comp. Ex. 2-1 | 2-(1-1)-0.25-(0) | NCA | graphite | 100 | 100 |
| Ex. 2-1 | 2-(1-1)-0.25-LiSO3F-1.00 | | | 106 | 74 |
| Comp. Ex. 2-2 | 2-(1-2)-0.25-(0) | | | 100 | 100 |
| Ex. 2-2 | 2-(1-2)-0.25-LiSO3F-1.00 | | | 106 | 75 |
| Comp. Ex. 2-3 | 2-(1-4)-0.25-(0) | | | 100 | 100 |
| Ex. 2-3 | 2-(1-4)-0.25-LiSO3F-1.00 | | | 104 | 72 |
| Comp. Ex. 2-4 | 2-(1-10)-0.25-(0) | | | 100 | 100 |
| Ex. 2-4 | 2-(1-10)-0.25-LiSC3F-1.00 | | | 103 | 55 |
| Comp. Ex. 2-5 | 2-(1-12)-025-(0) | | | 100 | 100 |
| Ex. 2-5 | 2-(1-12)-0.25-LiSO3F-1.00 | | | 106 | 79 |
| Comp. Ex. 2-6 | 2-(1-15)-0.25-(0) | | | 100 | 100 |
| Ex. 2-6 | 2-(1-15)-0.25-LiSO3F-1.00 | | | 105 | 75 |
| Comp. Ex. 2-7 | 2-(1-22)-0.25-(0) | | | 100 | 100 |
| Ex. 2-7 | 2-(1-22)-0.25-LiSO3F-1.00 | | | 105 | 65 |
| Comp. Ex. 2-8 | 2-(1-24)-0.25-(0) | | | 100 | 100 |
| Ex. 2-8 | 2-(1-24)-0.25-LiSO3F-1.00 | | | 108 | 70 |
| Comp. Ex. 2-9 | 2-(1-25)-0.25-(0) | | | 100 | 100 |
| Ex. 2-9 | 2-(1-25)-0.25-LiSO3F-1.00 | | | 107 | 71 |
| Comp. Ex. 2-10 | 2-(1-28)-0.25-(0) | | | 100 | 100 |
| Ex. 2-10 | 2-(1-28)-0.25-LiSO3F-1.00 | | | 108 | 69 |

**TABLE 9**

| | Nonaqueous Electrolyte Solution No. | Positive Electrode | Negative Electrode | Capacity Retention Rate (Relative Value) After 400 Cycles at 50°C | Ni Elution Amount (Relative Value) After 400 Cycles at 50°C |
|---|---|---|---|---|---|
| Comp. Ex. 2-11 | 2-(1-1)-0.25-(0)-LiFSI-2.00 | NCA | graphite | 100 | 100 |
| Ex. 2-11 | 2-(1-1)-0.25-LiSO3F-1.00-LiFSI-2.00 | | | 105 | 94 |
| Comp. Ex. 2-12 | 2-(1-1)-0.25-(0)-LDFOB-1.50 | | | 100 | 100 |
| Ex. 2-12 | 2-(1-1)-0.25-LiSO3F-1.00-LDFOB-1.50 | | | 104 | 81 |
| Comp. Ex. 2-13 | 2-(1-2)-0.25-(0)-LIPO2F2-1.00 | | | 100 | 100 |
| Ex. 2-13 | 2-(1-2)-0.25-LiSO3F-1.00-LIPO2F2-1.00 | | | 104 | 93 |
| Comp. Ex. 2-14 | 2-(1-2)-0.25-(0)-LDFPI-1.00 | | | 100 | 100 |
| Ex. 2-14 | 2-(1 -2)-0.25-LiSO3F-1.00-LDFPI-1.00 | | | 103 | 93 |
| Comp. Ex. 2-15 | 2-(1-12)-0.25-(0)-LTFFSI-1.00 | | | 100 | 100 |
| Ex. 2-15 | 2-(1-12)-0.25-LiSO3F-1.00-LTFFSI-1.00 | | | 105 | 86 |
| Comp. Ex. 2-16 | 2-(1-12)-0.25-(0)- LiPO2F2-1.00 | | | 100 | 100 |
| Ex. 2-16 | 2-(1-12)-0.25-LiSO3F-1.00-LiPO2F2-1.00 | | | 103 | 94 |
| Comp. Ex. 2-17 | 2-(1-15)-0.25-(0)-LTFOP-1.50 | | | 100 | 100 |
| Ex. 2-17 | 2-(1-15)-0.25-LiSO3F-1.00-LTFOP-1.50 | | | 102 | 80 |
| Comp. Ex. 2-18 | 2-(1-15)--0.25-(0)-LDFBOP-1.00 | | | 100 | 100 |
| Ex. 2-18 | 2-(1-15)-0.25-LiSC3F-1.00-LDFBOP-1.00 | | | 103 | 78 |

It is apparent from the above results that, even when the positive electrode was changed to the NCA positive electrode, an improvement of the capacity retention rate and a suppression of the Ni elution were observed with the addition of 1.00 mass% of LiSO₃F as compared to without the addition of LiSO₃F, regardless of the kind of unsaturated bond-containing silicon compound of the general formula (1), as in the case of using the NCM 811 positive electrode.

Further, nonaqueous electrolyte solutions were respectively prepared in the same manner as above by adding, to the reference electrolyte solution 1 or reference electrolyte solution 2, the components (III) and (IV) and the other solute or additive component at concentrations shown in TABLES 10 to 13 and dissolving the added components in the reference electrolyte solution with stirring.

**TABLE 10**

| Nonaqueous Electrolyte Solution No. | Component (III) | | Component (IV) | | Other Solute or Additive Component | |
|---|---|---|---|---|---|---|
| | No. | Conc. (mass%) | Kind | Conc. (mass%) | Kind | Conc. (mass%) in Electrolyte Solution |
| 1-(1-1)-0.25-(0) | (1-1) | | (2-1) | 0.00 | none | |
| 1-(1-1)-0.25-(2-1)-1.00 | | | | 1.00 | | |
| 1-(1-1)-0.25-(0) | | | (5-2) | 0.00 | | |
| 1-(1-1)-0.25-(5-2)-1.Q0 | | | | 1.00 | | |
| 1-(1-1)-0.25-(0) | | | (3-1) | 0.00 | | |
| 1-(1-1)-0.25-(3-1)-1.00 | | | | 1.00 | | |
| 1-(1-2)-0.25-(D) | (1-2) | | (5-1) | 0.00 | | |
| 1-(1-2)-0.25-(5-1)-1.00 | | | | 1.00 | | |
| 1-(1-2)-0.25-(0) | | | (5-3) | 0.00 | | |
| 1-(1-2)-0.25-(5-3)-1.00 | | | | 1.00 | | |
| 1-(1-4)-0.25-(0) | (1-4) | | (2-2) | 0.00 | | |
| 1-(1-4)-0.25-(2-2)-1.00 | | | | 1.00 | | |
| 1-(1-4)-0.25-(0) | | | (4-1) | 0.00 | | |
| 1-(1-4)-0.25-(4-1)-1.00 | | | | 1.00 | | |
| 1-(1-10)-0.25-(0) | (1-10) | | (4-2) | 0.00 | | |
| 1-(1-10)-0.25-(4-2)-1.00 | | | | 1.00 | | |
| 1-(1-10)-0.25-(0) | | | (5-4) | 0.00 | | |
| 1-(1-10)-0.25-(5-4)-1.D0 | | | | 1.00 | | |
| 1-(1-12)-0.25-(0) | (1-12) | | (2-3) | 0.00 | | |
| 1-(1-12)-0.25-(2-3)-1.00 | | | | 1.00 | | |
| 1-(1-12)-0.25-(0) | | 0.25 | (5-4) | 0.00 | | |
| 1-(1-12)-0.25-(5-4)-1.00 | | | | 1.00 | | |
| 1-(1-15)-0.25-(0) | (1-15) | | (2-4) | 0.00 | none | |
| 1-(1-15)-0.25-(2-4)-1.00 | | | | 1.00 | | |
| 1-(1-15)-0.25-(0) | | | (5-1) | 0.00 | | |
| 1-(1-15)-0.25-(5-1)-1.00 | | | | 1.00 | | |
| 1-(1-22)-0.25-(0) | (1-22) | | (2-3) | 0.00 | | |
| 1-(1-22)-0.25-(2-3)-1.00 | | | | 1.00 | | |
| 1-(1-22)-0.25-(0) | | | (5-3) | 0.00 | | |
| 1-(1-22)-0.25-(5-3)-1.00 | | | | 1.00 | | |
| 1-(1-24)-0.25-(0) | (1-24) | | (2-4) | 0.00 | | |
| 1-(1-24)-0.25-(2-4)-1.00 | | | | 1.00 | | |
| 1-(1-24)-0.25-(0) | | | (4-1) | 0.00 | | |
| 1-(1-24)-0.25-(4-1)-1.00 | | | | 1.00 | | |
| 1-(1-25)-0.25-(0) | (1-25) | | (2-1) | 0.00 | | |
| 1-(1-25)-0.25-(2-1)-1.00 | | | | 1.00 | | |
| 1-(1-25)-0.25-(0) | | | (5-2) | 0.00 | | |
| 1-(1-25)-0.25-(5-2)-1.00 | | | | 1.00 | | |
| 1-(1-28)-0.25-(0) | (1-28) | | (2-2) | 0.00 | | |
| 1-(1-28)-0.25-(2-2)-1.00 | | | | 1.00 | | |
| 1-(1-28)-0.25-(0) | | | (4-2) | 0.00 | | |
| 1-(1-28)-0.25-(4-2)-1.00 | | | | 1.00 | | |

**TABLE 11**

| Nonaqueous Electrolyte Solution No. | Component (III) | | Component (IV) | | Other Solute or Additive Component | |
|---|---|---|---|---|---|---|
| | No. | Conc. (mass%) | Kind | Conc. (mass%) | Kind | Conc. (mass%) in Electrolyte Solution |
| 1-(1-1)-0.25-(0)-LDFBOP-1.00 | (1-1) | | (2-1) | 0.00 | LDFBOP | 1.00 |
| 1-(1-1)-0.25-(2-1)-1.00-LDFBOP-1.00 | | | | 1.00 | | |
| 1-(1-1)-0.25-(0)-LiPO2F2-1.00 | | | (5-2) | 0.00 | LiPO₂F₂ | 1.00 |
| 1-(1-1)-0.25-(5-2)-1.00-LiPO2F2-1.00 | | | | 1.00 | | |
| 1-(1-1)-0.25-(0)-LiFSI-2.00 | | | (4-1) | 0.00 | LiFSI | 2.00 |
| 1-(1-1)-0.25-(4-1)-1.00-LiFSI-2.00 | | | | 1.00 | | |
| 1-(1-1)-0.25-(0)-LDFOB-1.50 | | | (2-1) | 0.00 | LDFOB | 1.50 |
| 1-(1-1)-0.25-(2-1)-1.00-LDFOB-1.50 | | | | 1.00 | | |
| 1-(1-2)-0.25-(0)-LDFBOP-1.00 | (1-2) | | (5-1) | 0.00 | LDFBOP | 1.00 |
| 1-(1-2)-0.25-(5-1)-1.00-LDFBOP-1.00 | | | | 1.00 | | |
| 1-(1-2)-0.25-(0)-LiPO2F2-1.00 | | | (5-3) | 0.00 | LiPO₂F₂ | 1.00 |
| 1-(1-2)-0.25-(5-3)-1.00-LiPO2F2-1.00 | | | | 1.00 | | |
| 1-(1-2)-0.25-(0)-LiFSt-2.00 | | | (2-2) | 0.00 | LiFSI | 2.00 |
| 1-(1-2)-0.25-(2-2)-1.00-LiFSI-2.00 | | | | 1.00 | | |
| 1-(1-2)-0.25-(0)-LDFOB-1.50 | | | (4-2) | 0.00 | LDFOB | 1.50 |
| 1-(1-2)-0.25-(4-2)-1.00-LDFOB-1.50 | | | | 1.00 | | |
| 1-(1-2)-0.25-(0)-LTFOP-1.00 | | | (3-1) | 0.00 | LTFOP | 1.00 |
| 1-(1-2)-0.25-(3-1)-1.00-LTFOP-1.00 | | 0.25 | | 1.00 | | |
| 1-(1-12)-0.25-(0)-LDFBOP-1.00 | (1-12) | | (2-3) | 0.00 | LDFBOP | 1.00 |
| 1-(1-12)-0.25-(2-3)-1.00-LDFBOP-1.00 | | | | 1.00 | | |
| 1-(1-12)-0.25-(0)-LiPO2F2-1.00 | | | (5-4) | 0.00 | LiPO₂F₂ | 1.00 |
| 1-(1-12)-0.25-(5-4)-1.00-LiPO2F2-1.00 | | | | 1.00 | | |
| 1-(1-12)-0.25-(0)-LiFSI-2.00 | | | (2-1) | 0.00 | LiFSI | 2.00 |
| 1-(1-12)-0.25-(2-1)-1.00-LiFSI-2.00 | | | | 1.00 | | |
| 1-(1-12)-0.25-(0)-LDFOB-1.50 | | | (2-2) | 0.00 | LDFOB | 1.50 |
| 1-(1-12)-0.25-(2-2)-1.00-LDFOB-1.50 | | | | 1.00 | | |
| 1-(1-15)-0.25-(0)-LDFBOP-1.00 | (1-15) | | (2-4) | 0.00 | LDFBOP | 1.00 |
| 1-(1-15)-0.25-(2-4)-1.00-LDFBOP-1.00 | | | | 1.00 | | |
| 1-(1-15)-0.25-(0)-LiPO2F2-1.00 | | | (5-1) | 0.00 | LiPO₂F₂ | 1.00 |
| 1-(1-15)-0.25-(5-1)-1.00-LiPO2F2-1.00 | | | | 1.00 | | |
| 1-(1-15)-0.25-(0)-LiFSI-2.00 | | | (5-2) | 0.00 | LiFSI | 2.00 |
| 1-(1-15)-0.25-(5-2)-3.00-LiFSI-2.00 | | | | 1.00 | | |
| 1-(1-15)-0.25-(0)-LDFOB-1.50 | | | (4-1) | 0.00 | LDFOB | 1.50 |
| 1-(1-15)-0.25-(4-1)-1.00-LDFOB-1.50 | | | | 1.00 | | |

**TABLE 12**

| Nonaqueous Electrolyte Solution No. | Component (III) | | Component (IV) | | Other Solute or Additive Component | |
|---|---|---|---|---|---|---|
| | No. | Conc. (mass%) | Kind | Conc. (mass%) | Kind | Conc. (mass%) in Electrolyte Solution |
| 2-(1-1)-0.25-(0) | (1-1) | 0.25 | (4-1) | 0.00 | none | |
| 2-(1-1)-0.25-(4-1)-1.00 | | | | 1.00 | | |
| 2-(1-2)-0.25-(0) | (1-2) | | (2-1) | 0.00 | | |
| 2-(1-2)-0.25-(2-1)-1.00 | | | | 1.00 | | |
| 2-(1-4)-0.25-(0) | (1-4) | | (5-1) | 0.00 | | |
| 2-(1-4)-0.25-(5-1)-1.00 | | | | 1.00 | | |
| 2-(1-10)-0.25-(0) | (1-10) | | (2-3) | 0.00 | | |
| 2-(1-10)-0.25-(2-3)-1.00 | | | | 1.00 | | |
| 2-(1-12)-0.25-(0) | (1-12) | | (3-1) | 0.00 | | |
| 2-(1-12)-0.25-(3-1)-1.00 | | | | 1.00 | | |
| 2-(1-15)-0.25-(0) | (1-15) | | (2-2) | 0.00 | | |
| 2-(1-15)-0.25-(2-2)-1.00 | | | | 1.00 | | |
| 2-(1-22)-0.25-(0) | (1-22) | | (2-4) | 0.00 | | |
| 2-(1-22)-0.25-(2-4)-1.00 | | | | 1.00 | | |
| 2-(1-24)-0.25-(0) | (1-24) | | (4-2) | 0.00 | | |
| 2-(1-24)-0.25-(4-2)-1.00 | | | | 1.00 | | |
| 2-(1-25)-0.25-(0) | (1-25) | | (5-3) | 0.00 | | |
| 2-(1-25)-0.25-(5-3)-1.00 | | | | 1.00 | | |
| 2-(1-28)-0.25-(0) | (1-28) | | (5-4) | 0.00 | | |
| 2-(1-28)-0.25-(5-4)-1.00 | | | | 1.00 | | |

**TABLE 13**

| Nonaqueous Electrolyte Solution No. | Component (III) | | Component (IV) | | Other Solute or Additive Component | |
|---|---|---|---|---|---|---|
| | No. | Conc. (mass%) | Kind | Conc. (mass%) | Kind | Conc. (mass%) in Electrolyte Solution |
| 2-(1-1)-0.25-(0)-LDFBOP-1.00 | (1-1) | 0.25 | (4-1) | 0.00 | LDFBOP | 1.00 |
| 2-(1-1)-0.25-(4-1)-1.00-LDFBOP-1.00 | | | | 1.00 | | |
| 2-(1-1)-0.25-(0)-LDFOB-1.50 | | | (2-1) | 0.00 | LDFOB | 1.50 |
| 2-(1-1)-0.25-(2-1)-1.00-LDFOB-1.50 | | | | 1.00 | | |
| 2-(1-2)-0.25-(D)-LiPO2F2-1.00 | (1-2) | | (3-1) | 0.00 | LiPO₂F₂ | 1.00 |
| 2-(1-2)-0.25-(3-1)-1.00-LiPO2F2-1.00 | | | | 1.00 | | |
| 2-(1-2)-0.25-(0)-LiFSI-2.00 | | | (5-1) | 0.00 | LiFSI | 2.00 |
| 2-(1-2)-0.25-(5-1)-1.00-LiFSI-2.00 | | | | 1.00 | | |
| 2-(1 -12)-0.25-(0)-LDFBOP-1.00 | (1-12) | | (5-2) | 0.00 | LDFBOP | 1.00 |
| 2-(1-12)-0.25-(5-2)-1.00-LDFBOP-1.00 | | | | 1.00 | | |
| 2-(1-12)-0.25-(0)-LDFOB-1.50 | | | (2-3) | 0.00 | LDFOB | 1.50 |
| 2-(1-12)-0.25-(2-3)-1.00-LDFOB-1.50 | | | | 1.00 | | |
| 2-(1-15)-0.25-(0)-LiPO2F2-1.00 | (1-15) | | (2-2) | 0.00 | LiPO₂F₂ | 1.00 |
| 2-(1-15)-0.25-(2-2)-1.00-LiPO2F2-1.00 | | | | 1.00 | | |
| 2-(1-15)-0.25-(0)-LiFSI-2.00 | | | (2-4) | 0.00 | LiFSI | 2.00 |
| 2-(1-15)-0.25-(2-4)-1.00-LiFSI-2.00 | | | | 1.00 | | |

Aluminum laminate type batteries according to Examples 1-40 to 1-77 and Comparative Examples 1-33 to 1-70 were produced in the same manner as in Example 1-1 except for using the nonaqueous electrolyte solutions shown in TABLES 10 and 11. The produced batteries were tested in the same manner as above. The test results are shown in TABLES 14 and 15. In TABLES 14 and 15, the capacity retention rate after 400 cycles and Ni elution amount of the respective Examples are expressed as relative values, with those of the corresponding Comparative Examples in which the component (IV) was not contained being defined as 100, respectively.

**TABLE 14**

| | Nonaqueous Electrolyte Solution No. | Positive Electrode | Negative Electrode | Capacity Retention Rate (Relative Value) After 400 Cycles at 50°C | Ni Elution Amount (Relative Value) After 400 Cycles at 50°C |
|---|---|---|---|---|---|
| Comp. Ex. 1-33 | 1-(1-1)-0.25-(0) | | | 100 | 100 |
| Ex. 1-40 | 1-(1-1)-0.25-(2-1)-1.00 | | | 106 | 92 |
| Comp. Ex. 1-34 | 1-(1-1)-0.25-(0) | | | 100 | 100 |
| Ex. 1-41 | I-(1-i)-0.25-(5-2)-1.00 | | | 105 | 97 |
| Comp. Ex. 1-35 | 1-(1-1)-0.25-(0) | | | 100 | 100 |
| Ex. 1-42 | 1-(1-1)-0.25-(3-1)-1.00 | | | 101 | 98 |
| Comp. Ex. 1-36 | 1-(1-2)-0.25-(0) | | | 100 | 100 |
| Ex. 1-43 | 1-(1-2)-0.25-(5-1)-1.00 | | | 103 | 78 |
| Comp. Ex. 1-37 | 1-(1-2)-0.25-(0) | | | 100 | 100 |
| Ex. 1-44 | 1-(1-2)-0.25-(5-3)-1.00 | | | 104 | 83 |
| Comp. Ex. 1-38 | 1-(1-4)-0.25-(0) | | | 100 | 100 |
| Ex. 1-45 | 1-(1-4)-0.25-(2-2)-1.00 | | | 104 | 75 |
| Comp. Ex. 1-39 | 1-(1-4)-0.25-(0) | | | 100 | 100 |
| Ex. 1-46 | 1-(1-4)-0.25-(4-1)-1.00 | | | 105 | 81 |
| Comp. Ex. 1-40 | 1-(1-10)-0.25-(0) | | | 100 | 100 |
| Ex. 1-47 | 1-(1-10)-0.25-(4-2)-1.00 | | | 103 | 83 |
| Comp. Ex. 1-41 | 1-(1-10)-0.25-(0) | | | 100 | 100 |
| Ex. 1-48 | 1-(1-10)-0.25-(5-4)-1.00 | | | 104 | 80 |
| Comp. Ex. 1-42 | 1-(1-12)-025-(0) | | | 100 | 100 |
| Ex. 1-49 | 1-(1-12)-0.25-(2-3)-1.00 | | | 102 | 70 |
| Comp. Ex. 1-43 | 1-(1-12)-0.25-(0) | | | 100 | 100 |
| Ex. 1-50 | 1-(1-12)-0.25-(5-4)-1.00 | NCM 811 | graphite | 103 | 82 |
| Comp. Ex. 1-44 | 1-(1-15)-0.25-(0) | | | 100 | 100 |
| Ex. 1-51 | 1-(1-15)-0.25-(2-4)-1.00 | | | 102 | 80 |
| Comp. Ex. 1-45 | 1-(1-15)-0.25-(0) | | | 100 | 100 |
| Ex. 1-52 | 1-(1-15)-0.25-(5-1)-1.00 | | | 103 | 85 |
| Comp. Ex. 1-46 | 1-(1-22)-0.25-(0) | | | 100 | 100 |
| Ex. 1-53 | 1-(1-22)-0.25-(2-3)-1.00 | | | 102 | 75 |
| Comp. Ex. 1-47 | 1-(1-22)-0.25-(0) | | | 100 | 100 |
| Ex. 1-54 | 1-(1-22)-0.25-(5-3)-1.00 | | | 104 | 80 |
| Comp. Ex. 1-48 | 1-(1-24)-0.25-(0) | | | 100 | 100 |
| Ex. 1-55 | 1-(1-24)-0.25-(2-4)-1.00 | | | 101 | 82 |
| Comp. Ex. 1-49 | 1-(1-24)-0.25-(0) | | | 100 | 100 |
| Ex. 1-56 | 1-(1-24)-0.25-(4-1)-1.00 | | | 105 | 86 |
| Comp. Ex. 1-50 | 1-(1-25)-0.25-(0) | | | 100 | 100 |
| Ex. 1-57 | 1-(1-25)-0.25-(2-1)-1.00 | | | 106 | 90 |
| Comp. Ex. 1-51 | 1-(1-25)-0.25-(0) | | | 100 | 100 |
| Ex. 1-58 | 1-(1-25)-0.25-(5-2)-1.00 | | | 105 | 94 |
| Comp. Ex. 1-52 | 1-(1-28)-0.25-(0) | | | 100 | 100 |
| Ex. 1-59 | 1-(1-28)-0.25- (2-2) -1.00 | | | 104 | 80 |
| Comp. Ex. 1-53 | 1-(1-28)-0.25-(0) | | | 100 | 100 |
| Ex. 1-60 | 1-(1-28)-0.25-(4-2)-1.00 | | | 103 | 86 |

**TABLE 15**

| | Nonaqueous Electrolyte Solution No. | Positive Electrode | Negative Electrode | Capacity Retention Rate (Relative Value) After 400 Cycles at 50°C | Ni Elution Amount (Relative Value) After 400 Cycles at 50°C |
|---|---|---|---|---|---|
| Comp. Ex. 1-54 | 1-(1-1)-0.25-(0)-LDFBOP-1.00 | | | 100 | 100 |
| Ex. 1-61 | 1-(1-1)-0.25-(2-1)-1.00-LDFBOP-1.00 | | | 106 | 80 |
| Comp. Ex. 1-55 | 1-(1-1)-0.25-(0)-LiPO2F2-1.00 | | | 100 | 100 |
| Ex. 1-62 | 1-(1-1)-0.25-(5-2)-1.00-LiPO2F2-1.00 | | | 108 | 92 |
| Comp. Ex. 1-56 | 1-(1-1)-0.25-(0)-LiFSI-2.00 | | | 100 | 100 |
| Ex. 1-63 | 1-(1-1)-0.25-(4-1)-1.00-LiFSI-2.00 | | | 102 | 90 |
| Comp. Ex. 1-57 | 1-(1-1)-0.25-(0)-LDFOB-1.50 | | | 100 | 100 |
| Ex. 1-64 | 1-(1-1)-0.25-(2-1)-1.00-LDFOB-1.50 | | | 107 | 80 |
| Comp. Ex. 1-58 | 1 -(1 -2)-0.25-(0)-LDFBCP-1.00 | | | 100 | 100 |
| Ex. 1-65 | 1-(1-2)-0.25-(5-1)-1.00-LDFBOP-1.00 | | | 105 | 79 |
| Comp. Ex. 1-59 | 1-(1-2)-0.25-(0)-LiPO2F2-1.00 | | | 100 | 100 |
| Ex. 1-66 | 1-(1-2)-0.25-(5-3)-1.00-LiPO2F2-1.00 | | | 104 | 93 |
| Comp. Ex. 1-60 | 1-(1-2)-0.25-(0)-LiFSI-2.00 | | | 100 | 100 |
| Ex. 1-67 | 1-(1 -2)-0.25-(2-2)-1 .00-LiFSI-2.00 | | | 102 | 92 |
| Comp. Ex. 1-61 | 1-(1-2)-0.25-(0)-LDFOB-1.50 | | | 100 | 100 |
| Ex. 1-68 | 1-(1-2)-0.25-(4-2)-1.00-LDFOB-1.50 | | | 102 | 81 |
| Comp. Ex. 1-62 | 1 -(1 -2)-0.25-(0)-LTFCP-1.00 | | | 100 | 100 |
| Ex. 1-69 | 1-(1-2)-0.25-(3-1)-1.00-LTFOP-1.00 | NCM 811 | graphite | 101 | 95 |
| Comp. Ex. 1-63 | 1-(1-12)-0.25-(0)-LDFBOP-1.00 | | | 100 | 100 |
| Ex. 1-70 | 1-(1-12)-0.25-(2-3)-1.00-LDFBOP-1.00 | | | 102 | 80 |
| Comp. Ex. 1-64 | 1-(1-12)-0.25-(0)-LiPO2F2-1.00 | | | 100 | 100 |
| Ex. 1-71 | 1-(1-12)-0.25-(5-4)-1.00-LiPO2F2-1.00 | | | 104 | 92 |
| Comp. Ex. 1-65 | 1-(1-12)-0.25-(0)-LiFSI-2.00 | | | 100 | 100 |
| Ex. 1-72 | 1-(1-12)-0.25-(2-1)-1.00-LiFSI-2.00 | | | 105 | 90 |
| Comp. Ex. 1-66 | 1 -(1 -12)-0.25-(0)-LDFOB-1.50 | | | 100 | 100 |
| Ex. 1-73 | 1-(1-12)-0.25-(2-2)-1.00-LDFOB-1.50 | | | 103 | 85 |
| Comp. Ex. 1-67 | 1 -(1 -15)-0.25-(0)-LDFBCP-1.00 | | | 100 | 100 |
| Ex. 1-74 | 1-(1-15)-0.25-(2-4)-1.00--LDFBOP-1.00 | | | 101 | 78 |
| Comp. Ex. 1-68 | 1-(1-15)-0.25-(0)-LiPO2F2-1.00 | | | 100 | 100 |
| Ex. 1-75 | 1-(1-15)-0.25-(5-1)-1.00-LiPO2F2-1.00 | | | 103 | 91 |
| Comp. Ex. 1-69 | 1-(1-15)-0.25-(0)-LiFSI-2.00 | | | 100 | 100 |
| Ex. 1-76 | 1-(1-15)-0.25-(5-2)-1.00-LiFSI-2.D0 | | | 107 | 90 |
| Comp. Ex. 1-70 | 1-(1-15)-0.25-(0)-LDFOB-1.50 | | | 100 | 100 |
| Ex. 1-77 | 1-(1-15)-0.25-(4-1)-1.00-LDFOB-1.50 | | | 103 | 83 |

Aluminum laminate type batteries according to Examples 2-19 to 2-36 and Comparative Examples 2-19 to 2-36 were produced in the same manner as in Example 1-1 except for using the nonaqueous electrolyte solutions shown in TABLES 12 and 13. The produced batteries were tested in the same manner as above. The test results are shown in TABLES 16 and 17. In TABLES 16 and 17, the capacity retention rate after 400 cycles and Ni elution amount of the respective Examples are expressed as relative values, with those of the corresponding Comparative Examples in which the component (IV) was not contained being defined as 100, respectively.

**TABLE 16**

| | Nonaqueous Electrolyte Solution No. | Positive Electrode | Negative Electrode | Capacity Retention Rate (Relative Value) After 400 Cycles at 50°C | Ni Elution Amount (Relative Value) After 400 Cycles at 50°C |
|---|---|---|---|---|---|
| Comp. Ex. 2-19 | 2-(1-1)-0.25-(0) | | | 100 | 100 |
| Ex. 2-19 | 2-(1-1)-0.25-(4-1)-1.00 | | | 103 | 83 |
| Comp. Ex. 2-20 | 2-(1-2)-0.25-(0) | | | 100 | 100 |
| Ex. 2-20 | 2-(1-2)-0.25-(2-1)-1.00 | | | 107 | 82 |
| Comp. Ex. 2-21 | 2-(1-4)-0.25-(0) | | | 100 | 100 |
| Ex. 2-21 | 2-(1-4)-0.25-(5-1)-1.00 | | | 106 | 86 |
| Comp. Ex. 2-22 | 2-(1-10)-0.25-(0) | | | 100 | 100 |
| Ex. 2-22 | 2-(1-10)-0.25-(2-3)-1.00 | | | 102 | 80 |
| Comp. Ex. 2-23 | 2-(1-12)-0.25-(0) | | | 100 | 100 |
| Ex. 2-23 | 2-(1-12)-0.25-(3-1)-1.00 | NCA | graphite | 102 | 90 |
| Comp. Ex. 2-24 | 2-(1-15)-0.25-(0) | | | 100 | 100 |
| Ex. 2-24 | 2-(1-15)-0.25-(2-2)-1.00 | | | 103 | 85 |
| Comp. Ex. 2-25 | 2-(1-22)-0.25-(0) | | | 100 | 100 |
| Ex. 2-25 | 2-(1-22)-0.25-(2-4)-1.00 | | | 101 | 78 |
| Comp. Ex. 2-26 | 2-(1-24)-0.25-(0) | | | 100 | 100 |
| Ex. 2-26 | 2--(1--24)-0.25-(4-2)-1.00 | | | 103 | 80 |
| Comp. Ex. 2-27 | 2-(1-25)-0.25-(0) | | | 100 | 100 |
| Ex. 2-27 | 2-(1-25)-0.25-(5-3)-1.00 | | | 105 | 81 |
| Comp. Ex. 2-28 | 2-(1-28)-0.25-(0) | | | 100 | 100 |
| Ex. 2-28 | 2-(1-28)-0.25-(5-4)-1.00 | | | 105 | 81 |

**TABLE 17**

| | Nonaqueous Electrolyte Solution No. | Positive Electrode | Negative Electrode | Capacity Retention Rate (Relative Value) After 400 Cycles at 50°C | Ni Elution Amount (Relative Value) After 400 Cycles at 50°C |
|---|---|---|---|---|---|
| Comp. Ex. 2-29 | 2-(1-1)-0.25-(0)-LDFBOP-1.00 | NCA | graphite | 100 | 100 |
| Ex. 2-29 | 2-(1-1)-0.25-(4-1)-1.00-LDFBOP-1.00 | | | 103 | 86 |
| Comp. Ex. 2-30 | 2-(1-1)-0.25-(0)-LDFOB-1.50 | | | 100 | 100 |
| Ex. 2-30 | 2-(1-1)-0.25-(2-1)-1.00-LDFOB-1.50 | | | 108 | 88 |
| Comp. Ex. 2-31 | 2-(1-2)-0.25-(0)-LiPO2F2-1.00 | | | 100 | 100 |
| Ex. 2-31 | 2-(1-2)-0.25-(3-1)-1.00-LiPO2F2-1.00 | | | 102 | 92 |
| Comp. Ex. 2-32 | 2-(1-2)-0.25-(0)-LiFSI-2.00 | | | 100 | 100 |
| Ex. 2-32 | 2-(1-2)-0.25-(5-1)-1.00-LiFSI-2.00 | | | 106 | 90 |
| Comp. Ex. 2-33 | 2-(1-12)-0.25-(0)-LDFBOP-1.00 | | | 100 | 100 |
| Ex. 2-33 | 2-(1-12)-0.25-(5-2}-1.00-LDFBOP-1.00 | | | 110 | 83 |
| Comp. Ex. 2-34 | 2-(1-12)-0.25-(0)-LDFOB-1.50 | | | 100 | 100 |
| Ex. 2-34 | 2-(1-12)-0.25-(2-3)-1.00-LDFOB-1.50 | | | 103 | 82 |
| Comp. Ex. 2-35 | 2-(1-15)-0.25-(0)-LiPO2F2-1.00 | | | 100 | 100 |
| Ex. 2-35 | 2-(1-15)-0.25-(2-2)-1.00-LiPO2F2-1.00 | | | 105 | 93 |
| Comp. Ex. 2-36 | 2-(1-15)-0.25-(0)-LiFSI-2.00 | | | 100 | 100 |
| Ex. 2-36 | 2-(1-15)-0.25-(2-4)-1.00-LiFSI-2.Qβ | | | 102 | 90 |

As is apparent from the test results shown in TABLE 14, an improvement of the capacity retention rate and a suppression of the Ni elution were clearly observed with the addition of 1.00 mass% of the component (IV), as compared to without the addition of the component (IV), even when the O=S-F bond-containing compound of the general formula (2), the O=P-F bond-containing compound of the general formula (3), the P(=O)F₂ bond-containing compound of the general formula (4) or the compound of the general formula (5) was used in place of LiSO₃F.

It is confirmed from the test results shown in TABLE 15 that the above-mentioned effects were obtained even when the other solute or additive component was used.

It is further confirmed from the test results shown in TABLES 16 and 17 that, even when the positive electrode was changed to the NCA positive electrode, the above-mentioned results were obtained as in the case of using the NCM811 positive electrode.

Nonaqueous electrolyte solutions were respectively prepared in the same manner as above by adding the components (III) and (IV) into the reference electrolyte solution 1 at concentrations shown in TABLE 18 and dissolving the added components in the reference electrolyte solution with stirring.

**TABLE 18**

| Nonaqueous Electrolyte Solution No. | Component (III) | | Component (IV) | | Other Solute or Additive Component | |
|---|---|---|---|---|---|---|
| | No. | Conc. (mass%) | Kind | Conc. (mass%) | Kind | Conc. (mass%) in Electrolyte Solution |
| 1-(1-1)-0.25-LiSO3F-1.00 | (1-15) | 0.25 | LiSO₃F | 1.00 | none | |
| 1-(1-1)-0.25-(2-1)-1.00 | | | (2-1) | | | |
| 1-(1-1)-0.25-(2-2)-1,00 | | | (2-2) | | | |
| 1-(1-1)-0.25-(2-3)-1.00 | | | (2-3) | | | |
| 1-(1-1)-0.25-(2-4)-1.00 | | | (2-4) | | | |
| 1-(1-1)-0.25-(4-1)-1.00 | | | (4-1) | | | |
| 1-(1-1)-0.25-(4-2)-1.00 | | | (4-2) | | | |
| 1-(1-1)-0.25-(5-1)-1.00 | | | (5-1) | | | |
| 1-(1-1)-0.25-(5-2)-1.00 | | | (5-2) | | | |
| 1-(1-1)-0.25-(5-3)-1.00 | | | (5-3) | | | |
| 1-(1-1)-0.25-(5-4)-1.00 | | | (5-4) | | | |
| 1-(1-1)-0.25-(3-1)-1.00 | | | (3-1) | | | |

Aluminum laminate type batteries according to Examples 3-1 to 3-12 were produced in the same manner as in Example 1-1 except for using the nonaqueous electrolyte solutions shown in TABLE 18. The produced batteries were tested in the same manner as above. The test results are shown in TABLE 19. In TABLE 19, the capacity retention rate after 400 cycles and Ni elution amount of the respective Examples are expressed as relative values, with those of Example 3-12 being defined as 100, respectively.

**TABLE 19**

| | Nonaqueous Electrolyte Solution No. | Positive Electrode | Negative Electrode | Capacity Retention Rate (Relative Value) After 400 Cycles at 50°C | Ni Elution Amount (Relative Value) After 400 Cycles at 50°C |
|---|---|---|---|---|---|
| Ex. 3-1 | 1-(1-1)-0.25-LiSO3F-1.00 | NCM 811 | graphite | 103 | 98 |
| Ex. 3-2 | 1-(1-1)-0.25-(2-1)-1.00 | | | 105 | 93 |
| Ex. 3-3 | 1-(1-1)-0.25-(2-2)-1.00 | | | 104 | 95 |
| Ex. 3-4 | 1-(1-1)-0.25-(2-3)-1.00 | | | 102 | 96 |
| Ex. 3-5 | 1--(1-1)-0.25-(2-4)-1.00 | | | 101 | 95 |
| Ex. 3-6 | 1-(1-1)-0.25-(4-1)-1.00 | | | 105 | 101 |
| Ex. 3-7 | 1-(1-1)-0.25-(4-2)-1.00 | | | 104 | 100 |
| Ex. 3-8 | 1-(1-1)-0.25-(5-1)-1.00 | | | 103 | 90 |
| Ex. 3-9 | 1-(1-1)-0.25-(5-2)-1.00 | | | 104 | 88 |
| Ex. 3-10 | 1-(1-1)-0.25-(5-3)-1.00 | | | 103 | 93 |
| Ex. 3-11 | 1-(1-1)-0.25-(5-4)-1.00 | | | 102 | 92 |
| Ex. 3-12 | 1-(1-1)-0.25-(3-1)-1.00 | | | 100 | 100 |

As is apparent from the test results shown in TABLE 19, the capacity retention rate after 400 cycles and Ni elution amount of Examples 3-1 to 3-11 in which any of lithium fluorosulfonate and the compounds (2-1) to (2-4), (4-1) to (4-2) and (5-1) to (5-4) was used as the component (IV) were better than those of Example 3-12 in which the compound (3-1) was used as the component (IV). It is thus obvious that the capacity retention rate after 400 cycles and suppression of the Ni elution were achieved in a well-balanced manner with the use of at least one kind selected from the group consisting of lithium fluorosulfonate, the O=S-F bond-containing compound of the general formula (2), the P(=O)F₂ bond-containing compound of the general formula (4) and the compound of the general formula (5) as the component (IV)

Further, nonaqueous electrolyte solutions were respectively prepared in the same manner as above by adding the components (III) and (IV) into the reference electrolyte solution 1 at concentrations shown in TABLE 20 and dissolving the added components in the reference electrolyte solution with stirring.

**TABLE 20**

| Nonaqueous Electrolyte Solution No. | Component (III) | | Component (IV) | | Other Solute or Additive Component | |
|---|---|---|---|---|---|---|
| | No. | Conc. (mass%) | Kind | Conc. (mass%) | Kind | Conc. (mass%) in Electrolyte Solution |
| 1-(0)-LiSC3F-1.00 | none | | | | | |
| 1-(1-1)-0.25-LiSO3F-1.00 | (1-1) | | | | | |
| 1-(1-2)-0.25-LiSO3F-1.00 | (1-2) | | | | | |
| 1-(1-3)-0.25-LiSC3F-1.00 | (1-3) | | | | | |
| 1-(1-4)-0.25-LiSO3F-1.00 | (1-4) | | | | | |
| 1-(1-5)-0.25-LiSO3F-1.00 | (1-5) | | | | | |
| 1-(1-6)-0.25-LiSO3F-1.00 | (1-6) | | | | | |
| 1-(1-7)-0.25-LiSC3F-1.00 | (1-7) | | | | | |
| 1-(1-8)-0.25-LiSO3F-1.00 | (1-8) | | | | | |
| 1-(1-9)-0.25-LiSO3F-1.00 | (1-9) | | | | | |
| 1-(1-10)-0.25-LiSO3F-1.00 | (1-10) | | | | | |
| 1-(1-11)-0.25-LiSO3F-1.00 | (1-11) | | | | | |
| 1-(1-12)-0.25-LiSO3F-1.00 | (1-12) | | | | | |
| 1-(1-13)-0.25-LiSO3F-1.00 | (1-13) | | | | | |
| 1-(1-14)-0.25-LiSO3F-1.00 | (1-14) | 0.25 | LiSO₃F | 1.00 | none | |
| 1-(1-15)-0.25-LiSO3F-1.00 | (1-15) | | | | | |
| 1-(1-16)-0.25-LiSO3F-1.00 | (1-16) | | | | | |
| 1-(1-17)-0.25-LiSO3F-1.00 | (1-17) | | | | | |
| 1-(1-18)-0.25-LiSO3F-1.00 | (1-18) | | | | | |
| 1-(1-19)-0.25-LiSO3F-1.00 | (1-19) | | | | | |
| 1-(1-20)-0.25-LiSO3F-1.00 | (1-20) | | | | | |
| 1-(1-21)-0.25-LiSO3F-1.00 | (1-21) | | | | | |
| 1-(1-22)-0.25-LiSO3F-1.00 | (1-22) | | | | | |
| 1-(1-23)-0.25-LiSO3F-1.00 | (1-23) | | | | | |
| 1-(1-24)-0.25-LiSO3F-1.00 | (1-24) | | | | | |
| 1-(1-25)-0.25-LiSO3F-1.00 | (1-25) | | | | | |
| 1-(1-26)-0.25-LiSO3F-1.00 | (1-26) | | | | | |
| 1-(1-27)-0.25-LiSO3F-1.00 | (1-27) | | | | | |
| 1-(1-28)-0.25-LiSO3F-1.00 | (1-28) | | | | | |

Aluminum laminate type batteries according to Examples 4-1 to 4-28 and Comparative Example 4-1 were produced in the same manner as in Example 1-1 except for using the nonaqueous electrolyte solutions shown in TABLE 20. The produced batteries were tested in the same manner as above. The test results are shown in TABLE 21. In TABLE 21, the capacity retention rate after 400 cycles and Ni elution amount of the respective Examples are expressed as relative values, with those of Comparative Example 4-1 being defined as 100, respectively.

**TABLE 21**

| | Nonaqueous Electrolyte Solution No. | Positive Electrode | Negative Electrode | Capacity Retention Rate (Relative Value) After 400 Cycles at 50°C |
|---|---|---|---|---|
| Comp. Ex. 4-1 | 1-(0)-LiSO3F-1.00 | | | 100 |
| Ex. 4-1 | 1-(1-1)-0.25-LiSO3F-1.00 | | | 110 |
| Ex. 4-2 | 1-(1-2)-0.25-LiSO3F-1.00 | | | 109 |
| Ex. 4-3 | 1-(1-3)-0.25-LiSO3F-1.00 | | | 103 |
| Ex. 4-4 | 1-(1-4)-0.25-LiSO3F-1.00 | | | 105 |
| Ex. 4-5 | 1-(1-5)-0.25-LiSO3F-1.00 | | | 101 |
| Ex. 4-6 | 1-(1-6)-0.25-LiSO3F-1.00 | | | 103 |
| Ex. 4-7 | 1-(1-7)-0.25-LiSO3F-1.00 | | | 104 |
| Ex. 4-8 | 1-(1-8)-0.25-LiSO3F-1.00 | | | 103 |
| Ex. 4-9 | 1-(1-9)-0.25-LiSO3F-1.00 | | | 105 |
| Ex. 4-10 | 1-(1-10)-0.25-LiSO3F-1.00 | | | 106 |
| Ex. 4-11 | 1-(1-11)-0.25-LiSO3F-1.00 | | | 104 |
| Ex. 4-12 | 1-(1-12)-0.25-LiSO3F-1.00 | | | 110 |
| Ex. 4-13 | 1-(1-13)-0.25-LiSO3F-1.00 | | | 103 |
| Ex. 4-14 | 1-(1-14)-0.25-LiSO3F-1.00 | NCM 811 | graphite | 105 |
| Ex. 4-15 | 1-(1-15)-0.25-LiSO3F-1.00 | | | 108 |
| Ex. 4-16 | 1-(1-16)-0.25-LiSO3F-1.00 | | | 103 |
| Ex. 4-17 | 1-(1-17)-0.25-LiSO3F-1.00 | | | 104 |
| Ex. 4-18 | 1-(1-18)-0.25-LiSO3F-1.00 | | | 103 |
| Ex. 4-19 | 1-(1-19)-0.25-LiSO3F-1.00 | | | 103 |
| Ex. 4-20 | 1-(1-20)-0.25-LiSO3F-1.00 | | | 103 |
| Ex. 4-21 | 1-(1-21)-0.25-LiSO3F-1.00 | | | 104 |
| Ex. 4-22 | 1-(1-22)-0.25-LiSO3F-1.00 | | | 106 |
| Ex. 4-23 | 1-(1-23)-0.25-LiSO3F-1.00 | | | 104 |
| Ex. 4-24 | 1-(1-24)-0.25-LiSO3F-1.00 | | | 107 |
| Ex. 4-25 | 1-(1-25)-0.25-LiSO3F-1.00 | | | 106 |
| Ex. 4-26 | 1-(1-26)-0.25-LiSO3F-1.00 | | | 104 |
| Ex. 4-27 | 1-(1-27)-0.25-LiSO3F-1.00 | | | 103 |
| Ex. 4-28 | 1-(1-28)-0.25-LiSO3F-1.00 | | | 105 |

As is apparent from the test results shown in TABLE 21, an improvement of the durability (capacity retention rate after 400 cycles) was observed in Examples 4-1 to 4-28 in which the compounds (1-1) to (1-28) were respectively used as compared to Comparative Example 4-1 in which the component (III) was not contained. In Examples respectively using the compounds (1-1) to (1-4) and (1-6) to (1-28), each of which corresponds to the case where a in the general formula (1) is 3 or 4, the durability (capacity retention rate after 400 cycles) was improved greatly by 3% or more. Among others, a greater improvement of the durability (capacity retention rate after 400 cycles) was observed in Examples in which the compounds (1-1), (1-2), (1-4), (1-10), (1-12), (1-15), (1-22), (1-24), (1-25) and (1-22) were respectively used.

A particularly great improvement of the durability (capacity retention rate after 400 cycles) was observed in Examples in which the compounds (1-1), (1-2), (1-12) and (1-15) were respectively used.

Next, nonaqueous electrolyte batteries using nonaqueous electrolyte solutions according to the second embodiment were produced and tested as follows.

### [Formation ofNCM811 Positive Electrodes]

A positive electrode material mixture paste was prepared by mixing 91.0 mass% of a LiNi_{0.8}Mn_{0.1}Co_{0.1}O₂ powder with 4.5 mass% of polyvinylidene fluoride (PVDF) as a binder and 4.5 mass% of acetylene black as a conductive agent and adding N-methyl-2-pyrrolidone (NMP) to the mixed powder. NCM811 positive electrodes for test were each formed by applying the prepared paste to both surfaces of an aluminum foil (A1085), subjecting the applied paste layer to drying and pressing, and then, punching the resulting electrode body into a size of 4 × 5 cm.

### [Formation of Silicon-Containing Graphite Negative Electrodes]

A negative electrode material mixture paste was prepared by mixing 85 mass% of an artificial graphite powder with 7 mass% of nanosilicon, 3 mass% of a conductive agent (HS-100), 2 mass% of carbon nanotube (VGCF), 2 mass% of styrene-butadiene rubber, 1 mass% of sodium carboxymethylcellulose and water. Silicon-containing graphite negative electrodes for test were each formed by applying the prepared paste to one surface of a copper foil, subjecting the applied paste to drying and pressing, and then, punching the resulting electrode body into a size of 4 × 5 cm.

### [Preparation of LiPF₆ Solution]

In a glove box of dew point -60°C or lower, EC, FEC, EMC and DMC were mixed together at a volume ratio of 2:1:3:4. Then, LiPF₆ was added at a concentration of 1.0 M into the mixed solvent while maintaining the internal temperature at 40°C or lower. A LiPF₆ solution was obtained by completely dissolving the added LiPF₆ in the mixed solvent.

### [Preparation of Electrolyte Solutions]

Into the LiPF₆ solution, the silicon compound (1-2) was added in an amount of 0.1 mass% and dissolved by stirring for 1 hour. This solution was used as a nonaqueous electrolyte solution 1-(1-2)-0.1.

The silicon compound (1-2) and the cyclic sulfur compound (6-1) were added in amounts of 0.1 mass% and 1.0 mass%, respectively, into the LiPF₆ solution and dissolved by stirring for 1 hour. This solution was used as a nonaqueous electrolyte solution 1-(1-2)-0.1-(6-1)-1.0.

Further, nonaqueous electrolyte solutions were respectively prepared in the same manner as above by adding the components (III) and (IV) into the LiPF₆ solution at concentrations shown in TABLES 22 and 23 and dissolving the added components with stirring.

In the respective tables, PRS refers to 1,3-propenesultone; and MMDS refers to methylene methane disulfonate.

**TABLE 22**

| Nonaqueous Electrolyte Solution No. | Combination of Silicon Compound (1) and Sulfur Compound (6) | | | | Other Solute or Additive Component | |
|---|---|---|---|---|---|---|
| | Silicon Compound (1) | | Sulfur Compound (6) | | Kind | Conc. (mass%) in Electrolyte Solution |
| | No. | Conc. (mass%) | No. | Conc. (mass%) | | |
| 1-(1-2)-0.1 | (1-2) | 0.1 | none | - | | |
| 1-(1-2)-0.1-(PRS)-1.0 | | | PRS | 1.0 | | |
| 1-(1-2)-0.1-(6-1)-1.0 | | | (6-1) | 1.0 | | |
| 1-(1-2)-0.25 | | 0.25 | none | - | | |
| 1-(1-2)-0.25-(PRS)-1.0 | | | PRS | 1.0 | | |
| 1-(1-2)-0.25-(6-1)-0.5 | | | (6-1) | 0.5 | | |
| 1-(1-2)-0.25-(6-1)-1.0 | | | | 1.0 | | |
| 1-(1-2)-0.25-(6-1)-1.5 | | | | 1.5 | | |
| 1-(1-2)-0.25-(6-5)-1.0 | | | (6-5) | 1.0 | | |
| 1-(1-2)-0.25-(6-11)-1.0 | | | (6-11) | | | |
| 1-(1-2)-0.25-(6-19)-1.0 | | | (6-19) | | | |
| 1-(1-2)-0.25-(6-31)-1.0 | | | (6-31) | | | |
| 1-(1-2)-0.5 | | 0.5 | none | - | | |
| 1-(1-2)-0.5-(PRS)-1.0 | | | PRS | 1.0 | | |
| 1-(1-2)-0.5-(6-1)-1.0 | | | (6-1) | 1.0 | | |
| 1-(1-9)-0.1 | (1-9) | 0.1 | none | - | | |
| 1-(1-9)-0.1-(PRS)-1.0 | | | PRS | 1.0 | | |
| 1-(1-9)-0.1-(6-11)-1.0 | | | (6-11) | 1.0 | | |
| 1-(1-9)-0.25 | | 0.25 | none | - | | |
| 1-(1-9)-0.25-(PRS)-1.0 | | | PRS | 1.0 | | |
| 1-(1-9)-0.25-(6-11)-0.5 | | | (6-11) | 0.5 | | |
| 1-(1-9)-0.25-(6-11)-1.0 | | | | 1.0 | | |
| 1-(1-9)-0.25-(6-11)-1.5 | | | | 1.5 | none | |
| 1-(1-9)-0.25-(6-1)-1.0 | | | (6-1) | 1.0 | | |
| 1-(1-9)-0.25-(6-5)-1.0 | | | (6-5) | | | |
| 1-(1-9)-0.25-(6-21)-1.0 | | | (6-21) | | | |
| 1-(1-9)-0.25-(6-38)-1.0 | | | (6-38) | | | |
| 1-(1-9)-0.5 | | 0.5 | none | - | | |
| 1-(1-9)-0.5-(PRS)-1.0 | | | PRS | 1.0 | | |
| 1-(1-9)-0.5-(6-11)-1.0 | | | (6-11) | 1.0 | | |
| 1-(1-22)-0.1 | (1-22) | 0.1 | none | - | | |
| 1-(1-22)-0.1-(PR5)-1.0 | | | PRS | 1.0 | | |
| 1-(1-22)-0.1-(8-5)-1.0 | | | (6-5) | 1.0 | | |
| 1-(1-22)-0.25 | | 0.25 | none | - | | |
| 1-(1-22)-0.25-(PRS)-1.0 | | | PRS | 1.0 | | |
| 1-(1-22)-0.25-(6-5)-0.5 | | | (6-5) | 0.5 | | |
| 1-(1-22)-0.25-(6-5)-1 .0 | | | | 1.0 | | |
| 1-(1-22)-0.25-(6-5)-1 .5 | | | | 1.5 | | |
| 1-(1-22)-0.25-(6-1)-1.0 | | | (6-1) | 1.0 | | |
| 1-(1-22)-0.25-(6-11)-1.0 | | | (6-11) | | | |
| 1-(1-22)-0.25-(6-22)-1.0 | | | (6-22) | | | |
| 1-(1-22)-0.25-(6-40)-1.0 | | | (6-40) | | | |
| 1-(1-22)-0.5 | | 0.5 | none | - | | |
| 1-(1-22)-0.5-(PRS)-1.0 | | | PRS | 1.0 | | |
| 1-(1-22)-0.5-(6-5)-1.0 | | | (6-5) | 1.0 | | |

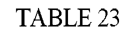

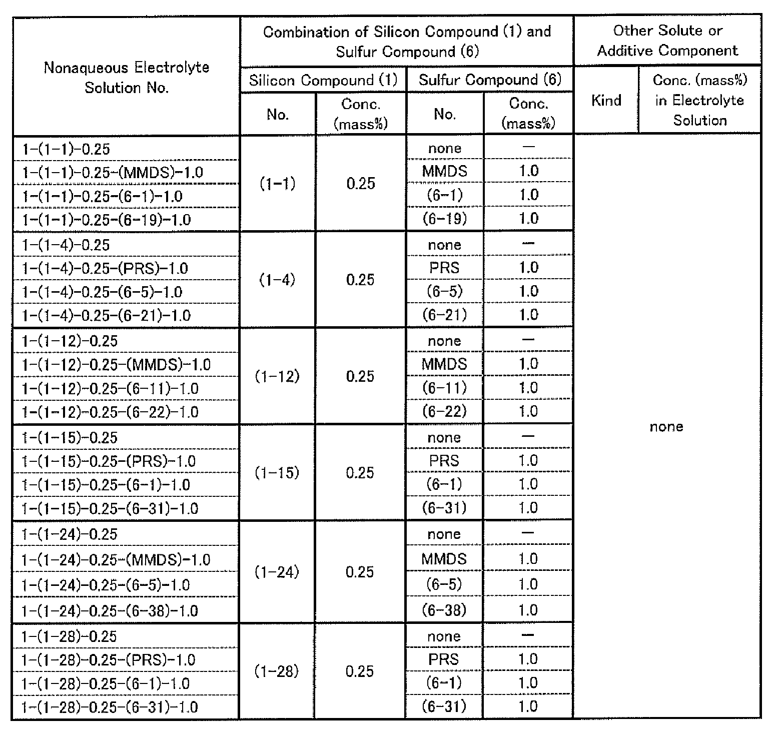

Furthermore, nonaqueous electrolyte solutions were respectively prepared in the same manner as above by adding the components (III) and (IV) and the other solute or additive component into the LiPF₆ solution at concentrations shown in TABLE 24 and dissolving the added components with stirring.

**TABLE 24**

| Nonaqueous Electrolyte Solution No. | Combination of Silicon Compound (1) and Sulfur Compound (6) | | | | Other Solute or Additive Component | |
|---|---|---|---|---|---|---|
| | Silicon Compound (1) | | Sulfur Compound (6) | | Kind | Conc. (mass%) in Electrolyte Solution |
| | No. | Conc. (mass%) | No. | Conc. (mass%) | | |
| 1-(1-2)-0.25-(6-1)-1.0-LiSO₃F-1.0 | (1-2) | 0.25 | (6-1) | 1.0 | LiSO₃F | 1.0 |
| 1-(1-2)-0.25-(6-1)-1.0-LDFOB-1.0 | | | | | LDFOB | |
| 1-(1-2)-0.25-(6-11)-1.0-LiPO₂F₂-1.0 | | | (6-11) | | LiPO₂F₂ | |
| 1-(1-2)-0.25-(6-11)-1.0-LDFBOP -1.0 | | | | | LDFBOP | |
| 1-(1-9)-0.25-(6-11)-1.0-LiSO₃F -1.0 | (1-9) | 0.25 | (6-11) | 1.0 | LiSO₃F | 1.0 |
| 1-(1-9)-0.25-(6-11)-1.0-LDFOB-1.0 | | | | | LDFOB | |
| 1-(1-9)-0.25-(6-21)-1.0-LiPO₂F₂-1.0 | | | (6-21) | | LiPO₂F₂ | |
| 1-(1-9)-0.25-(6-21)-1.0-LDFBOP -1.0 | | | | | LDFBOP | |
| 1-(1-22)-0.25-(6-5)-1.0-LiSO₃F -1.0 | (1-22) | 0.25 | (6-5) | 1.0 | LiSO₃F | 1.0 |
| 1-(1-22)-0.25-(6-5)-1.0-LDFOB-10 | | | | | LDFOB | |
| 1-(1-22)-0.25-(6-22)-1.0-LiPO₂F₂-1.0 | | | (6-22) | | LiPO₂F₂ | |
| 1-(1-22)-0.25-(6-22)-1.0-LDFBOP -1.0 | | | | | LDFBOP | |
| 1-(1-1)-0.25-(6-1)-1.0-LiSO₃F -1.0 | (1-1) | 0.25 | (6-1) | 1.0 | LiSO₃F | 1.0 |
| 1-(1-1)-0.25-(6-1)-1.0-LDFOB-1.0 | | | | | LDFOB | |
| 1-(1-4)-0.25-(6-5)-1.0-LiPO₂F₂-1.0 | (1-4) | 0.25 | (6-5) | 1.0 | LiPO₂F₂ | 1.0 |
| 1-(1-4)-0.25-(6-5)-1.0-LDFBOP -1.0 | | | | | LDFBOP | |
| 1-(1-12)-0.25-(6-1)-1.0-LiSO₃F -1.0 | (1-12) | 0.25 | (6-11) | 1.0 | LiSO₃F | 1.0 |
| 1-(1-12)-0.25-(6-11)-1.0-LDFOB-1.0 | | | | | LDFOB | |
| 1-(1-15)-0.25-(6-1)-1.0-LiPO₂F₂-1.0 | (1-15) | 0.25 | (6-1) | 1.0 | LiPO₂F₂ | 1.0 |
| 1-(1-15)-0.25-(6-1)-1.0-LDFBOP -1.0 | | | | | LDFBOP | |
| 1-(1-24)-0.25-(6-5)-1.0-LiSO₃F -1.0 | (1-24) | 0.25 | (6-5) | 1.0 | LiSO₃F | 1.0 |
| 1-(1-24)-0.25-(6-5)-1.0-LDFOB-1.0 | | | | | LDFOB | |
| 1-(1-28)-0.25-(6-1)-1.0-LiPO₂F₂-1.0 | (1-28) | 0.25 . | (6-1) | 1.0 | LiPO₂F₂ | 1.0 |
| 1-(1-28)-0.25-(6-1)-1.0-LDFBOP -1.0 | | | | | LDFBOP | |

### [50°C Storage Stability Test of Electrolyte Solutions]

Into a 250-ml stainless bottle (in which a body and a cap were made of SUS304 and acid-washed; and a packing was made of a trafluoroethylene-perfluorovinyl ether copolymer), 150 mL of each of the nonaqueous electrolyte solution was put. The bottle was sealed and then stored in a thermostat of 50°C. After the lapse of one month, the bottle was taken out from the thermostat and left still at room temperature for 24 hours. Subsequently, the Hazen color number (APHA) of the electrolyte solution was measured with a Hazen meter (TZ manufactured by Nippon Denshoku Industries Co., Ltd.).

### [Production of Nonaqueous Electrolyte Batteries]

In an argon atmosphere of dew point -50°C or lower, the above-formed NCM811 positive electrode to which terminals had been welded was stacked between two sheets of polyethylene separator film (5 × 6 cm), followed by stacking two of the above-formed silicon-containing graphite negative electrodes to which terminals had been welded on outer sides of the positive electrode-separator stack such that the negative electrode active material layers were respectively opposed to the positive electrode active material layers. Into an aluminum laminate with one side open, the thus-obtained electrode assembly was placed. The nonaqueous electrolyte solution was then charged, under vacuum, into the aluminum laminate bag. After that, the open side of the aluminum laminate bag was sealed by heat.

By the above-mentioned procedure, aluminum laminate type batteries according to Examples and Comparative Examples were produced. The nonaqueous electrolyte solutions used in the respective batteries were those shown in TABLES 22 to 24. Further, the nonaqueous electrolyte solutions used were new ones (on which the above [50°C Storage Stability Test of Electrolyte Solutions] was not performed).

### [Initial Charging and Discharging]

The above-produced batteries had a capacity of 75 mAh as normalized by the weight of the positive electrode active material.

Each of the batteries was placed in a thermostat of 25°C and, in this state, was connected to a charging/discharging device. Then, the battery was charged to 4.2 V at a charging rate of 0.2 C (i.e. a current value with which the battery was fully charged for 5 hours). After the voltage of the battery was maintained at 4.2 V for 1 hour, the battery was discharged to 3.0 V at a discharging rate of 0.2 C. Assuming this charging and discharging operation as one cycle of charging and discharging, the batteries was stabilized by performing total three cycles of charging and discharging.

### [Recovery Capacity Measurement Test After Storage for 2 Weeks at 70°C]

After the battery was charged to 4.2 V at a charging rate of 0.2 C, the battery was disconnected from the charging/discharging device and placed in a thermostat of 70°C. After the lapse of 2 weeks, the battery was taken out from the thermostat and left still at room temperature for 24 hours. Then, the battery was discharged to 3.0 V at a discharging rate of 0.2 C. Subsequently, the battery was charged to 4.2 V at a charging rate of 0.2 C and discharged to 3.0 V at a discharging rate of 0.2 C. The capacity of the battery obtained by this discharging operation was determined as a recovery capacity.

The 50°C storage stability test results of the above electrolyte solutions and the recovery capacity measurement test results of the batteries with those electrolyte solutions are shown in TABLES 25 and 26. The recovery capacity of the batteries with the electrolyte solutions in each of which the cyclic sulfur compound (6), PSR or MMDS was contained is expressed as a relative value, with the recovery capacity of the corresponding battery with the electrolyte solution in which the cyclic sulfur compound was not contained (e.g. Comparative Example 5-1, 5-3, 5-5 etc.) being defined as 100.

**TABLE 25**

| | Nonaqueous Electrolyte Solution No. | APHA After 1 Month at 50°C | Recovery Capacity (Relative Value) After 2 Weeks at 70°C |
|---|---|---|---|
| Comp. Ex. 5-1 | 1-(1-2)-0.1 | 38 | 100 |
| Comp. Ex. 5-2 | 1-(1-2)-0.1-(PRS)-1.0 | 103 | 123 |
| Ex. 5-1 | 1-(1-2)-0.1-(6-1)-1.0 | 35 | 120 |
| Comp. Ex. 5-3 | 1-(1-2)-0.25 | 48 | 100 |
| Comp. Ex. 5-4 | 1-(1-2)-0.25-(PRS)-1.0 | 115 | 118 |
| Ex. 5-2 | 1-(1-2)-0.25-(6-1)-0.5 | 45 | 110 |
| Ex. 5-3 | 1-(1-2)-0.25-(6-1)-1.0 | 46 | 116 |
| Ex. 5-4 | 1-(1-2)-0.25-(6-1)-1.5 | 50 | 123 |
| Ex. 5-5 | 1-(1-2)-0.25-(6-5)-1.0 | 49 | 120 |
| Ex. 5-6 | 1-(1-2)-0.25-(6-11)-1.0 | 47 | 117 |
| Ex. 5-7 | 1-(1-2)-0.25-(6-19)-1.0 | 40 | 113 |
| Ex. 5-8 | 1-(1-2)-0.25-(6-31)-1.0 | 45 | 118 |
| Comp. Ex. 5-5 | 1-(1-2)-0.5 | 55 | 100 |
| Comp. Ex. 5-6 | 1-(1-2)-0.5-(PRS)-1.0 | 120 | 110 |
| Ex. 5-9 | 1-(1-2)-0.5-(6-1)-1.0 | 53 | 110 |
| Comp. Ex. 6-1 | 1-(1-9)-0.1 | 35 | 100 |
| Comp. Ex. 6-2 | 1-(1-9)-0.1-(PRS)-1.0 | 102 | 118 |
| Ex. 6-1 | 1-(1-9)-0.1-(6-11)-1.0 | 37 | 116 |
| Comp. Ex. 6-3 | 1-(1-9)-0.25 | 52 | 100 |
| Comp. Ex. 6-4 | 1-(1-9)-0.25-(PRS)-1.0 | 123 | 113 |
| Ex. 6-2 | 1-(1-9)-0.25-(6-11)-0.5 | 54 | 110 |
| Ex. 6-3 | 1-(1-9)-0.25-(6-11)-1.0 | 57 | 116 |
| Ex. 6-4 | 1-(1-9)-0.25-(6-11)-1.5 | 59 | 119 |
| Ex. 6-5 | 1-(1-9)-0.25-(6-1)-1.0 | 50 | 113 |
| Ex. 6-6 | 1-(1-9)-0.25-(6-5)-1.0 | 53 | 114 |
| Ex. 6-7 | 1-(1-9)-0.25-(6-21)-1.0 | 52 | 116 |
| Ex. 6-8 | 1-(1-9)-0.25-(6-38)-1.0 | 48 | 110 |
| Comp. Ex. 6-5 | 1-(1-9)-0.5 | 60 | 100 |
| Comp. Ex. 6-6 | 1-(1-9)-0.5-(PRS)-1.0 | 136 | 107 |
| Ex. 6-9 | 1-(1-9)-0.5-(6-11)-1.0 | 65 | 108 |
| Comp. Ex. 7-1 | 1-(1-22)-0.1 | 40 | 100 |
| Comp. Ex. 7-2 | 1-(1-22)-0.1-(PRS)-1.0 | 106 | 128 |
| Ex. 7-1 | 1-(1-22)-0.1-(6-5)-1.0 | 43 | 129 |
| Comp. Ex. 7-3 | 1-(1-22)-0.25 | 43 | 100 |
| Comp. Ex. 7-4 | 1-(1-22)-0.25-(PRS)-1.0 | 121 | 120 |
| Ex. 7-2 | 1-(1-22)-0.25-(6-5)-0.5 | 46 | 118 |
| Ex. 7-3 | 1-(1-22)-0.25-(6-5)-1.0 | 50 | 123 |
| Ex. 7-4 | 1-(1-22)-0.25-(6-5)-1.5 | 60 | 125 |
| Ex. 7-5 | 1-(1-22)-0.25-(6-1)-1.0 | 41 | 118 |
| Ex. 7-6 | 1-(1-22)-0.25-(6-1 1)-1.0 | 44 | 122 |
| Ex. 7-7 | 1-(1-22)-0.25-(6-22)-1.0 | 40 | 123 |
| Ex. 7-8 | 1-(1-22)-0.25-(6-40)-1.0 | 44 | 124 |
| Comp. Ex. 7-5 | 1-(1-22)-0.5 | 50 | 100 |
| Comp. Ex. 7-6 | 1-(1-22)-0.5-(PRS)-1.0 | 130 | 115 |
| Ex. 7-9 | 1-(1-22)-0.5-(6-5)-1.0 | 55 | 115 |

**TABLE 26**

| | Nonaqueous Electrolyte Solution No. | APHA After 1 Month at 50°C | Recovery Capacity (Relative Value) After 2 Weeks at 70°C |
|---|---|---|---|
| Comp. Ex. 8-1 | 1-(1-1)-0.25 | 35 | 100 |
| Comp. Ex. 8-2 | 1-(1-1)-0.25-(MMDS)-1.0 | 110 | 120 |
| Ex. 8-1 | 1-(1-1)-0.25-(6-1)-1.0 | 30 | 117 |
| Ex. 8-2 | 1-(1-1)-0.25-(6-19)-1.0 | 29 | 116 |
| Comp. Ex. 9-1 | 1-(1-4)-0.25 | 38 | 100 |
| Comp. Ex. 9-2 | 1-(1-4)-0.25-(PRS)-1.0 | 106 | 113 |
| Ex. 9-1 | 1-(1-4)-0.25-(6-5)-1.0 | 43 | 116 |
| Ex. 9-2 | 1-(1-4)-0.2S-(6-21)-1.0 | 39 | 114 |
| Comp. Ex. 10-1 | 1-(1-12)-0.25 | 43 | 100 |
| Comp. Ex. 10-2 | 1-(1-12)-0.25-( MMDS)-1.0 | 110 | 120 |
| Ex. 10-1 | 1-(1-12)-0.25-(6-11)-1.0 | 44 | 123 |
| Ex. 10-2 | 1-(1-12)-0.25-(6-22)-1.0 | 40 | 119 |
| Comp. Ex. 11-1 | 1-(1-15)-0.25 | 45 | 100 |
| Comp. Ex. 11-2 | 1-(1-15)-0.25-(PRS)-1.0 | 113 | 105 |
| Ex. 11-1 | 1-(1-15)-0.25-(6-1)-1.0 | 44 | 104 |
| Ex. 11-2 | 1-(1-15)-0.25-(6-31)-1.0 | 46 | 107 |
| Comp. Ex. 12-1 | 1-(1-24)-0.25 | 42 | 100 |
| Comp. Ex. 12-2 | 1-(1-24)-0.25-(MMDS)-1.0 | 108 | 109 |
| Ex. 12-1 | 1-(1-24)-0.25-(6-5)-1.0 | 47 | 112 |
| Ex. 12-2 | 1-(1-24)-0.25-(6-38)-1.0 | 38 | 106 |
| Comp. Ex. 13-1 | 1-(1-28)-0.25 | 40 | 100 |
| Comp. Ex. 13-2 | 1-(1-28)-0.25-(PRS)-1.0 | 100 | 110 |
| Ex. 13-1 | 1-(1-28)-0.25-(6-1)-1.0 | 41 | 107 |
| Ex. 13-2 | 1-(1-28)-0.25-(6-31)-1.0 | 45 | 111 |

When 1.0 mass% of PRS was added to the silicon compound (1-2), a 10-23% improvement of the recovery capacity was observed; but the APHA of the electrolyte solution after the storage at 50°C increased sharply from 38-55 to 103-120 (see comparison of Comparative Examples 5-1 and 5-2, comparison of Comparative Examples 5-3 and 5-4 and comparison of Comparative Examples 5-5 and 5-6). An increase of the APHA means an increase of coloring in the solution. The reason for this is assumed to be decomposition or degradation of the components contained in the electrolyte solution. As the content of the silicon compound (1-2) was increased from 0.1 mass% to 0.25 mass% and then to 0.5 mass%, a slight increase of the APHA was observed (see comparison of Comparative Examples 5-1, 5-3 and 5-5). By contrast, there was seen a significant increase of the APHA by the addition of PRS. It is thus obvious that decomposition of PRS was more pronounced than decomposition of the silicon compound (1-2). When 1.0 mass% of the cyclic sulfur compound (6-1) was added in place of PRS, an improvement of the recovery capacity was observed with almost no increase of the APHA (see comparison of Comparative Example 5-1 and Example 5-1, comparison of Comparative Example 5-3 and Example 5-3 and comparison of Comparative Example 5-5 and Example 5-9). It is obvious from these results that the cyclic sulfur compound (6-1) remained undecomposed after storage at 50°C. Even when the cyclic sulfur compound (6-1) was changed to the cyclic sulfur compound (6-5), (6-11), (6-19) or (6-31), an improvement of the recovery capacity was observed with almost no increase of the APHA (see comparison of Comparative Example 5-3 and Examples 5-5, 5-6, 5-7 and 5-8).

Even in the case where the silicon compound (1-9), (1-22), (1-4), (1-15) or (1-28) was used, the APHA significantly increased by the addition of PRS; whereas the recovery capacity was improved with no substantial increase of the APHA by the addition of the cyclic sulfur compound (6-1), (6-5), (6-11), (6-21), (6-22), (6-31), (6-38) or (6-40) (see Examples 6-3, 6-5 to 6-8, 7-3, 7-5 to 7-8, 9-1 to 9-2, 11-1 to 11-2 and 13-1 to 13-2).

Due to the fact that MMDS is lower in stability than PRS, there was seen a greater increase of the APHA by the addition of 1 mass% of MMDS to the silicon compound (1-1), (1-12) or (1-24) than that by the addition of PRS (see comparison of Comparative Examples 8-1 and 8-2, comparison of Comparative Examples 10-1 and 10-2 and comparison of Comparative Examples 12-1 and 12-2). By the addition of the cyclic sulfur compound (6-1), (6-5), (6-11), (6-19), (6-22) or (6-38) in place of MMDS, however, the recovery capacity was improved with no substantial increase of the APHA (see Examples 8-1 to 8-2, 10-1 to 10-2 and 12-1 to 12-2).

The 50°C storage stability test results (APHA) of the electrolyte solutions in which any of LiSO₃F, LDFOB, LiPO₂F₂ and LDFBOP was contained in addition to the components (I), (II), (III) and (IV) and the recovery capacity measurement test results of the batteries with those electrolyte solutions are shown in TABLE 27. The recovery capacity of the respective batteries is expressed as a relative value, with the recovery capacity of the corresponding battery with the electrolyte solution in which the other component was not contained being defined as 100.

**TABLE 27**

| | Nonaqueous Electrolyte Solution No. | APHA After 1 Month at 50°C | Recovery Capacity (Relative Value) After 2 Weeks at 70°C |
|---|---|---|---|
| Ex. 5-3 | 1-(1-2)-0.25-(6-1)-1.0 | 46 | 100 |
| Ex. 5-10 | 1-(1-2)-0.25-(6-1)-1.0-LiSO₃F-1.0 | 49 | 107 |
| Ex. 5-11 | 1-(1-2)-0.25-(6-1)-1.0-LDFOB-1.0 | 45 | 104 |
| Ex. 5-12 | 1-(1-2)-0.25-(6-11)-1.0-LiPO₂F₂-1.0 | 48 | 103 |
| Ex. 5-13 | 1-(1-2)-0.25-(6-11)-1.0-LDFBOP -1.0 | 46 | 106 |
| Ex. 6-3 | 1-(1-9)-0.25-(6-11)-1.0 | 57 | 100 |
| Ex. 6-10 | 1-(1-9)-0.25-(6-11)-1.0-LiSO₃F-1.0 | 55 | 106 |
| Ex. 6-11 | 1-(1-9)-0.25-(6-11)-1.0-LDFOB-1.0 | 59 | 104 |
| Ex. 6-12 | 1-(1-9)-0.25-(6-21)-1.0-LiPO₂F₂-1.0 | 56 | 102 |
| Ex. 6-13 | 1-(1-9)-0.25-(6-21)-1.0-LDFBOP-1.0 | 53 | 105 |
| Ex. 7-3 | 1-(1-22)-0.25-(6-5)-1.0 | 50 | 100 |
| Ex. 7-10 | 1-(1-22)-0.25-(6-5)-1.0-LiSO₃F-1.0 | 53 | 110 |
| Ex. 7-11 | 1-(1-22)-0.25-(6-5)-1.0-LDFOB-1.0 | 50 | 106 |
| Ex. 7-12 | 1-(1-22)-0.25-(6-22)-1.0-LiPO₂F₂-1.0 | 43 | 104 |
| Ex. 7-13 | 1-(1-22)-0.25-(6-22)-1.0-LDFBOP-1.0 | 41 | 111 |
| Ex. 8-1 | 1-(1-1)-0.25-(6-1)-1.0 | 30 | 100 |
| Ex. 8-3 | 1-(1-1)-0.25-(6-1)-1.0-LiSO₃F-1.0 | 33 | 106 |
| Ex. 8-4 | 1-(1-1)-0.25-(6-1)-1.0-LDFOB-1.0 | 32 | 104 |
| Ex. 9-1 | 1-(1-4)-0.25-(6-5)-1.0 | 43 | 100 |
| Ex. 9-3 | 1-(1-4)-0.25-(6-5)-1.0-LiPO₂F₂-1.0 | 43 | 102 |
| Ex. 9-4 | 1-(1-4)-0.25-(6-5)-1.0-LDFBOP -1.0 | 42 | 107 |
| Ex. 10-1 | 1-(1-12)-0.25-(6-11)-1.0 | 44 | 100 |
| Ex. 10-3 | 1-(1-12)-0.25-(6-11)-1.0-LiSO₃F-1.0 | 46 | 110 |
| Ex. 10-4 | 1-(1-12)-0.25-(6-11)-1.0-LDFOB-1.0 | 45 | 107 |
| Ex. 11-1 | 1-(1-15)-0.25-(6-1)-1.0 | 44 | 100 |
| Ex. 11-3 | 1-(1-15)-0.25-(6-1)-1.0- LiPO₂F₂-1.0 | 46 | 102 |
| Ex. 11-4 | 1-(1-15)-0.25-(6-1)-1.0- LDFBOP -1.0 | 43 | 104 |
| Ex. 12-1 | 1-(1-24)-0.25-(6-5)-1.0 | 47 | 100 |
| Ex. 12-3 | 1-(1-24)-0.25-(6-5)-1.0-LiSO₃F-1.0 | 48 | 104 |
| Ex. 12-4 | 1-(1-24)-0.25-(6-5)-1.0-LDFOB-1.0 | 46 | 103 |
| Ex. 13-1 | 1-(1-28)-0.25-(6-1)-1.0 | 42 | 100 |
| Ex. 13-3 | 1-(1-28)-0.25-(6-1)-1.0-LiPO₂F₂-1.0 | 43 | 102 |
| Ex. 13-4 | 1-(1-28)-0.25-(6-1)-1.0-LDFBOP-1.0 | 43 | 105 |

As is apparent from the above results, a further improvement of the recovery capacity was obtained without a large influence on the APHA even when any of LiSO₃F, LDFOB, LiPO₂F₂ and LDFBOP was contained in addition to the combination of the silicon compound (1-1), (1-2), (1-4), (1-9), (1-12), (1-15), (1-22), (1-24) or (1-28) and the cyclic sulfur compound (6-1), (6-5), (6-11) and (6-21).

## Claims

1. An electrolyte solution for a nonaqueous electrolyte battery,
the nonaqueous electrolyte battery comprising a positive electrode that includes one or more kinds of oxides each containing nickel as a positive electrode active material, wherein the amount of the nickel contained relative to a metal content of the positive electrode active material is 30 to 100 mass%,
the electrolyte solution comprising the following components:
(I) a nonaqueous organic solvent;
(II) an ionic salt as a solute;
(III) at least one kind selected from the group consisting of compounds represented by the general formula (1); and
(IV) a lithium fluorosulfonate,
wherein the concentration of the component (III) is 0.01 to 2.00 mass% with respect to 100 mass% of the total mass of the components (I) to (IV); and
wherein the concentration of the component (IV) is 0.01 to 5.00 mass% with respect to 100 mass% of the total mass of the components (I) to (IV)
Si(R¹)ₐ(R²)₄₋ₐ (1)
where R¹ are each independently a group having a carbon-carbon unsaturated bond; and R² are each independently a group selected from a fluorine atom, an alkyl group of 1 to 10 carbon atoms, an alkoxy group of 1 to 10 carbon atoms, an allyl group of 3 to 10 carbon atoms, an alkynyl group of 2 to 10 carbon atoms, an aryl group of 6 to 15 carbon atoms, an allyloxy group of 3 to 10 carbon atoms, an alkynyloxy group of 2 to 10 carbon atoms and an aryloxy group of 6 to 15 carbon atoms, each of which may have a fluorine atom and/or an oxygen atom; and a is a value of 2 to 4.

2. The electrolyte solution for the nonaqueous electrolyte battery according to claim 1, wherein R¹ in the general formula (1) is ethenyl.

3. The electrolyte solution for the nonaqueous electrolyte battery according to claim 1 or 2, wherein, as R² in the general formula (1),
the alkyl group is a group selected from methyl, ethyl, propyl, isopropyl, butyl, isobutyl, tert-butyl, pentyl, isopentyl, sec-pentyl, 3-pentyl and tert-pentyl,
the alkoxy group is a group selected from methoxy, ethoxy, butoxy, tert-butoxy, propoxy, isopropoxy, 2,2,2-trifluoroethoxy, 2,2,3,3-tetrafluoropropoxy, 1,1,1-trifluoroisopropoxy and 1,1,1,3,3,3-hexafluoroisopropoxy,
the allyl group is 2-propenyl,
the alkynyl group is ethynyl,
the aryl group is a group selected from phenyl, methylphenyl, tert-butylphenyl and tert-amylphenyl (in each of which a hydrogen atom of the aromatic ring may be substituted with fluorine),
the allyloxy group is 2-propenyloxy,
the alkynyloxy group is propargyloxy, and
the aryloxy group is a group selected from phenoxy, methylphenoxy, tert-butylphenoxy and tert-amylphenoxy (in each of which a hydrogen atom of the aromatic ring may be substituted with fluorine).

4. The electrolyte solution for the nonaqueous electrolyte battery according to any one of claims 1 to 3, wherein *a* in the general formula (1) is 3 or 4.

5. The electrolyte solution for the nonaqueous electrolyte battery according to any one of claims 1 to 4, wherein the component (III) is at least one kind selected from the group consisting of the following compounds (1-1) to (1-28)

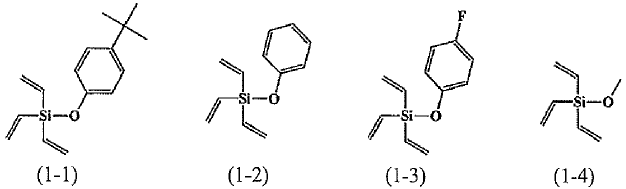

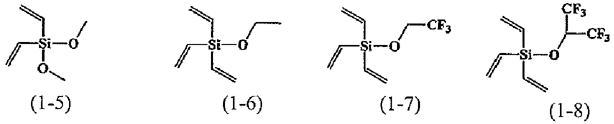

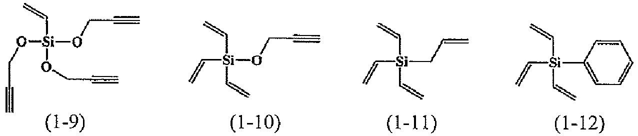

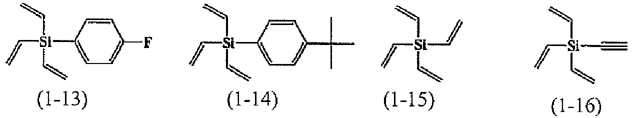

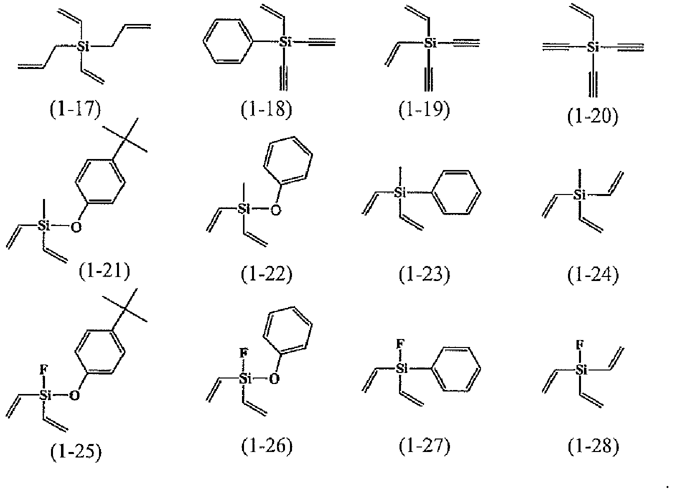

6. The electrolyte solution for the nonaqueous electrolyte battery according to claim 5, wherein the component (III) is at least one kind selected from the group consisting of the compounds (1-1), (1-2), (1-3), (1-4), (1-6), (1-7), (1-8), (1-10), (1-12), (1-15), (1-22), (1-23), (1-24), (1-25), (1-26), (1-27) and (1-28).

7. The electrolyte solution for the nonaqueous electrolyte battery according to claim 5, wherein the component (III) is at least one kind selected from the group consisting of the compounds (1-1), (1-2), (1-4), (1-10), (1-12), (1-15), (1-22), (1-24), (1-25) and (1-28).

8. A nonaqueous electrolyte battery, comprising:
a positive electrode including one more kinds of oxides containing at least nickel as a positive electrode active material, wherein the amount of the nickel contained relative to a metal content of the positive electrode active material is 30 to 100 mass%;
a negative electrode; and
the electrolyte solution for the nonaqueous electrolyte battery according to any one of claims 1 to 7.

## Patentansprüche

1. Elektrolytlösung für eine Batterie mit nicht-wässrigem Elektrolyt,
wobei die Batterie mit nicht-wässrigem Elektrolyt eine positive Elektrode umfasst, die eine oder mehrere Arten von Oxiden umfasst, welche jeweils Nickel als ein Positivelektrodenaktivmaterial enthalten, wobei die Menge des enthaltenen Nickels relativ zu einem Metallgehalt des Positivelektrodenaktivmaterials 30 bis 100 Massen-% beträgt,
wobei die Elektrolytlösung die folgenden Bestandteile umfasst:
(I) ein nicht-wässriges, organisches Lösungsmittel;
(II) ein ionisches Salz als einen gelösten Stoff;
(III) mindestens eine Art, welche ausgewählt ist aus der Gruppe bestehend aus durch die allgemeine Formel (1) dargestellten Verbindungen; und
(IV) ein Lithiumfluorsulfonat,
wobei die Konzentration des Bestandteils (III) 0,01 bis 2,00 Massen-% beträgt, bezogen auf 100 Massen-% der gesamten Masse der Bestandteile (I) bis (IV); und
wobei die Konzentration des Bestandteils (IV) is 0,01 bis 5,00 Massen-% beträgt, bezogen auf 100 Massen-% der gesamten Masse der Bestandteile (I) bis (IV),
Si(R¹)ₐ(R²)₄₋ₐ (1)
worin R¹ jeweils unabhängig eine Gruppe sind, die eine ungesättigte Kohlenstoff-Kohlenstoff-Bindung aufweist; und R² jeweils unabhängig eine Gruppe sind, welche ausgewählt ist aus einem Fluoratom, einer Alkylgruppe von 1 bis 10 Kohlenstoffatomen, einer Alkoxygruppe von 1 bis 10 Kohlenstoffatomen, einer Allylgruppe von 3 bis 10 Kohlenstoffatomen, einer Alkinylgruppe von 2 bis 10 Kohlenstoffatomen, einer Arylgruppe von 6 bis 15 Kohlenstoffatomen, einer Allyloxygruppe von 3 bis 10 Kohlenstoffatomen, einer Alkinyloxygruppe von 2 bis 10 Kohlenstoffatomen und einer Aryloxygruppe von 6 bis 15 Kohlenstoffatomen, wovon jede ein Fluoratom und/oder ein Sauerstoffatom aufweisen kann; und a ein Wert von 2 bis 4 ist.

2. Elektrolytlösung für die Batterie mit nicht-wässrigem Elektrolyt nach Anspruch 1, wobei R¹ in der allgemeinen Formel (1) Ethenyl ist.

3. Elektrolytlösung für die Batterie mit nicht-wässrigem Elektrolyt nach Anspruch 1 oder 2, wobei, als R² in der allgemeinen Formel (1),
die Alkylgruppe eine Gruppe ist, welche ausgewählt ist aus Methyl, Ethyl, Propyl, Isopropyl, Butyl, Isobutyl, tert-Butyl, Pentyl, Isopentyl, sec-Pentyl, 3-Pentyl und tert-Pentyl,
die Alkoxygruppe eine Gruppe ist, welche ausgewählt ist aus Methoxy, Ethoxy, Butoxy, tert-Butoxy, Propoxy, Isopropoxy, 2,2,2-Trifluorethoxy, 2,2,3,3-Tetrafluoropropoxy, 1,1,1-Trifluorisopropoxy und 1,1,1,3,3,3-Hexafluorisopropoxy,
die Allylgruppe 2-Propenyl ist,
die Alkinylgruppe Ethinyl ist,
die Arylgruppe eine Gruppe ist, welche ausgewählt ist aus Phenyl, Methylphenyl, tert-Butylphenyl und tert-Amylphenyl (wovon in jeder ein Wasserstoffatom des aromatischen Ringes mit Fluor substituiert sein kann),
die Allyloxygruppe 2-Propenyloxy ist,
die Alkinyloxygruppe Propargyloxy ist, und
die Aryloxygruppe eine Gruppe ist, welche ausgewählt ist aus Phenoxy, Methylphenoxy, tert-Butylphenoxy und tert-Amylphenoxy (wovon in jeder ein Wasserstoffatom des aromatischen Ringes mit Fluor substituiert sein kann).

4. Elektrolytlösung für die Batterie mit nicht-wässrigem Elektrolyt nach einem der Ansprüche 1 bis 3, wobei a in der allgemeinen Formel (1) 3 oder 4 ist.

5. Elektrolytlösung für die Batterie mit nicht-wässrigem Elektrolyt nach einem der Ansprüche 1 bis 4, wobei der Bestandteil (III) mindestens eine Art ist, welche ausgewählt ist aus der Gruppe bestehend aus den folgenden Verbindungen (1-1) bis (1-28)

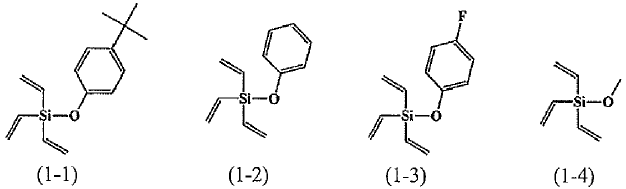

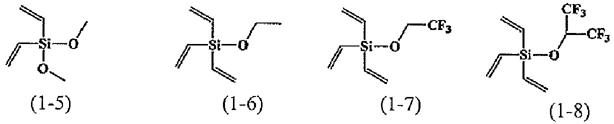

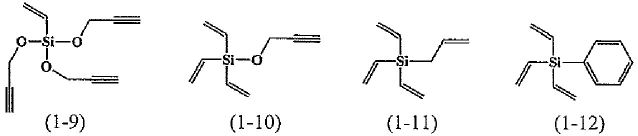

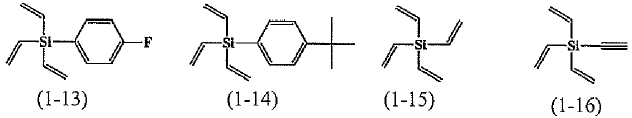

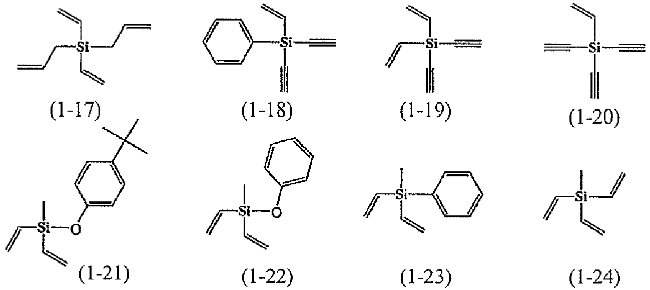

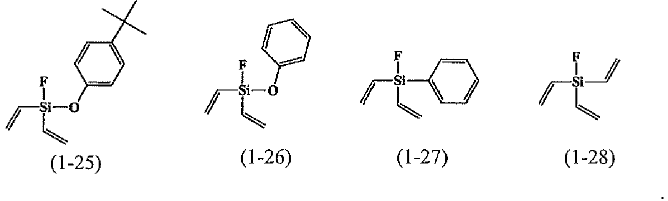

6. Elektrolytlösung für die Batterie mit nicht-wässrigem Elektrolyt nach Anspruch 5, wobei der Bestandteil (III) mindestens eine Art ist, welche ausgewählt ist aus der Gruppe bestehend aus den Verbindungen (1-1), (1-2), (1-3), (1-4), (1-6), (1-7), (1-8), (1-10), (1-12), (1-15), (1-22), (1-23), (1-24), (1-25), (1-26), (1-27) und (1-28).

7. Elektrolytlösung für die Batterie mit nicht-wässrigem Elektrolyt nach Anspruch 5, wobei der Bestandteil (III) mindestens eine Art ist, welche ausgewählt ist aus der Gruppe bestehend aus den Verbindungen (1-1), (1-2), (1-4), (1-10), (1-12), (1-15), (1-22), (1-24), (1-25) und (1-28).

8. Batterie mit nicht-wässrigem Elektrolyt, umfassend:
eine positive Elektrode, die eine oder mehrere Arten von Oxiden umfasst, welche zumindest Nickel als ein Positivelektrodenaktivmaterial enthalten, wobei die Menge des enthaltenen Nickels relativ zu einem Metallgehalt des Positivelektrodenaktivmaterials 30 bis 100 Massen-% beträgt;
eine negative Elektrode; und
die Elektrolytlösung für die Batterie mit nicht-wässrigem Elektrolyt nach einem der Ansprüche 1 bis 7.

## Revendications

1. Solution d'électrolyte pour batterie à électrolyte non aqueux,
la batterie à électrolyte non aqueux comprenant une électrode positive qui comprend un ou plusieurs types d'oxydes chacun contenant du nickel comme matériau actif d'électrode positive, la quantité du nickel contenue par rapport à une teneur en métal du matériau actif d'électrode positive étant de 30 à 100 % en masse,
la solution d'électrolyte comprenant les composants suivants :
(I) un solvant organique non aqueux ;
(II) un sel ionique comme soluté ;
(III) au moins un type choisi dans le groupe constitué par les composés représentés par la formule générale (1) ; et
(IV) un fluorosulfonate de lithium,
dans laquelle la concentration du composant (III) est de 0,01 à 2,00 % en masse par rapport à 100 % en masse de la masse totale des composants (I) à (IV) ; et
dans laquelle la concentration du composant (IV) étant de 0,01à 5,00 % en masse par rapport à 100 % en masse de la masse totale des composants (I) à (IV)
Si(R¹)ₐ(R²)₄₋ₐ (1)
où R¹ sont chacun indépendamment un groupe ayant une liaison insaturée carbone-carbone ; et
R² sont chacun indépendamment un groupe choisi parmi un atome de fluor, un groupe alkyle ^{de} 1 à 10 atomes de carbone, un groupe alcoxy de 1 à 10 atomes de carbone, un groupe allyle de 3 à 10 atomes de carbone, un groupe alcynyle de 2 à 10 atomes de carbone et un groupe aryle de 6 à 15 atomes de carbone, un groupe allyloxy de 3 à 10 atomes de carbone, un groupe alcynyloxy de 2 à 10 atomes de carbone et un groupe aryloxy de 6 à 15 atomes de carbone, dont chacun peut avoir un atome de fluor et/ou un atome d'oxygène ; et a est une valeur de 2 à 4.

2. Solution d'électrolyte pour batterie à électrolyte non aqueux selon la revendication 1, dans laquelle R¹ dans la formule générale (1) est un groupe éthényle.

3. Solution d'électrolyte pour batterie à électrode non aqueux selon la revendication 1 ou 2, dans laquelle, comme R² dans la formule générale (1),
le groupe alkyle est un groupe choisi parmi les groupes méthyle, éthyle, propyle, isopropyle, butyle, isobutyle, tert-butyle, pentyle, isopentyle, sec-pentyle, 3-pentyle et tert-pentyle,
le groupe alcoxy est un groupe choisi parmi les groupes méthoxy, éthoxy, butoxy, tert-butoxy, propoxy, isopropoxy, 2,2,2-trifluoroéthoxy, 2,2,3,3-tétra-fluoropropoxy, 1,1,1-trifluoroispropoxy et 1,1,1,3,3,3-hexafluoroisopropoxy. le groupe allyle est un groupe 2-propényle ;
le groupe alcynyle est un groupe éthynyle,
le groupe aryle est un groupe choisi parmi les groupes phényle, méthylphényle, tert-butylphényle et tert-amylphényle (dont dans chacun un atome d'hydrogène du cycle aromatique peut être substitué avec un atome de fluor),
le groupe allyloxy est un groupe 2-propényloxy,
le groupe alcynyloxy est un groupe propargyloxy, et
le groupe aryloxy est un groupe choisi parmi les groupes phénoxy, méthyl-phényloxy, tert-butylphénoxy et tert-amylphénoxy (dont dans chacun un atome d'hydrogène du cycle aromatique peut être substitué avec un atome de fluor).

4. Solution d'électrolyte pour batterie à électrolyte non aqueux selon l'une quelconque des revendications 1 à 3, dans laquelle a dans la formule générale (1) vaut 3 ou 4.

5. Solution d'électrolyte pour batterie à électrolyte non aqueux selon l'une quelconque des revendications 1 à 4, dans laquelle le composant (III) est au moins un type choisi dans le groupe constitué des composés suivants (I-1) à (I-28)

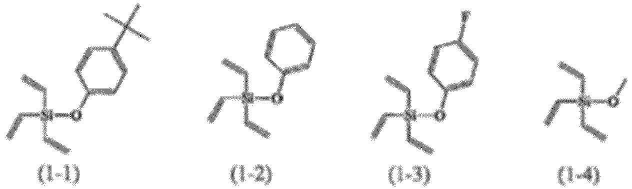

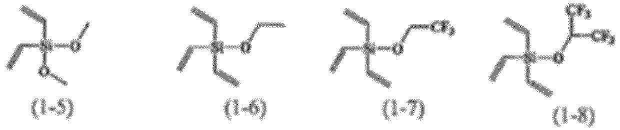

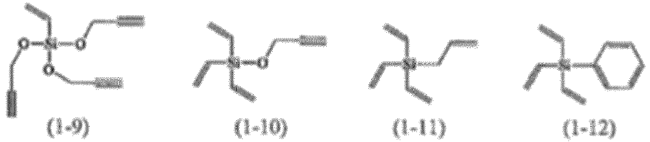

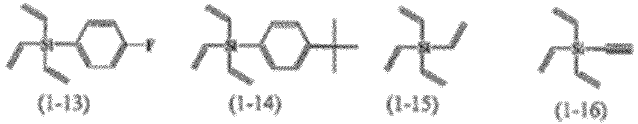

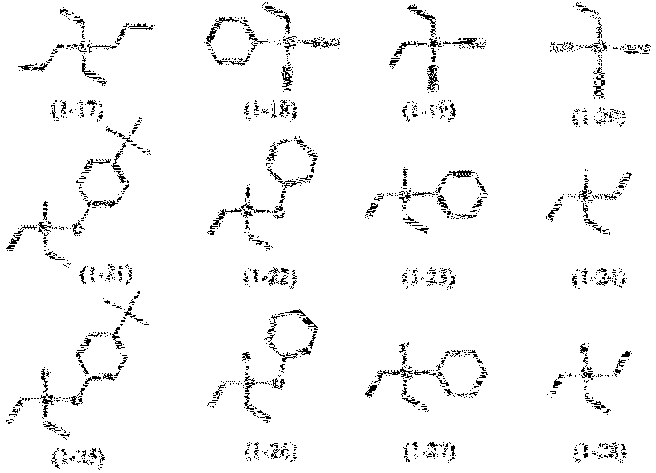

6. Solution d'électrolyte pour batterie à électrolyte non aqueux selon la revendication 5, dans laquelle le composant (III) est au moins un type choisi dans le groupe constitué par les composés (I-1), (I-2), (I-3), (I-4), (I-6), (I-7), (I-8), (I-10), (I-12), I-15), (I-22), (I-23), (I-24), (I-25), (I-26), (I-27) et (I-28).

7. Solution d'électrolyte pour batterie à électrolyte non aqueux selon la revendication 5, dans laquelle le composant (III) est au moins un type choisi dans le groupe constitué par les composés (1-1), (I-2), (I-4), (I-10), (I-12), (I-15), (I-22), (I-24), (I-25) et (I-28).

8. Batterie à électrolyte non aqueux, comprenant :
une électrode positive comprenant un ou plusieurs types d'oxydes contenant au moins du nickel comme matériau actif d'électrode positive, la quantité de nickel contenue par rapport à une teneur en métal du matériau actif d'électrode positive étant de 30 à 100 % en masse ;
une électrode négative ; et
la solution d'électrolyte pour batterie à électrolyte non aqueux selon l'une quelconque des revendications 1 à 7.
